(19) Europäisches Patentamt / European Patent Office / Office européen des brevets

(11) **EP 1 741 798 A1**

(12) **EUROPEAN PATENT APPLICATION**
published in accordance with Art. 158(3) EPC

(43) Date of publication:
**10.01.2007 Bulletin 2007/02**

(51) Int Cl.:
*C22C 38/00* [(2006.01)]  *C21D 9/30* [(2006.01)]
*C22C 38/06* [(2006.01)]  *C22C 38/60* [(2006.01)]
*F16C 3/02* [(2006.01)]  *F16C 3/06* [(2006.01)]
*F16D 3/20* [(2006.01)]  *F16D 3/22* [(2006.01)]
*F16H 55/06* [(2006.01)]

(21) Application number: **05704420.8**

(22) Date of filing: **01.02.2005**

(86) International application number:
**PCT/JP2005/001738**

(87) International publication number:
**WO 2005/106059 (10.11.2005 Gazette 2005/45)**

(84) Designated Contracting States:
**DE FR GB**

(30) Priority: **28.04.2004 JP 2004134596**
            **16.07.2004 JP 2004210497**

(71) Applicant: **JFE Steel Corporation**
**Tokyo, 100-0011 (JP)**

(72) Inventors:
• **KUROSAWA, Nobutaka,**
  **DPI,**
  **JFE Steel Corporation**
  **Tokyo 1000011 (JP)**
• **OMORI, Yasuhiro,**
  **DPI,**
  **JFE Steel Corporation**
  **Tokyo 1000011 (JP)**
• **HAYASHI, Tohru,**
  **DPI,**
  **JFE Steel Corporation**
  **Tokyo 1000011 (JP)**
• **MATSUZAKI, Akihiro,**
  **DPI,**
  **JFE Steel Corporation**
  **Tokyo 1000011 (JP)**
• **TOYOOKA, Takaaki,**
  **DPI,**
  **JFE Steel Corporation**
  **Tokyo 1000011 (JP)**

(74) Representative: **HOFFMANN EITLE**
**Patent- und Rechtsanwälte**
**Arabellastrasse 4**
**81925 München (DE)**

(54) **PARTS FOR MACHINE CONSTRUCTION AND METHOD FOR PRODUCTION THEREOF**

(57)    A component for machine structural use with further improved fatigue strength is proposed. The specific means for achieving this object is as follows. The component for machine structural use is subjected to hardening in at least part thereof, and the hardened structure is controlled such that the average grain diameter of former austenitic grains is 12 μm or less and the maximum grain diameter does not exceed four times the average grain diameter.

FIG. 4(b)

**Description**

Technical Field

The present invention relates to components for machine structural use, components having hardened layers formed by high-frequency hardening in at least part of the components. Examples of the components for machine structural use described herein include drive shafts, input shafts, output shafts, crankshafts, inner and outer races of constant velocity joints, hubs, and gears for automotive vehicles.

Background Art

Components for machine structural use, e.g., drive shafts and constant velocity joints for automotive vehicles, have been manufactured by the following method: A hot-rolled steel bar is processed into a predetermined shape by hot-forging, cutting, cold forging, or the like, followed by high-frequency hardening and tempering. In general, by this method, the fatigue strengths important for the components for machine structural use, e.g., torsional fatigue strength, bending fatigue strength, rolling fatigue strength, and sliding-rolling contact fatigue strength are attained.
Meanwhile, the demand for light-weight automobile components is on an increase in recent years because of the environmental concerns, and thus a further improvement on the fatigue strengths of automobile components is required.
There have been many proposed methods for improving the fatigue strength such as one described above.
For example, one possible approach for increasing the torsional fatigue strength is to increase the depth of hardening by the high-frequency hardening. Although the depth of hardening may be increased, the fatigue strength is saturated at a certain depth.
It is also effective to increase the grain boundary strength to increase the torsional fatigue strength. From this standpoint, a technology has been suggested which reduces the former austenitic grain diameter by dispersion of TiC. For example, the technology set forth in Patent Document 1 reduces the former austenitic grain diameter by dispersing a large amount of fine TiC during heating for high-frequency hardening. However, this technology requires solid solution treatment of TiC prior to the hardening and includes a hot-rolling step of heating the workpiece to a temperature of not less than 1,100°C. Thus, the heating temperature needs to be high during the hot rolling, and the production efficiency is disadvantageously low.
Moreover, the technology disclosed in Patent Document 1 above cannot sufficiently comply with the recent requirements on the fatigue strengths.
Patent Document 2 sets forth a shaft component for machine structural use, in which the torsional fatigue strength is increased by limiting the ratio (CD/R) of the depth CD of the hardened layer to the radius R of the shaft component subjected to the high-frequency hardening to 0.3 to 0.7 and then by adjusting the value A according to the amount of carbon, the value A being defined by the austenitic grain diameter yf within a depth of 1 mm from the surface after the high-frequency hardening, the average Vickers hardness Hf within (CD/R) = 0.1 before the high-frequency hardening, and the average Vickers hardness Hc of the central portion of the shaft after the high-frequency hardening.
However, even when the CD/R is controlled, there is a limit to the improvement of the fatigue properties. This technology also fails to sufficiently comply with the recent requirement on the torsional fatigue strength.

Patent Document 1: Japanese Unexamined Patent Application Publication No. 2000-154819 (Claims)
Patent Document 2: Japanese Unexamined Patent Application Publication No. 8-53714 (Claims)

Disclosure of Invention

The present invention has been made based on the above-described situations and aims to provide a component for machine structural use with a higher fatigue strength and an advantageous method for manufacturing the component.
The inventors have vigorously pursued studies particularly on high-frequency hardened structures to effectively improve the above-described fatigue properties.
The inventors have focused attention on the grain diameter distribution of the former austenitic grains of a high-frequency hardened structure and found that the fatigue properties, such as torsional fatigue strength, bending fatigue strength, and rolling fatigue strength, can be improved by reducing the average grain diameter and the maximum grain diameter of the former austenitic grains.
The structure of the present invention can be summarized as follows:

1. A component for machine structural use, including a steel material at least part of which is subjected to hardening, wherein the hardened structure has an average diameter of former austenitic grains of 12 $\mu$m or less and a maximum grain diameter not exceeding four times the average grain diameter.

2. The component for machine structural use according to item 1, including a composition containing, in terms of percent by mass:

C: 0.3% to 1.5%
Si: 0.05% to 3.0%
Mn: 0.2% to 2.0%

and satisfying formula (1):

$$C^{1/2}(1 + 0.7Si)(1 + 3Mn) > 2.0 \qquad (1)$$

wherein the balance is Fe and inevitable impurities.

3. The component for machine structural use according to item 2, the composition further containing, in terms of percent by mass:

Al: 0.25% or less.

4. The component for machine structural use according to item 2 or 3, the composition further containing, in terms of percent by mass, at least one selected from among:

Cr: 0.03% to 2.5%
Mo: 0.05% to 1.0%
Cu: 0.03% to 1.0%
Ni: 0.05% to 2.5%
Co: 0.01% to 1.0%
V: 0.01% to 0.5%
W: 0.005% to 1.0%

and satisfying formula (2):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 0.5W) > 2.0 \qquad (2)$$

instead of formula (1).

5. The component for machine structural use according to item 2, 3, or 4, the composition containing, in terms of percent by mass, at least one selected from among:

Ti: 0.005% to 0.1%
Nb: 0.005% to 0.1%
Zr: 0.005% to 0.1%
B: 0.0003% to 0.01%
Ta: 0.02% to 0.5%
Hf: 0.02% to 0.5%
Sb: 0.005% to 0.015%

and satisfying formula (3):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 1000B)(1 + 0.5W) > 2.0 \qquad (3)$$

instead of formula (1) or (2).

6. The component for machine structural use according to item 2, 3, 4, or 5, the composition further containing, in terms of percent by mass, at least one selected from among:

S: 0.1% or less
Pb: 0.01% to 0.1%
Bi: 0.01% to 0.1%
Se: 0.003% to 0.1%
Te: 0.003% to 0.1%
Ca: 0.0001% to 0.01%
Mg: 0.0001% to 0.01%
REM: 0.0001% to 0.1%.

7. A method for making a component for machine structural use, including subjecting at least part of a steel material to high-frequency heating at least once, the steel material containing one or both of a fine bainite structure and a fine martensite structure in a total of 10 percent by volume, wherein the high-frequency heating is conducted at a heating rate of at least 400 °C/s and an ultimate temperature of 1,000°C or less.

8. The method for making the component for machine structural use according to item 7, wherein the steel material is worked through: a hot-working step in which a total processing ratio at 800°C to 1,000°C is 80% or more; a cooling step subsequent to the hot-working step, in which the cooling rate is 0.2 °C/s or more in the temperature range of 700°C to 500°C; and a secondary working step of either effecting 20% or more of working in a temperature range of 700°C to less than 800°C before the cooling step or effecting 20% or more of working in a temperature range of up to the $A_1$ transformation temperature subsequent to the cooling step.

9. The method for making the component for machine structural use according to item 7 or 8, wherein a retention time at 800°C or more in the high-frequency heating is 5 seconds or less at a time.

10. The method for making the component for machine structural use according to any one of items 7 to 9, the steel material including, in terms of percent by mass,

C: 0.3% to 1.5%
Si: 0.05% to 3.0%
Mn: 0.2% to 2.0%

and satisfying formula (1):

$$C^{1/2}(1 + 0.7Si)(1 + 3Mn) > 2.0 \qquad (1)$$

wherein the balance is Fe and inevitable impurities.

11. The method for making the component for machine structural use according to item 10, the steel material further including:

Al: 0.25% or less.

12. The method for making the component for machine structural use according to item 10 or 11, the steel material further including, in terms of percent by mass, at least one selected from among:

Cr: 0.03% to 2.5%
Mo: 0.05% to 1.0%
Cu: 0.03% to 1.0%
Ni: 0.05% to 2.5%
Co: 0.01% to 1.0%
V: 0.01% to 0.5%
W: 0.005% to 1.0%

and satisfying formula (2):

$$C^{1/2}(1 + 0.7Si)(1 + 3Mn)(1 + 2.1Cr)(1 + 3.0 \text{ Mo})(1 + 0.4 \text{ Cu})$$

$$(1 + 0.3Ni)(1 + 5.0V)(1 + 0.5W) > 2.0 \qquad (2)$$

instead of formula (1).

13. The method for making the component for machine structural use according to item 10, 11, or 12, the steel material further including, in terms of percent by mass, at least one selected from among:

Ti: 0.005% to 0.1%
Nb: 0.005% to 0.1%
Zr: 0.005% to 0.1%
B: 0.0003% to 0.01%
Ta: 0.02% to 0.5%
Hf: 0.02% to 0.5%
Sb: 0.005% to 0.015%

and satisfying formula (3):

$$C^{1/2}(1 + 0.7Si)(1 + 3Mn)(1 + 2.1Cr)(1 + 3.0 \text{ Mo})(1 + 0.4 \text{ Cu})$$

$$(1 + 0.3Ni)(1 + 5.0V)(1 + 1000B)(1 + 0.5W) > 2.0 \qquad (3)$$

instead of formula (1) or (2).

14. The method for making the component for machine structural use according to item 10, 11, 12, or 13, the steel material further including, in terms of percent by mass, at least one selected from among:

S: 0.1% or less
Pb: 0.01% to 0.1%
Bi: 0.01% to 0.1%
Se: 0.003% to 0.1%
Te: 0.003% to 0.1%
Ca: 0.0001% to 0.01%
Mg: 0.0001% to 0.01%
REM: 0.0001% to 0.1%.

Brief Description of the Drawings

Fig. 1 is a front view of a representative example of a shaft.
Fig. 2 shows schemes of fatigue test and includes Fig. 2(a) showing a scheme of shaft torsional fatigue test and Fig. 2(b) showing a scheme of rolling fatigue test.
Fig. 3 is an optical microscope image of a hardened structure.
Fig. 4(a) and Fig. 4(b) are each a graph showing the relationship between the average former austenitic grain diameter and the torsional fatigue strength.
Fig. 5(a) and Fig. 5(b) are each a graph showing the effect of the former austenitic grain diameter and the maximum former austenitic grain diameter/average former austenitic grain diameter of the hardened layer on the torsional fatigue strength.
Fig. 6(a) and Fig. 6(b) are each a graph showing the effect of the processing ratio at temperatures lower than 800°C and the conditions of the high-frequency hardening on the torsional fatigue strength.
Fig. 7(a) and Fig. 7(b) are each a graph showing the effect of the former austenitic grain diameter and the maximum former austenitic grain diameter/average former austenitic grain diameter of the hardened layer on the rolling fatigue strength.
Fig. 8 is a schematic diagram of a crankshaft.

Fig. 9 is a diagram showing the position of the crankshaft subjected to the high-frequency hardening.
Fig. 10 is a diagram showing the scheme of the endurance test.
Fig. 11 is a partial cross-sectional view of a constant velocity joint.
Fig. 12 is a cross-sectional view of a hardened structure in a constant velocity joint outer race.
Fig. 13 is another cross-sectional view of a hardened structure in a constant velocity joint outer race.
Fig. 14 is a partial cross-sectional view of a constant velocity joint.
Fig. 15 is a cross-sectional view of a hardened structure in a constant velocity joint inner race.
Fig. 16 is another cross-sectional view of a hardened structure in a constant velocity joint inner race.
Fig. 17 is a diagram showing a hub and a hub bearing unit.
Fig. 18 is another diagram showing a hub and a hub bearing unit.
Fig. 19 is a diagram showing the scheme of sliding rolling contact fatigue test.
Fig. 20 is a perspective view of a gear.
Fig. 21 is a cross-sectional view showing a hardened surface layer of tooth and bottoms of the gear.

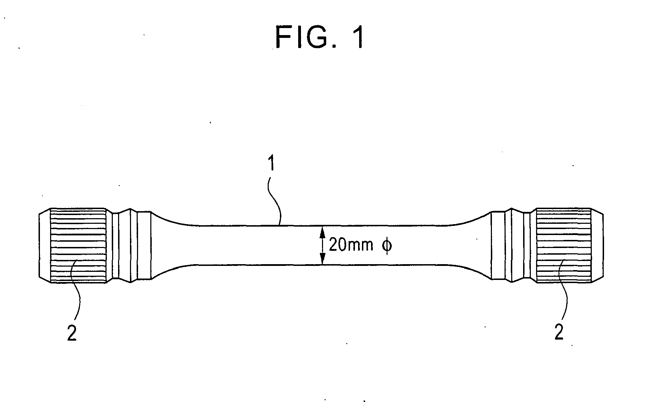

Denotations of reference numerals in Figs. 1 to 21 are as follows:

1:        shaft
2:        spline
3:        chuck
4:        crankshaft
5:        journal
6:        crank pin
7:        crank web
8:        counter weight
9:        hardened structure layer
10:       drive shaft
11:       hub
12:       constant velocity joint
13:       outer race
13a:      mouse
13b:      stem
14:       inner race
15:       ball
16:       hardened structure layer
17:       hub
18:       shaft of hub
19:       spacer
20:       outer race of hub
21:       ball
22:       contact rolling surface
23:       fitting portion
24:       shaft of constant velocity joint
25:       gear
26:       teeth
27:       bottom
28:       hardened structure layer
29:       shaft hole

Best Mode for Carrying Out the Invention

The present invention will now be described in specific details.
A component for machine structural use according to the present invention may take various shapes and structures, such as a drive shaft, an input shaft, an output shaft, a crankshaft, an inner or outer race of a constant velocity joint, a hub, and a gear for automobiles. In any case, it is essential that the component have a hardened layer over the entirety or part of the portion that particularly requires a fatigue strength, that the average grain diameter of the former austenitic grains be 12 $\mu$m or less, and that the maximum grain diameter does not exceed four times the average grain diameter.
The research results that led to this knowledge will now be explained.

A steel material (150 kg) having a composition indicated as steel **a** or steel **b** below was melted in a vacuum melting furnace and hot-forged into a 150 mm square bar, from which dummy billets were made. Then, rolled steel bar materials were manufactured under various hot-working conditions.

[Steel **a**]: C: 0.48 mass%, Si: 0.55 mass%, Mn: 0.78 mass%, P: 0.011 mass%, S: 0.019 mass%, Al: 0.024 mass%, N: 0.0043 mass%, balance: Fe and inevitable impurities
[Steel b]: C: 0.48 mass%, Si: 0.51 mass%, Mn: 0.79 mass%, P: 0.011 mass%, S: 0.021 mass%, Al: 0.024 mass%, N: 0.0039 mass%, Mo: 0.45 mass%, Ti: 0.021 mass%, B: 0.0024 mass%, balance: Fe and inevitable impurities

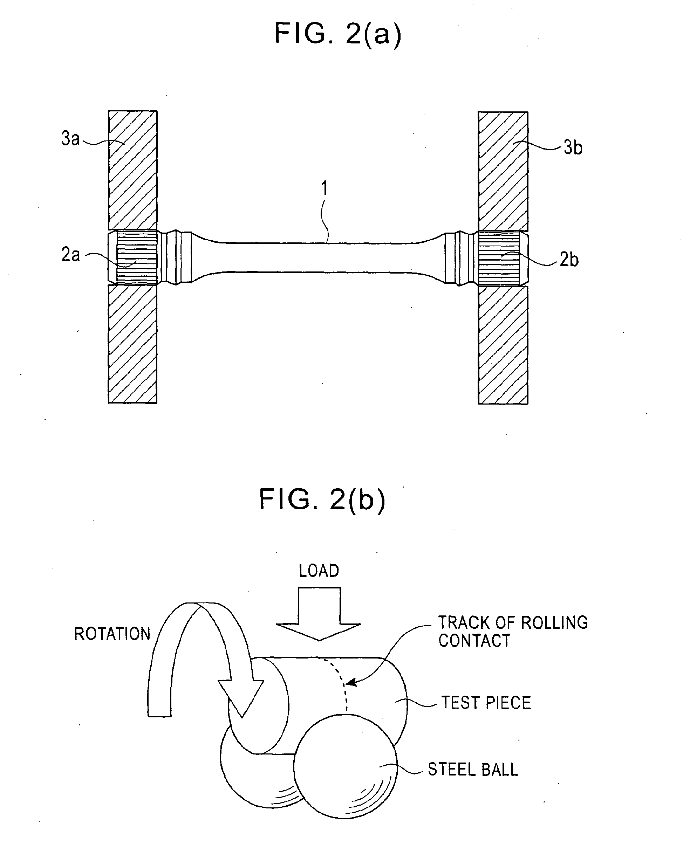

Next, the steel bar was cut to a predetermined length and subjected to surface cutting and partly to cold-drawing to adjust the diameter. At the same time, the steel bar was rolled to form splines. A shaft 1 with splines 2 having a dimension and the shape shown in Fig. 1 was manufactured as a result.
The shaft was heated and hardened under various conditions in a high-frequency hardening device (frequency: 10 to 200 kHz), tempered in a heating furnace at 170°C for 30 minutes, and then analyzed to determine the torsional fatigue strength.
The torsional fatigue strength was evaluated in terms of torque (N·m) when the number of cycles to fracture was $1 \times 10^5$ in the shaft torsional fatigue test. In the torsional fatigue test, a hydraulic fatigue tester was used, and as shown in Fig. 2(a), splines 2a and 2b were respectively fit into disk-shaped chucks 3a and 3b and torsional torque was repeatedly applied between the chucks 3a and 3b at a frequency of 1 to 2 Hz.
The structure of the hardened layer of the same shaft was observed with an optical microscope to determine the average former austenitic grain diameter and the maximum former austenitic grain diameter.
The average former austenitic grain diameter was determined as follows. A specimen was observed with an optical microscope at three positions, namely, at 1/5, 1/2, and 4/5 of the thickness of the hardened layer from the surface, and from five field of views for each position under a magnification of X400 (the area of one field of view: 0.25 mm × 0.225 mm) to X1,000 (the area of one field of view: 0.10 mm × 0.09 mm). The average former austenitic grain diameter was measured at each position, and the highest average was defined as the average former austenitic grain diameter. The thickness of the hardened layer was assumed to be the depth of the region from the surface at which the area ratio of the martensitic structure decreased to 98%.
The maximum former austenitic grain diameter was determined as follows. A specimen was observed at the same three positions in the hardened layer thickness direction from five fields of view at each position under a magnification of X400 (the area of one field of view: 0.25 mm × 0.225 mm), so that the areas corresponding to the total of 15 fields of view can be observed. The grain diameter distributions in all the fields of view were applied to the equation below to determine the maximum grain diameter:

$$\text{Maximum grain diameter} =$$
$$\text{average grain diameter} + 3\sigma \ (\sigma: \text{standard deviation})$$

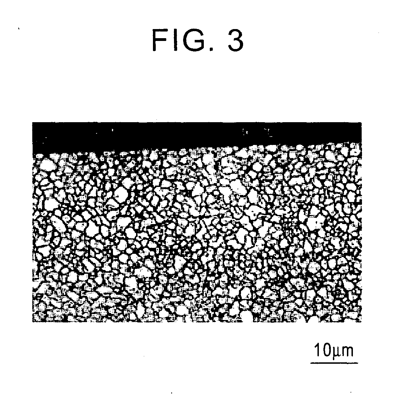

In observing the former austenitic grains, the cross-section taken in the thickness direction of the hardened layer was reacted with a corrosive liquid containing an aqueous picrinic acid solution (50 g of picrinic acid dissolved in 500 g of water), 11 g of sodium dodecylbenzenesulfonate, 1 g of ferrous chloride, and 1.5 g of oxalic acid so as to expose the former austenitic grain boundaries as shown in Fig. 3.

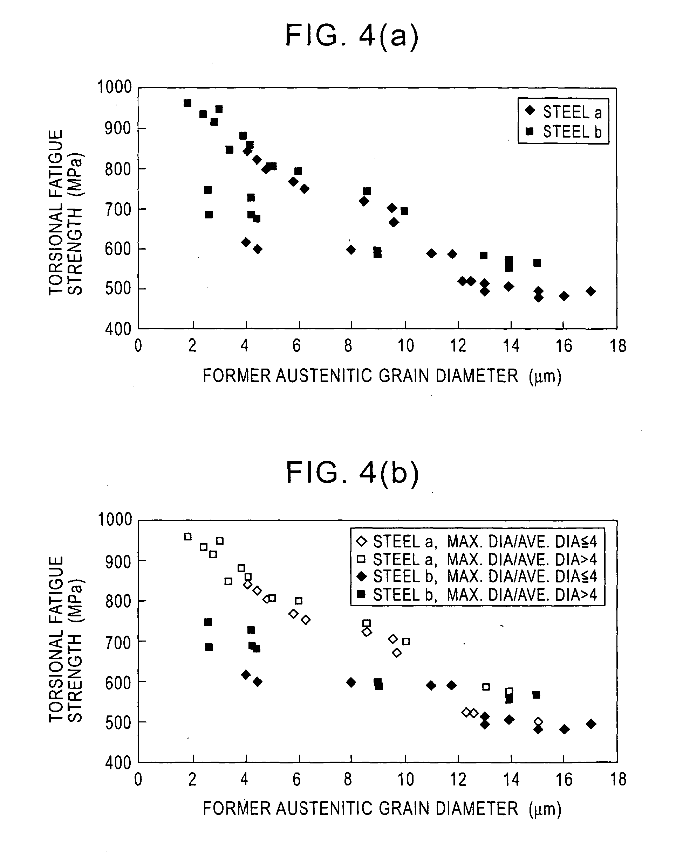

Fig. 4 shows the relationship between the average former austenitic grain diameter and the torsional fatigue strength. As shown in Fig. 4(a), the fatigue strength increased with the decrease in average grain diameter. However, at a former austenitic grain diameter of 12 μm or less, the fatigue strength differed although the grain diameter was substantially the same. It was found that the cause of this is the grain diameter distribution, in particular, the maximum grain diameter. Further investigations were pursued on this issue and it was found that at a maximum grain diameter of not exceeding four times the average grain diameter, the fatigue strength improves significantly by reducing the average grain diameter. Plotted points in Fig. 4(a) were re-plotted in Fig. 4(b) as open squares and rhombuses for a maximum grain diameter/average grain diameter of 4 or less and solid squares and rhombuses for a ratio grain diameter/average grain diameter exceeding 4.
The factors that cause the average grain diameter and the maximum grain diameter to affect the fatigue strength are presumably as follows.
The impurity elements that cause fatigue fracture tend to segregate at the former austenitic boundaries. Thus, as the former austenitic grains become smaller, the area in which segregation occurs increases. This decreases the impurity concentration in the individual segregation sites and thereby increases the fatigue strength. Furthermore, stress concentration to the former austenitic grain boundaries due to cutout or the like is dispersed when the grain diameter is small, thereby decreasing the stress applied onto the individual grain boundaries and increasing the fatigue strength. Such effects are affected not only by the average grain diameter but also by the maximum grain diameter. In other words, in the vicinity of a large grain, the area of the grain boundary is small and the impurity concentration easily increases. Moreover, dispersion of stresses does not readily occur.

It can be presumed that the presence of a large grain with a diameter exceeding four times the average grain diameter increases the possibility of decreasing the fatigue strength due to the above-described effects.

In particular, when the maximum grain diameter of the former austenitic grains is 20 $\mu$m or less, the fatigue strength is expected to improve significantly and stably for a wide range of component shape. More preferably, the average grain diameter is 5 $\mu$m or less. Most preferably the average grain diameter is 4 $\mu$m or less.

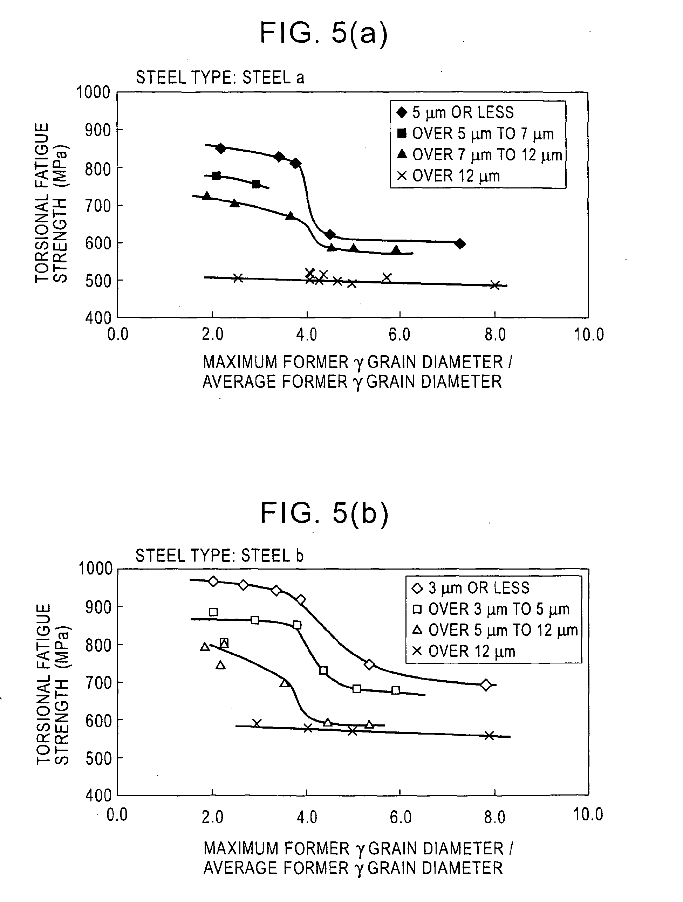

Fig. 5(a) and Fig. 5(b) are each a graph showing the effect of the average former austenitic grain diameter and the maximum former austenitic grain diameter/average former austenitic grain diameter in the hardened layer on the torsional fatigue strength. At an average former austenitic grain diameter of 12 $\mu$m or less, the fatigue strength can be notably increased by adjusting the maximum former austenitic grain diameter/average former austenitic grain diameter to 4 or less. Moreover, at an average austenitic grain diameter of 5 $\mu$m or less, particularly 3 $\mu$m or less, the fatigue strength can be further significantly increased by adjusting the maximum former austenitic grain diameter/average former austenitic grain diameter to 4 or less.

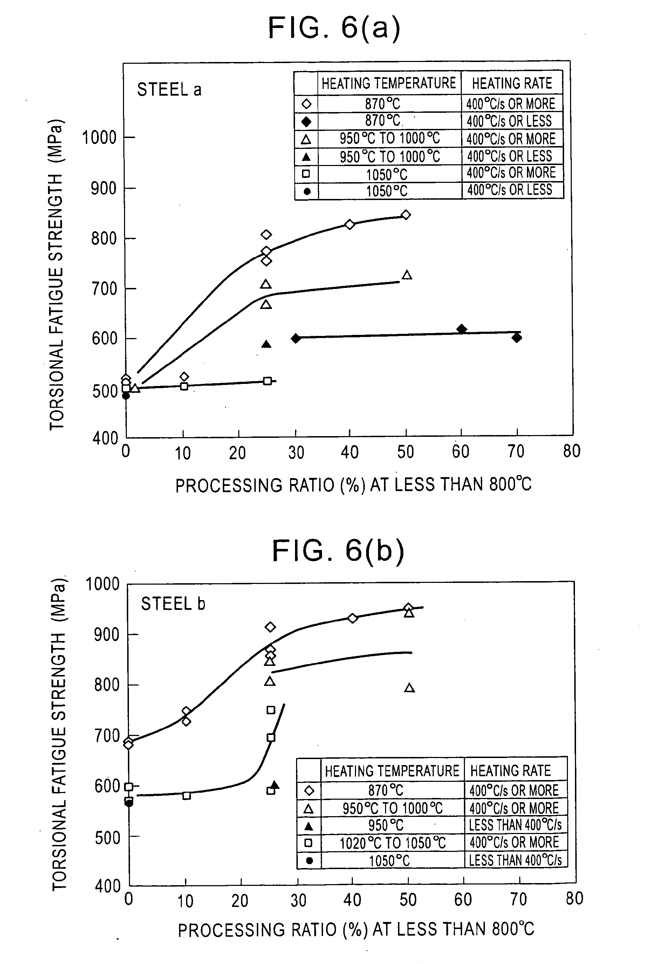

Fig. 6(a) and Fig. 6(b) show the effect of processing ratio at temperatures less than 800°C, the maximum ultimate temperature (heating temperature) during high-frequency heating, and the heating rate on the torsional fatigue strength. Fig. 6(a) and Fig. 6(b) show that excellent fatigue properties can be obtained at a processing ratio in the temperature zone less than 800°C of 25% or more, a maximum ultimate temperature during the high-frequency hardening of 1,000°C or less, and a heating rate of 400 °C/s or more.

The effect of the average former austenitic grain diameter and the maximum former austenitic grain diameter/ average former austenitic grain diameter on the rolling fatigue resistance was also studied. A steel material (150 kg) having a composition indicated as steel **a** or steel **b** above was melted in a vacuum melting furnace and hot-forged into a 150 mm square bar, from which dummy billets were manufactured. The billet was hot-worked and cold-drawn under various conditions and cut to make a steel bar 12 mm in diameter. The surface of the steel bar was subjected to high-frequency hardening under various conditions, and the resulting steel bar was cut to a predetermined length to make a specimen for rolling fatigue test. Radial-type rolling fatigue test shown in Fig. 2(b) was conducted using this specimen.

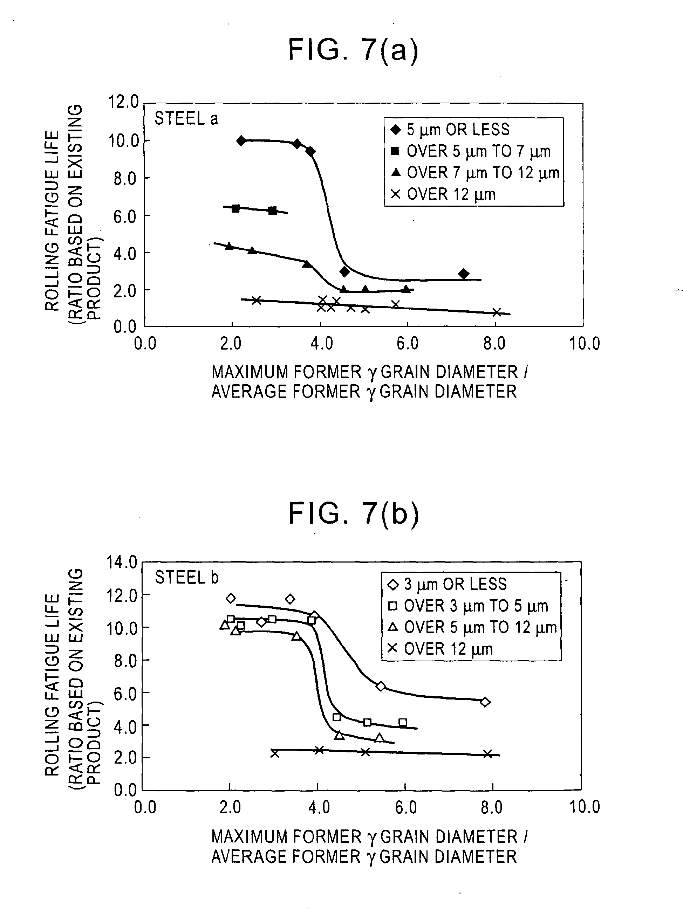

Fig. 7(a) and Fig. 7(b) show the results of the test. As with the torsional fatigue described above, the fatigue strength can be notably increased by adjusting the maximum former austenitic grain diameter/average former austenitic grain diameter to 4 or less at an average former austenitic grain diameter of 12 $\mu$m or less. Moreover, at an average austenitic grain diameter of 5 $\mu$m or less, particularly 3 $\mu$m or less, the fatigue strength can be further significantly increased by adjusting the maximum former austenitic grain diameter/average former austenitic grain diameter to 4 or less.

The experimental results used for obtaining Fig. 4(a), Figs. 4(b) to Fig. 6(a), and Fig. 6(b) are set forth in Tables 1-1 and 1-2, and the results used for obtaining Fig. 7(a) and Fig. 7(b) are set forth in Tables 2-1 and 2-2. The rolling fatigue property is indicated as the ratio of the time to fracture to the time to fracture of Sample No. 1 in Table 2-1 which corresponds to an example of the existing related art.

Table 1-1

| No. | Steel type | Hot-working conditions | | Working (cold-working) ratio (%) at less than 800°C | Pre-hardening structure | HF hardening conditions | | | Hardened layer structure | | Max./Ave. | Torsional fatigue strength (1x10$^5$) (MPa) | Reference |
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
|---|---|---|---|---|---|---|---|---|---|---|---|---|---|
| 1 | a | 80 | 0.1 | 0 | 0 | 800 | 870 | 1 | 17 | 72 | 4.2 | 500 | Rel. Ex. |
| 2 | a | 80 | 0.8 | 50 | 82 | 2000 | 870 | 1 | 4 | 8.7 | 2.2 | 844 | Inv. Ex. |
| 3 | a | 80 | 0.8 | 40 | 82 | 800 | 870 | 1 | 4.4 | 15 | 3.4 | 826 | Inv. Ex. |
| 4 | a | 80 | 0.8 | 25 | 82 | 2000 | 870 | 1 | 4.8 | 18 | 3.8 | 808 | Inv. Ex. |
| 5 | a | 80 | 0.8 | 10 | 82 | 2000 | 870 | 1 | 12.2 | 49 | 4.0 | 525 | Comp. Ex. |
| 6 | a | 80 | 0.8 | 0 | 82 | 2000 | 870 | 1 | 13 | 53 | 4.1 | 520 | Comp. Ex. |
| 7 | a | 80 | 0.8 | 25 | 82 | 800 | 870 | 1 | 5.8 | 12 | 2.1 | 772 | Inv. Ex. |
| 8 | a | 30 | 0.8 | 25 | 82 | 400 | 870 | 1 | 6.2 | 18 | 2.9 | 754 | Inv. Ex. |
| 9 | a | 80 | 0.8 | 10 | 82 | 800 | 870 | 1 | 12.5 | 50 | 4.0 | 523 | Comp. Ex. |
| 10 | a | 80 | 0.8 | 0 | 82 | 800 | 870 | 1 | 13.9 | 60 | 4.3 | 512 | Comp. Ex. |
| 11 | a | 80 | 0.8 | 0 | 82 | 400 | 870 | 1 | 14 | 80 | 5.7 | 510 | Comp. Ex. |
| 12 | a | 80 | 0.8 | 50 | 82 | 800 | 950 | 1 | 8.5 | 16 | 1.9 | 727 | Inv. Ex. |
| 13 | a | 80 | 0.8 | 25 | 82 | 800 | 950 | 1 | 9.5 | 23 | 2.4 | 709 | Inv. Ex. |
| 14 | a | 80 | 0.8 | 25 | 82 | 400 | 950 | 1 | 9.6 | 35 | 3.6 | 673 | Inv. Ex. |
| 15 | a | 80 | 0.8 | 25 | 82 | 100 | 950 | 1 | 11 | 50 | 4.5 | 592 | Comp. Ex. |
| 16 | a | 80 | 0.8 | 0 | 82 | 400 | 950 | 1 | 13 | 61 | 4.7 | 500 | Comp. Ex. |
| 17 | a | 80 | 0.8 | 25 | 82 | 800 | 1050 | 1 | 14 | 35 | 2.5 | 511 | Comp. Ex. |
| 18 | a | 80 | 0.8 | 10 | 82 | 800 | 1050 | 1 | 15 | 60 | 4.0 | 502 | Comp. Ex. |
| 19 | a | 80 | 0.8 | 0 | 82 | 800 | 1050 | 1 | 16 | 80 | 5.0 | 493 | Comp. Ex. |

| No. | Steel type | Hot-working conditions | | Working (cold-working) ratio (%) at less than 800°C | Pre-hardening structure | HF hardening conditions | | | Hardened layer structure | | Max./Ave. | Torsional fatigue strength (1x10⁵) (MPa) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter ($\mu$m) | Maximum former austenitic grain diameter ($\mu$m) | | | |
| 20 | a | 80 | 0.8 | 0 | 82 | 100 | 1050 | 1 | 15 | 120 | 8.0 | 484 | Comp. Ex. |
| 21 | a | 80 | 0.8 | 25 | 82 | 100 | 980 | 1 | 11.8 | 70 | 5.9 | 592 | Comp. Ex. |
| 22 | a | 80 | 0.8 | 60 | 82 | 100 | 870 | 1 | 4 | 18 | 4.5 | 620 | Comp. Ex. |
| 23 | a | 80 | 0.8 | 70 | 82 | 100 | 870 | 1 | 4.4 | 32 | 7.3 | 600 | Comp. Ex. |
| 24 | a | 80 | 0.8 | 30 | 82 | 100 | 870 | 1 | 8 | 40 | 5.0 | 600 | Comp. Ex. |
| 25 | b | 80 | 0.8 | 50 | 82 | 2000 | 870 | 1 | 1.9 | 3.8 | 2.0 | 960 | Inv. Ex. |
| 26 | b | 80 | 0.8 | 40 | 82 | 800 | 870 | 1 | 2.4 | 8 | 3.3 | 940 | Inv. Ex. |
| 27 | b | 80 | 0.8 | 25 | 82 | 2000 | 870 | 1 | 2.8 | 10.8 | 3.9 | 920 | Inv. Ex. |
| 28 | b | 80 | 0.8 | 10 | 82 | 2000 | 870 | 1 | 2.6 | 14 | 5.4 | 750 | Comp. Ex. |
| 29 | b | 80 | 0.8 | 0 | 82 | 2000 | 870 | 1 | 2.7 | 21 | 7.8 | 690 | Comp. Ex. |
| 30 | b | 80 | 0.8 | 25 | 82 | 800 | 870 | 1 | 3.9 | 7.9 | 2.0 | 880 | Inv. Ex. |
| 31 | b | 80 | 0.8 | 25 | 82 | 400 | 870 | 1 | 4.1 | 12 | 2.9 | 860 | Inv. Ex. |
| 32 | b | 80 | 0.8 | 10 | 82 | 800 | 870 | 1 | 4.2 | 18.5 | 4.4 | 730 | Comp. Ex. |
| 33 | b | 80 | 0.8 | 0 | 82 | 800 | 870 | 1 | 4.3 | 22 | 5.1 | 690 | Comp. Ex. |
| 34 | b | 80 | 0.8 | 0 | 82 | 400 | 870 | 1 | 4.4 | 26 | 5.9 | 680 | Comp. Ex. |

Rel. Ex.: Example of related art,
Inv. Ex.: Example of the present invention
Comp. Ex.: Comparative example

Table 1-2

| No. | Steel type | Hot-working conditions | | Working (cold-working) ratio (%) at less than 800°C | Pre-hardening structure | HF hardening conditions | | | Hardened layer structure | | Max./Ave. | Torsional fatigue strength $(1 \times 10^5)$ (MPa) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
| 35 | b | 80 | 0.8 | 50 | 82 | 800 | 1000 | 1 | 6 | 11 | 1.8 | 800 | Inv. Ex. |
| 36 | b | 80 | 0.8 | 25 | 82 | 800 | 1020 | 1 | 8.6 | 15 | 2.1 | 750 | Inv. Ex. |
| 37 | b | 80 | 0.8 | 25 | 82 | 400 | 1030 | 1 | 10 | 30 | 3.5 | 700 | Inv. Ex. |
| 38 | b | 80 | 0.8 | 25 | 82 | 100 | 950 | 1 | 9 | 40 | 4.4 | 600 | Comp. Ex. |
| 39 | b | 80 | 0.8 | 0 | 82 | 400 | 1030 | 1 | 9 | 48 | 5.3 | 595 | Comp. Ex. |
| 40 | b | 80 | 0.8 | 25 | 82 | 800 | 1050 | 1 | 13 | 38 | 2.9 | 590 | Comp. Ex. |
| 41 | b | 80 | 0.8 | 10 | 82 | 800 | 1050 | 1 | 14 | 56 | 4.0 | 580 | Comp. Ex. |
| 42 | b | 80 | 0.8 | 0 | 82 | 800 | 1050 | 1 | 15 | 75 | 5.0 | 570 | Comp. Ex. |
| 43 | b | 80 | 0.8 | 0 | 82 | 100 | 1050 | 1 | 14 | 110 | 7.9 | 560 | Comp. Ex. |
| 44 | b | 80 | 0.8 | 50 | 82 | 800 | 950 | 1 | 3 | 7.9 | 2.6 | 950 | Inv. Ex. |
| 45 | b | 80 | 0.8 | 25 | 82 | 800 | 950 | 1 | 5 | 11 | 2.2 | 810 | Inv. Ex. |
| 46 | b | 80 | 0.8 | 25 | 82 | 400 | 950 | 1 | 3.4 | 13 | 3.8 | 850 | Inv. Ex. |

Rel. Ex.: Example of related art,
Inv. Ex.: Example of the present invention
Comp. Ex.: Comparative example

Table 2-1

| No. | Steel type | Hot-working conditions | | Working (cold-working) ratio (%) at less than 800°C | Pre-hardening structure | HF hardening conditions | | | Hardened layer structure | | Max./Ave. | Rolling fatigue (ratio based on related art) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter ($\mu$m) | Maximum former austenitic grain diameter ($\mu$m) | | | |
| 1 | a | 80 | 0.1 | 0 | 0 | 800 | 870 | 1 | 17 | 72 | 4.2 | 1.0 | Rel. Ex. |
| 2 | a | 80 | 0.8 | 50 | 82 | 2000 | 870 | 1 | 4 | 8.7 | 2.2 | 10.0 | Inv. Ex. |
| 3 | a | 80 | 0.8 | 40 | 82 | 800 | 870 | 1 | 4.4 | 15 | 3.4 | 9.8 | Inv. Ex. |
| 4 | a | 80 | 0.8 | 25 | 82 | 2000 | 870 | 1 | 4.8 | 18 | 3.8 | 9.5 | Inv. Ex. |
| 5 | a | 80 | 0.8 | 10 | 82 | 2000 | 870 | 1 | 12.2 | 49 | 4.0 | 1.5 | Comp. Ex. |
| 6 | a | 80 | 0.8 | 0 | 82 | 2000 | 870 | 1 | 13 | 53 | 4.1 | 1.4 | Comp. Ex. |
| 7 | a | 80 | 0.8 | 25 | 82 | 800 | 870 | 1 | 5.8 | 12 | 2.1 | 6.4 | Inv. Ex. |
| 8 | a | 30 | 0.8 | 25 | 82 | 400 | 870 | 1 | 6.2 | 18 | 2.9 | 6.3 | Inv. Ex. |
| 9 | a | 80 | 0.8 | 10 | 82 | 800 | 870 | 1 | 12.5 | 50 | 4.0 | 1.5 | Comp. Ex. |
| 10 | a | 80 | 0.8 | 0 | 82 | 800 | 870 | 1 | 13.9 | 60 | 4.3 | 1.4 | Comp. Ex. |
| 11 | a | 80 | 0.8 | 0 | 82 | 400 | 870 | 1 | 14 | 80 | 5.7 | 1.3 | Comp. Ex. |
| 12 | a | 80 | 0.8 | 50 | 82 | 800 | 950 | 1 | 8.5 | 16 | 1.9 | 4.4 | Inv. Ex. |
| 13 | a | 80 | 0.8 | 25 | 82 | 800 | 950 | 1 | 9.5 | 23 | 2.4 | 4.2 | Inv. Ex. |
| 14 | a | 80 | 0.8 | 25 | 82 | 400 | 950 | 1 | 9.6 | 35 | 3.6 | 3.4 | Inv. Ex. |
| 15 | a | 80 | 0.8 | 25 | 82 | 100 | 950 | 1 | 11 | 50 | 4.5 | 2.2 | Comp. Ex. |
| 16 | a | 80 | 0.8 | 0 | 82 | 400 | 950 | 1 | 13 | 61 | 4.7 | 1.0 | Comp. Ex. |
| 17 | a | 80 | 0.8 | 25 | 82 | 800 | 1050 | 1 | 14 | 35 | 2.5 | 1.4 | Comp. Ex. |
| 18 | a | 80 | 0.8 | 10 | 82 | 800 | 1050 | 1 | 15 | 60 | 4.0 | 1.1 | Comp. Ex. |
| 19 | a | 80 | 0.8 | 0 | 82 | 800 | 1050 | 1 | 16 | 80 | 5.0 | 0.9 | Comp. Ex. |

(continued)

| No. | Steel type | Hot-working conditions | | Working (cold-working) ratio (%) at less than 800°C | Pre-hardening structure | HF hardening conditions | | | Hardened layer structure | | Max./Ave. | Rolling fatigue (ratio based on related art) | Reference |
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
|---|---|---|---|---|---|---|---|---|---|---|---|---|---|
| 20 | a | 80 | 0.8 | 0 | 82 | 100 | 1050 | 1 | 15 | 120 | 8.0 | 0.9 | Comp. Ex. |
| 21 | a | 80 | 0.8 | 25 | 82 | 100 | 980 | 1 | 11.8 | 70 | 5.9 | 2.2 | Comp. Ex. |
| 22 | a | 80 | 0.8 | 60 | 82 | 100 | 870 | 1 | 4 | 18 | 4.5 | 3.0 | Comp. Ex. |
| 23 | a | 80 | 0.8 | 70 | 82 | 100 | 870 | 1 | 4.4 | 32 | 7.3 | 2.9 | Comp. Ex. |
| 24 | a | 80 | 0.8 | 30 | 82 | 100 | 870 | 1 | 8 | 40 | 5.0 | 2.1 | Comp. Ex. |
| 25 | b | 80 | 0.8 | 50 | 82 | 2000 | 870 | 1 | 1.9 | 3.8 | 2.0 | 12.1 | Inv. Ex. |
| 26 | b | 80 | 0.8 | 40 | 82 | 800 | 870 | 1 | 2.4 | 8 | 3.3 | 12.0 | Inv. Ex. |
| 27 | b | 80 | 0.8 | 25 | 82 | 2000 | 870 | 1 | 2.8 | 10.8 | 3.9 | 11.0 | Inv. Ex. |
| 28 | b | 80 | 0.8 | 10 | 82 | 2000 | 870 | 1 | 2.6 | 14 | 5.4 | 6.5 | Comp. Ex. |
| 29 | b | 80 | 0.8 | 0 | 82 | 2000 | 870 | 1 | 2.7 | 21 | 7.8 | 5.5 | Comp. Ex. |
| 30 | b | 80 | 0.8 | 25 | 82 | 800 | 870 | 1 | 3.9 | 7.9 | 2.0 | 10.7 | Inv. Ex. |
| 31 | b | 80 | 0.8 | 25 | 82 | 400 | 870 | 1 | 4.1 | 12 | 2.9 | 10.8 | Inv. Ex. |
| 32 | b | 80 | 0.8 | 10 | 82 | 800 | 870 | 1 | 4.2 | 18.5 | 4.4 | 4.5 | Comp. Ex. |
| 33 | b | 80 | 0.8 | 0 | 82 | 800 | 870 | 1 | 4.3 | 22 | 5.1 | 4.3 | Comp. Ex. |
| 34 | b | 80 | 0.8 | 0 | 82 | 400 | 870 | 1 | 4.4 | 26 | 5.9 | 4.3 | Comp. Ex. |

Rel. Ex.: Example of related art,
Inv. Ex.: Example of the present invention
Comp. Ex.: Comparative example

Table 2-2

| No. | Steel type | Hot-working conditions | | Working (cold-working) ratio (%) at less than 800°C | Pre-hardening structure | HF hardening conditions | | | Hardened layer structure | | Max./Ave. | Rolling fatigue (ratio based on related art) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter ($\mu$m) | Maximum former austenitic grain diameter ($\mu$m) | | | |
| 35 | b | 80 | 0.8 | 50 | 82 | 800 | 1000 | 1 | 6 | 11 | 1.8 | 10.4 | Inv. Ex. |
| 36 | b | 80 | 0.8 | 25 | 82 | 800 | 1020 | 1 | 8.6 | 15 | 2.1 | 10.2 | Inv. Ex. |
| 37 | b | 80 | 0.8 | 25 | 82 | 400 | 1030 | 1 | 10 | 30 | 3.5 | 9.9 | Inv. Ex. |
| 38 | b | 80 | 0.8 | 25 | 82 | 100 | 950 | 1 | 9 | 40 | 4.4 | 3.5 | Comp. Ex. |
| 39 | b | 80 | 0.8 | 0 | 82 | 400 | 1030 | 1 | 9 | 48 | 5.3 | 3.5 | Comp. Ex. |
| 40 | b | 80 | 0.8 | 25 | 82 | 800 | 1050 | 1 | 13 | 38 | 2.9 | 2.3 | Comp. Ex. |
| 41 | b | 80 | 0.8 | 10 | 82 | 800 | 1050 | 1 | 14 | 56 | 4.0 | 2.6 | Comp. Ex. |
| 42 | b | 80 | 0.8 | 0 | 82 | 800 | 1050 | 1 | 15 | 75 | 5.0 | 2.3 | Comp. Ex. |
| 43 | b | 80 | 0.8 | 0 | 82 | 100 | 1050 | 1 | 14 | 110 | 7.9 | 2.4 | Comp. Ex. |
| 44 | b | 80 | 0.8 | 50 | 82 | 800 | 950 | 1 | 3 | 7.9 | 2.6 | 10.6 | Inv. Ex. |
| 45 | b | 80 | 0.8 | 25 | 82 | 800 | 950 | 1 | 5 | 11 | 2.2 | 10.3 | Inv. Ex. |
| 46 | b | 80 | 0.8 | 25 | 82 | 400 | 950 | 1 | 3.4 | 13 | 3.8 | 10.8 | Inv. Ex. |

Rel. Ex.: Example of related art,
Inv. Ex.: Example of the present invention
Comp. Ex.: Comparative example

In order for the average grain diameter of former austenitic grains to be 12 μm or less and for the maximum grain diameter to be not more than four times the average grain diameter, it is advantageously suitable to use an approach of allowing the structure before high-frequency hardening to contain homogeneous, fine bainite structure and/or martensite structure. This approach is described below.

That is, the structure before the high-frequency hardening preferably contains 10 vol% or more and more preferably 25 vol% or more of a bainite structure and/or a martensite structure. Since the bainite structure and the martensite structure are each a structure containing finely dispersed carbides, inclusion of large amounts of bainite structure or martensite structure in the pre-hardening structure will increase the area of the ferrite/carbide boundaries, which are nucleation sites for austenite, during hardening by heating and finer austenite is generated as a result. Thus, this approach effectively contributes to reducing the former austenitic grain diameter of the hardened layer. Since the austenitic grain diameter decreases during the hardening by heating, the grain boundary strength increases and the fatigue strength improves.

In order to adjust the proportion of the homogeneous, fine bainite structure and/or martensite structure to 10 vol% or more, a steel having the composition described below is preferably hot-worked such that the total processing ratio at temperatures of 800°C to 1,000°C is 80% or more, followed by cooling at a cooling rate of 0.2 °C/s or more for the temperature range of 700°C to 500°C. This is because, at a total processing ratio at 800°C to 1,000°C of less than 80%, a sufficiently homogenous, fine bainite or martensite structure cannot be obtained. The total proportion of the bainite structure and/or the martensite structure cannot be adjusted to 10 vol% or more unless the cooling rate in the temperature range of 700°C to 500°C is 0.2 °C/s or more after the hot-working.

Moreover, in order to reduce the average grain diameter and the maximum grain diameter of former austenite of the hardened layer after the high-frequency hardening, it is necessary to effect 20% or more of working (second working step) in the temperature range less than 800°C before the high-frequency hardening. The working in the temperature range less than 800°C may be effected in the hot-working step before the cooling at the above-described cooling rate, i.e., may be effected in the temperature range of 700°C to less than 800°C. Alternatively, a separate cold-working may be effected after the cooling or a hot-working may be effected by heating the workpiece at the A$_1$ transformation temperature or less. The processing ratio at temperatures lower than 800°C is more preferably 30% or more.

Examples of the working method include cold forging, cold ironing, forming rolling, and shotblasting.

A preferable steel composition for obtaining such a pre-structure will now be described.

C: 0.3 to 1.5 mass%

Carbon is the element having the greatest influence on the hardenability. Carbon effectively contributes to increasing the hardness and the depth of the hardened layer and to improving the fatigue strength. However, at a C content less than 0.3 mass%, the depth of the hardened layer must be significantly increased to securely achieve the required fatigue strength, and this leads to occurrence of significant quenching cracks and difficulties in generating the bainite structure. Thus, 0.3 mass% or more of carbon is contained.. At a C content exceeding 1.5 mass%, the grain boundary strength decreases, the fatigue strength decreases, and the machinability, cold-forgeability, and resistance to quenching crack decrease. Therefore, the C content is limited to the range of 0.3 to 1.5 mass%, preferably 0.4 to 0.6 mass%.

Si: 3.0 mass% or less

Silicon not only serves as a deoxidizer but also contributes to effectively improving the strength. At a Si content exceeding 3.0 mass%, the machinability and the forgeability decrease. Thus, the Si content is preferably 3.0 mass% or less.

In order to increase the strength, Si content is preferably 0.05 mass% or more.

Mn: 2.0 mass% or less

Manganese is added for its effects of improving the hardenability and securing the depth of the hardened layer during the hardening. At a Mn content less than 0.2 mass%, the effect of addition is not sufficient. The Mn content is preferably 0.2 mass% or more, and more preferably 0.3 mass% or more. On the other hand, at a Mn content exceeding 2.0 mass%, the residual austenite after hardening increases, thereby decreasing the surface hardness and the fatigue strength. Thus, the Mn content is preferably 2.0 mass% or less. At an excessively large Mn content, the base material hardens and the machinability may be adversely affected. Thus, the Mn content is preferably 1.2 mass% or less and more preferably 1.0 mass% or less.

Al: 0.25 mass% or less

Aluminum is effective for deoxidization. It is also effective for reducing the grain diameter of the hardened layer since it restrains the growth of the austenitic grains during the heating for hardening. At an Al content exceeding 0.25 mass%, however, the effect is saturated and the cost for the composition is disadvantageously increased. Thus, the Al content is preferably 0.25 mass% or less, and more preferably 0.001 to 0.10 mass%.

In the present invention, the above-described four components are the main components. The main components must satisfy formula (1) below:

$$C^{1/2}(1 + 0.7Si)(1 + 3Mn) > 2.0 \qquad (1)$$

By adjusting the C, Si, and Mn contents to satisfy formula (1), it becomes possible to bring the total proportion of the bainite and martensite in the pre-high-frequency hardening structure to 10 vol% or more and to produce a hardened layer having the structure of the present invention by the high-frequency hardening. Moreover, when the value of the left side of formula (1) is 2.0 or less, the hardness of the hardened layer after the high-frequency hardening is low, and it becomes difficult to sufficiently maintain the depth of the hardened layer.

Although the main components are described above, at least one of the following six components may also be incorporated according to the present invention.

Cr: 2.5 mass% or more

Chromium is effective for improving the hardenability and for ensuring the hardening depth. An excessive amount of Cr stabilizes the carbides and promotes generation of the residual carbides, thereby decreasing the grain boundary strength and the fatigue strength. Accordingly, the Cr content is preferably as low as possible, but can be up to 2.5 mass%. Preferably, the Cr content is 1.5 mass% or less. In order to improve the hardenability, the Cr content is preferably 0.03 mass% or more.

Mo: 1.0 mass% or less

Molybdenum is effective for inhibiting the growth of the austenitic grains. For this effect, the Mo content is preferably 0.05 mass% or more. At a Mo content exceeding 1.0 mass%, the machinability is degraded. The Mo content is preferably 1.0 mass% or less.

Cu: 1.0 mass% or less

Copper is effective for improving the hardenability. Copper forms solid solution in the ferrite, and this solid-solution hardening increases the fatigue strength. Copper also inhibits generation carbides, prevents a decrease in grain boundary strength caused by the carbide, and improves the fatigue strength. However, at a Cu content exceeding 1.0 mass%, cracks occur during hot-working. Thus, the Cu content is preferably 1.0 mass% or less, and more preferably 0.5 mass% or less. At a Cu content less than 0.03 mass%, the effect of improving the hardenability and the effect of preventing the decrease in grain boundary strength are small. Thus, the Cu content is preferably 0.03 mass% or more.

Ni: 2.5 mass% or less

Nickel improves the hardenability and is used to adjust the hardenability. It also inhibits generation of carbides, prevents a decrease in grain boundary strength caused by carbides, and increases the fatigue strength. However, Ni is very expensive and increases the cost of steel material if added in an amount exceeding 2.5 mass%. Thus, the Ni content is preferably 2.5 mass% or less. At an Ni content less than 0.05 mass%, the effect of improving the hardenability and inhibiting the decrease in brain boundary strength are small. Thus, the Ni content is preferably 0.05 mass% or more, and more preferably 0.1 to 1.0 mass%.

Co: 1.0 mass% or less

Cobalt inhibits generation of carbides, inhibits a decrease in grain boundary strength caused by carbides, and increases the fatigue strength. However, Co is a very expensive element, and incorporation of 1.0 mass% or more of Co will increase the cost of the steel material. Thus, the Co content is 1.0 mass% or less. At a Co content less than 0.01 mass%, the effect of inhibiting the decrease in grain boundary strength is small. Thus, the Co content is preferably 0.01 mass% or more and more preferably 0.02 to 0.5 mass%.

V: 0.5 mass% or less

Vanadium bonds with C and N in the steel to function as a deposition strengthening element. It also increases the resistance to temper softening. These effects increase the fatigue strength. At a V content exceeding 0.5 mass%, these effects are saturated. Thus, the V content is preferably 0.5 mass% or less. At a V content of less than 0.01 mass%, the effect of improving the fatigue strength is small; thus, the V content is preferably 0.01 mass% or more and more preferably 0.03 to 0.3 mass%.

W: 1.0 mass% or less

Tungsten is useful for inhibiting the growth of austenitic grains. For this effect, the W content is preferably 0.005 mass% or more. At a W content exceeding 1.0 mass%, the machinability will be degraded. Thus, the W content is preferably 1.0 mass% or less.
In adding one or more of the six components to the main components, formula (2) below must be satisfied for the same reason as for formula (1):

$$C^{1/2}(1 + 0.7Si)(1 + 3Mn)(1 + 2.1Cr)(1 + 3.0\ Mo)(1 + 0.4\ Cu)$$

$$(1 + 0.3Ni)(1 + 5.0V)(1 + 0.5W) > 2.0 \qquad (2)$$

In the present invention, at least one selected from Ti: 0.1 mass% or less, Nb: 0.1 mass% or less, Zr: 0.1 mass% or less, B: 0.01 mass% or less, Ta: 0.5 mass% or less, Hf: 0.5 mass% or less, and Sb: 0.015 mass% or less may be further contained.

Ti: 0.1 mass% or less

Titanium bonds with N, which is an inevitable impurity, and prevents B from forming BN and from losing the effect of increasing the hardenability, thereby fully enhancing the hardenability increasing effect of B. To achieve this effect, the Ti content is preferably 0.005 mass% or more. At a Ti content exceeding 0.1 mass%, large amounts of TiN are generated, and this starts fatigue fracture and thus causes a significant decrease in fatigue strength. Thus, the Ti content is preferably 0.1 mass% or less and more preferably in the range of 0.01 to 0.07 mass%.

Nb: 0.1 mass% or less

Niobium not only has hardenability enhancing effect but also serves as a deposition strengthening element by bonding with C and N in the steel. It is also an element that increases the temper softening resistance. These effects improve the fatigue strength. However, at a Nb content exceeding 0.1 mass%, these effects are saturated. Thus, the Nb content is preferably 0.1 mass% or less. At a Nb content less than 0.005 mass%, the effect of deposition strengthening and the effect of enhancing the temper softening resistance are small; thus, the Nb content is preferably 0.005 mass% or more, and more preferably 0.01 to 0.05 mass%.

Zr: 0.1 mass% or less

Zirconium not only has a hardenability improvement effect but also serves as a deposition strengthening element by bonding with C and N in the steel. It is also an element that increases the temper softening resistance. These effects improve the fatigue strength. However, at a Zr content exceeding 0.1 mass%, these effects are saturated. Thus, the Zr content is preferably 0.1 mass% or less. At a Zr content less than 0.005 mass%, the effect of deposition strengthening and the effect of enhancing the temper softening resistance are small; thus, the Zr content is preferably 0.005 mass% or more, and more preferably 0.01 to 0.05 mass%.

B: 0.01 mass% or less

Boron not only improves the fatigue properties by strengthening the grain boundaries but also improves the strength. The B content is preferably 0.0003 mass% or more. Since the effect is saturated at a content exceeding 0.01 mass%, the B content is limited to 0.01 mass% or less.

Ta: 0.5 mass% or less

Tantalum may be contained since it is effective against delay of microstructural changes and prevents degradation of fatigue strength, in particular, rolling fatigue strength. However, Ta does not contribute to further strength improvements even when the Ta content is increased over 0.5 mass%. Thus, the Ta content is set to 0.5 mass% or less. In order to achieve the effect of improving the fatigue strength, the Ta content is preferably 0.02 mass% or more.

Hf: 0.5 mass% or less

Hafnium may be contained since it is effective against delay of microstructural changes and prevents degradation of fatigue strength, in particular, rolling fatigue strength. However, Hf does not contribute to further strength improvements even when the Hf content is increased over 0.5 mass%. Thus, the Hf content is 0.5 mass% or less. In order to achieve the effect of improving the fatigue strength, the Hf content is preferably 0.02 mass% or more.

Sb: 0.015 mass% or less

Antimony may be contained since it is effective against delay of microstructural changes and prevents degradation of fatigue strength, in particular, rolling fatigue strength. However, when the Sb content is increased to exceed 0.015 mass%, the toughness is decreased. The Sb content is thus 0.015 mass% or less and preferably 0.010 mass% or less. The Sb content is preferably 0.005 mass% or more to allow Sb to exhibit an effect of improving the fatigue strength.
In adding one or more of the above-described seven components to the main components, formula (3) below must be satisfied for the same reason as that for formula (1) above:

$$C^{1/2}(1 + 0.7Si)(1 + 3Mn)(1 + 2.1Cr)(1 + 3.0\ Mo)(1 + 0.4\ Cu)$$

$$(1 + 0.3Ni)(1 + 5.0V)(1 + 1000B)(1 + 0.5W) > 2.0 \qquad (3)$$

In this invention, Si: 0.1 mass% or less, Pb: 0.1 mass% or less, Bi: 0.1 mass% or less, Se: 0.1 mass% or less, Te: 0.1 mass% or less, Ca: 0.01 mass% or less, Mg: 0.01 mass% or less, and REM: 0.1 mass% or less may be further contained.

S: 0.1 mass% or less

Sulfur is a useful element that forms MnS in the steel and improves the machinability. At a S content exceeding 0.1 mass%, however, S segregates in the grain boundaries and thereby decreases the grain boundary strength. Thus, the S content is limited to 0.1 mass% or less and preferably 0.04 mass% or less.

Pb: 0.1 mass% or less

Bi: 0.1 mass% or less

Both Pb and Bi improve machinability since they melt during machining to provide lubricating and embrittlement effects. Thus they may be added for these effects. However, at a Pb content exceeding 0.1 mass% and a Bi content exceeding 0.1 mass%, the effects are saturated and the cost of the components increases. Thus, the Pb and Bi contents are set to be within the above-described ranges. In order to improve the machinability, the Pb content is preferably 0.01 mass% or more and the Bi content is preferably 0.01 mass% or more.

Se: 0.1 mass% or less

Te: 0.1 mass% or less

Se and Te each bond with Mn to form MnSe and MnTe, which function as chip-breakers and thereby improve the machinability. However, at a content exceeding 0.1 mass%, the effects are saturated and the cost for the component increases. Thus, the content is set to be 0.1 mass% or less for both the elements. In order to improve the machinability, the Se content is preferably 0.003 mass% or more and the Te content is preferably 0.003 mass% or more. Ca: 0.01 mass% or less

REM: 0.1 mass% or less

Ca and REM each bond with MnS to form sulfides, which function as chip-breakers and thereby improve the machinability. However, at a Ca content exceeding 0.01 mass% and a REM content exceeding 0.1 mass%, the effects are saturated, and the cost for the component increases. Thus, their contents are set to be within the above-described ranges. In order to improve the machinability, the Ca content is preferably 0.0001 mass% or more and the REM content is preferably 0.0001 mass% or more.

Mg: 0.01 mass% or less

Magnesium is not only an oxidizer but also functions as the stress concentration source thereby improving the machinability. Thus, Mg may added as necessary. However, at an excessively large Mg content, the effects are saturated and the cost for the component increases. Thus, the Mg content is set to be 0.01 mass% or less. In order to improve the machinability the Mg content is preferably 0.0001 mass% or more.

The balance excluding the above-described elements is preferably Fe and inevitable impurities. Examples of the inevitable impurities are P, O, and N. A P content up to 0.10 mass%, a N content up to 0.01 mass%, and an O content of up to 0.008 mass% are acceptable.

Next, the production method of the present invention is explained.

A steel material having a particular composition described above is subjected to bar-mill rolling and then to hot-working such as hot-forging to form a component-shaped product. The component is at least partially subjected to high-frequency hardening at a heating temperature of 800°C to 1,000°C. This portion of the component subjected to the hardening is set to be the site where fatigue strength is required.

In this series of steps, a hardened structure having an average former austenitic grain diameter of 12 μm or less and a maximum grain diameter not more than four times the average diameter can be obtained by conducting the hot-working such that the total processing ratio in the temperature range of 800°C to 1,000°C is at least 80%, cooling at a rate of at least 0.2 °C/s in the temperature range of 700°C to 500°C, and then effecting at least 20% or processing in the temperature range of below 800°C or by conducting the hot-working such that the total processing ratio in the temperature range of 800°C to 1,000°C is at least 80%, effecting 20% or more of processing in the temperature range of below 800°C, and then cooling at a rate of 0.2 °C/s or more in the temperature range of 700°C to 500°C; and then employing the high-frequency hardening conditions described in detail below.

Each of the limitations will now be described in detail.

[Working conditions]

The total processing ratio in the range of 800°C to 1,000°C during the hot-working is set to be at least 80%, and the cooling rate in the temperature range of 700°C to 500°C is set to be at least 0.2 °C/s. Under these conditions, the pre-hardening structure can be obtained as homogeneous, fine bainite and/or martensitic structure, and the austenitic grains become finer during the subsequent heating for high-frequency hardening. Preferably, the cooling rate is at least 0.5 °C/s.

Before the high-frequency hardening, 20% or more of processing is effected in the temperature range below 800°C. The working in the temperature range of 800°C or lower may be conducted in the hot-working step and before the cooling at the above-described cooling ratio (the temperature range from 700°C to less than 800°C); alternatively, a separate cold working may be effected after the cooling or a hot-working may be effected by re-heating the workpiece at the $A_1$ transformation temperature or less. The processing ratio at a temperature below 800°C is preferably at least 30%. Examples of the working methods include cold forging, cold ironing, forming rolling, and shotblasting. By working at a temperature of 800°C or less, the bainite or martensitic structure before the high-frequency hardening becomes finer; therefore, the average former austenitic grain diameter in the hardened layer obtained by the high-frequency hardening will be 12 μm or less and the maximum grain diameter does not exceed four times the average grain diameter. As a result, the fatigue strength is improved.

The term "processing ratio" used herein is defined as the reduction ratio of the cross-sectional area before and after working for the cases concerning rolling, forging, and drawing. For the cases such as shotblasting where the processing ratio cannot be defined in terms of the reduction ratio of the cross-sectional area, the processing ratio is determined by the change in hardness corresponding to the reduction ratio.

[High-frequency hardening conditions]

The heating temperature is set to be 800°C to 1,000°C, and the range 600°C to 800°C is heated at a rate of 400 °C/s or more. If the heating temperature is less than 800°C, generation of the austenitic structure is insufficient, and a hardened layer cannot be obtained. On the other hand, when the heating temperature exceeds 1,000°C, the rate of austenitic grain growth increases substantially. This increases the average grain diameter and, at the same time, the individual grains frequently grow at rates significantly different from one another in the temperature region where rapid growth occurs. As a result, the maximum grain diameter exceeds four times the average grain diameter, thereby inflicting a decrease in fatigue strength.

When the heating ratio in the range of 600°C to 800°C is less than 400 °C/s, the austenitic grain growth is promoted and the size of the individual grains becomes nonuniform. Thus, the maximum grain diameter exceeds four times the average grain diameter, which results in a decreased fatigue strength. This is presumably due to the fact that when the heating rate is low, reverse transformation from ferrite to austenite starts at a lower temperature and nonuniform grain growth tends to occur depending on the position of the grains.

The heating temperature is preferably 800°C to 950°C, and the heating rate in the range of 600°C to 800°C is preferably at least 700 °C/s and more preferably at least 1, 000 °C/s.

During the high-frequency heating, if the retention time at 800°C or more is excessively long, the austenitic grains grow and the maximum grain diameter tends to exceed four times the average grain diameter as a result. Thus, the retention time at 800°C or more is preferably 5 sec or less.

EXAMPLES

EXAMPLE 1

As an example of the component for machine structural use, shafts simulating a drive shaft, an output shaft, and an input shaft of automobiles were prepared. In particular, each of the steel materials having compositions shown in Table 3 was melted in a converter and cast into a cast slab by continuous casting. The size of the cast slab was 300 $\times$ 400 [mm]. The cast slab was subjected to a breakdown step and rolled into a 150 mm square billet. The billet was rolled into a steel bar under the hot-working conditions shown in Tables 4-1 and 4-2 while setting the finishing temperature to 800°C or more. Here, the total processing ratio in the range of 800°C to 1,000°C is the ratio of reduction of the cross section in this temperature range. After the rolling, cooling was conducted under the conditions described in Tables 4-1 and 4-2.

Next, the steel bar was cut to a predetermined length and subjected to surface cutting and partly cold-drawing to adjust the diameter. Simultaneously, splines of the steel bar are formed by rolling to prepare a shaft 1 having splines 2 with dimensions and a shape shown in Fig. 1. The cold-working ratio is the ratio of reduction of the cross-section.

This shaft was hardened under conditions shown in Tables 4-1 and 4-2 using a high-frequency hardening apparatus with a frequency of 15 kHz and then tempered at 170°C for 30 minutes in a heating furnace. The torsional fatigue strength was tested. For some of the shafts, tempering was omitted and their torsional fatigue strength was tested.

The torsional fatigue strength was evaluated in terms of torque (N·m) when the number of cycles to fracture was $1 \times 10^5$ in the shaft torsional fatigue test. In the torsional fatigue test, a hydraulic fatigue tester was used, and as shown in Fig. 2, splines 2a and 2b were respectively fit into disk-shaped chucks 3a and 3b and torsional torque was repeatedly applied between the chucks 3a and 3b at a frequency of 1 to 2 Hz.

The hardened layer of the same shaft was etched using an etchant whose main component is picric acid, e.g., a mixture of an aqueous picric acid solution prepared by dissolving 50 g of picric acid in 500 g of water, 11 g of sodium dodecylbenzenesulfonate, 1 g of ferrous chloride, and 1.5 g of oxalic acid. Subsequently, its structure was observed with an optical microscope to determine the average diameter and maximum diameter of the former austenitic grains. The average diameter and the maximum diameter were determined by the same method as one described above.

The resistance to quenching crack was also tested for the same shaft.

The resistance to quenching crack was evaluated in terms of the number of quenching cracks observed, with an optical microscope (magnification: X100 to X200), in five polished C-cross-sections of the splines after the high-frequency hardening.

The results are shown in Tables 4-1 and 4-2.

Table 3

| Steel type | Chemical composition (mass%) | | | | | | | | Value of left part of formula (1)-(3) |
|---|---|---|---|---|---|---|---|---|---|
| | C | Si | Mn | P | S | Al | N | Others | |
| A | 0.48 | 0.55 | 0.78 | 0.011 | 0.019 | 0.024 | 0.0043 | - | 3.2 |
| B | 0.45 | 0.51 | 0.81 | 0.013 | 0.022 | 0.029 | 0.0041 | 0.3Mo, 0.4Ni | 6.6 |
| C | 0.43 | 0.51 | 0.79 | 0.011 | 0.021 | 0.024 | 0.0039 | 0.45Mo, 0.021Ti, 0.0024B | 22.6 |
| D | 0.43 | 0.21 | 0.91 | 0.011 | 0.022 | 0.025 | 0.0041 | 0.9Cr, 0.003Ca | 8.1 |
| E | 0.25 | 0.21 | 0.92 | 0.011 | 0.022 | 0.024 | 0.0042 | - | 2.2 |
| F | 1.52 | 0.19 | 0.45 | 0.012 | 0.015 | 0.025 | 0.0042 | 1.32Cr | 11.5 |
| G | 0.45 | 0.22 | 2.55 | 0.011 | 0.018 | 0.025 | 0.0045 | - | 6.7 |
| H | 0.32 | 0.21 | 0.55 | 0.012 | 0.015 | 0.025 | 0.0045 | - | 1.7 |
| I | 0.43 | 0.21 | 0.91 | 0.011 | 0.022 | 0.025 | 0.0041 | 1.1Cr | 9.3 |
| J | 0.45 | 0.21 | 0.92 | 0.011 | 0.022 | 0.026 | 0.0041 | 0.4Mo | 6.4 |
| K | 0.43 | 0.22 | 0.91 | 0.011 | 0.022 | 0.025 | 0.0042 | 0.8Cu | 3.7 |
| L | 0.43 | 0.21 | 0.91 | 0.011 | 0.022 | 0.025 | 0.0041 | 0.8Ni | 3.5 |
| M | 0.43 | 0.21 | 0.91 | 0.011 | 0.022 | 0.023 | 0.0043 | 0.15V | 4.9 |
| N | 0.44 | 0.23 | 0.92 | 0.011 | 0.022 | 0.025 | 0.0041 | 0.7W | 3.9 |
| O | 0.43 | 0.21 | 0.91 | 0.012 | 0.022 | 0.025 | 0.0039 | 0.06Ti | 2.8 |
| P | 0.44 | 0.21 | 0.91 | 0.011 | 0.019 | 0,025 | 0.0041 | 0.03Nb | 2.8 |
| Q | 0.43 | 0.21 | 0.91 | 0.011 | 0.022 | 0.024 | 0.0042 | 0.05Zr | 2.8 |
| R | 0.43 | 0.21 | 0.91 | 0.011 | 0.022 | 0.024 | 0.0042 | 0.003B | 2.8 |
| S | 0.48 | 0.55 | 0.78 | 0.011 | 0.004 | 0.024 | 0.0043 | - | 3.2 |
| T | 0.48 | 0.55 | 0.78 | 0.011 | 0.004 | 0.024 | 0.0043 | 0.02Pb | 3.2 |
| U | 0.48 | 0.55 | 0.78 | 0.011 | 0.004 | 0.024 | 0.0043 | 0.02Pb | 3.2 |
| V | 0.48 | 0.55 | 0.78 | 0.011 | 0.004 | 0.024 | 0.0043 | 0.01Se | 3.2 |
| W | 0.48 | 0.55 | 0.78 | 0.011 | 0.004 | 0.024 | 0.0043 | 0.01 Te | 3.2 |
| X | 0.48 | 0.55 | 0.78 | 0.011 | 0.004 | 0.024 | 0.0043 | 0.003Ca | 3.2 |
| Y | 0.48 | 0.55 | 0.78 | 0.011 | 0.022 | 0.024 | 0.0043 | 0.002Mg | 3.2 |
| Z | 0.48 | 0.55 | 0.78 | 0.011 | 0.022 | 0.024 | 0.0043 | 0.002REM | 3.2 |
| AA | 0.45 | 0.21 | 0.92 | 0.012 | 0.022 | 0.026 | 0.0041 | 0.4Mo, 0.02Ti | 6.4 |
| AB | 0.45 | 0.22 | 0.92 | 0.011 | 0.022 | 0.026 | 0.0041 | 0.02Ti, 0.003B | 11.6 |
| AC | 0.45 | 0.21 | 0.92 | 0.011 | 0.004 | 0.026 | 0.0041 | 0.4Mo | 6.4 |
| AD | 0.43 | 0.21 | 0.91 | 0.012 | 0.004 | 0.025 | 0.0039 | 0.06Ti | 2.8 |
| AE | 0.45 | 0.21 | 0.92 | 0.011 | 0.004 | 0.026 | 0.0041 | 0.4Mo, 0.02Ti | 6.4 |
| AF | 0.46 | 0.23 | 0.92 | 0.011 | 0.022 | 0.026 | 0.0041 | 0.02Pb | 3.0 |
| AG | 0.45 | 0.21 | 0.92 | 0.01 | 0.019 | 0.026 | 0.0041 | 0.4Mo, 0.02Pb | 6.4 |
| AH | 0.46 | 0.21 | 0.91 | 0.011 | 0.019 | 0.025 | 0.0041 | 0.03Nb, 0.02Pb | 2.9 |
| AI | 0.45 | 0.21 | 0.92 | 0.011 | 0.019 | 0.026 | 0.0041 | 0.4Mo, 0.02Ti, 0.02Pb | 6.4 |

(continued)

| Steel type | Chemical composition (mass%) | | | | | | | | Value of left part of formula (1)-(3) |
|---|---|---|---|---|---|---|---|---|---|
| | C | Si | Mn | P | S | Al | N | Others | |
| AJ | 0.45 | 0.45 | 0.82 | 0.011 | 0.031 | 0.002 | 0.004 | 0.4Mo, 0.02Ti, 0,0020B, 0.003Ca | 26.9 |
| AK | 0.43 | 0.51 | 0.79 | 0.011 | 0.06 | 0.002 | 0.0039 | 0.45Mo, 0.021 Ti, 0.0020B, 0.003Ca | 22.6 |
| AL | 0.43 | 0.51 | 0.79 | 0.011 | 0.06 | <0.001 | 0.0039 | 0.45Mo, 0.021Ti, 0.0020B, 0.003Ca | 22.6 |

Table 4-1

| No. | Steel type | Hot-working conditions | | Working (cold-working) ratio (%) at less than 800°C | Pre-hardening structure | HF hardening conditions | | | Hardened layer structure | | Number (N) of quenching cracks | Tempering | Torsional fatigue strength $(1 \times 10^5)$ (MPa) | Reference |
|---|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | | |
| 1 | A | 30 | 0.7 | 20 | 73 | 800 | 880 | 1 | 6.5 | 35 | 0 | Yes | 559 | Comp. Ex. |
| 2 | A | 80 | 0.8 | 20 | 71 | 800 | 890 | 1 | 4.8 | 9.5 | 0 | Yes | 845 | Inv. Ex. |
| 3 | A | 80 | 0.7 | 50 | 72 | 800 | 870 | 1 | 2.5 | 5.3 | 0 | Yes | 891 | Inv. Ex. |
| 4 | A | 80 | 0.06 | 20 | 4 | 800 | 910 | 1 | 13.5 | 40 | 5 | Yes | 560 | Comp. Ex. |
| 5 | A | 80 | 0.8 | 0 | 72 | 800 | 890 | 1 | 7.5 | 48 | 0 | Yes | 570 | Comp. Ex. |
| 6 | B | 80 | 0.8 | 20 | 75 | 800 | 870 | 1 | 4.8 | 11 | 0 | Yes | 888 | Inv. Ex. |
| 7 | C | 30 | 0.7 | 20 | 84 | 800 | 880 | 1 | 5.6 | 30 | 0 | Yes | 680 | Comp. Ex. |
| 8 | C | 80 | 0.8 | 0 | 83 | 800 | 880 | 1 | 4.8 | 35 | 0 | Yes | 670 | Comp. Ex. |
| 9 | C | 80 | 0.7 | 20 | 85 | 800 | 880 | 1 | 2.5 | 7 | 0 | Yes | 880 | Inv. Ex. |
| 10 | C | 80 | 0.8 | 50 | 82 | 800 | 880 | 1 | 1.7 | 5 | 0 | Yes | 925 | Inv. Ex. |
| 11 | C | 80 | 0.08 | 20 | 7 | 800 | 880 | 1 | 6.5 | 35 | 0 | Yes | 670 | Comp. Ex. |
| 12 | C | 80 | 0.8 | 0 | 86 | 3000 | 880 | 1 | 3.5 | 20 | 2 | Yes | 620 | Comp. Ex. |
| 13 | C | 80 | 0.8 | 10 | 84 | 200 | 900 | 1 | 8.9 | 45 | 0 | Yes | 622 | Comp. Ex. |
| 14 | C | 80 | 0.8 | 20 | 85 | 800 | 700 | 0 | Undetectable due to incomplete hardening | Undetectable due to incomplete hardening | 0 | Yes | 320 | Comp. Ex. |
| 15 | C | 80 | 0.8 | 20 | 86 | 800 | 1050 | 1 | 15.5 | 50 | 0 | Yes | 610 | Comp. Ex. |
| 16 | D | 80 | 0.8 | 20 | 79 | 800 | 890 | 1 | 4.5 | 15 | 0 | Yes | 889 | Inv. Ex. |
| 17 | E | 80 | 0.7 | 20 | 9 | 800 | 890 | 1 | 7.5 | 45 | 5 | Yes | 542 | Comp. Ex. |

Continued from Table 4-1

| | | | | | | | | | | | | | |
|----|---|----|-----|----|----|------|-----|---|-----|----|---|-----|----------|
| 18 | F | 80 | 0.7 | 20 | 75 | 800 | 890 | 1 | 4.5 | <u>35</u> | 3 | Yes | 615 | Comp. Ex. |
| 19 | G | 80 | 0.7 | 20 | 70 | 800 | 890 | 1 | 4.8 | <u>32</u> | 0 | Yes | 720 | Comp. Ex. |
| 20 | H | 80 | 0.7 | 20 | 10 | 800 | 890 | 1 | 4.2 | <u>35</u> | 2 | Yes | 535 | Comp. Ex. |
| 21 | A | 80 | 0.8 | 20 | 75 | 2000 | 800 | 1 | 2.8 | 9 | 0 | Yes | 790 | Inv. Ex. |
| 22 | I | 80 | 0.8 | 20 | 68 | 800 | 890 | 1 | 4.2 | 12 | 0 | Yes | 845 | Inv. Ex. |
| 23 | J | 80 | 0.8 | 20 | 82 | 800 | 890 | 1 | 4.3 | 12 | 0 | Yes | 847 | Inv. Ex. |

Rel. Ex.: Example of related art,     Inv. Ex.: Example of the present invention     Comp. Ex.: Comparative example

EP 1 741 798 A1

Table 4-2

| No. | Steel type | Hot-working conditions | | Working (cold-working) ratio (%) at less than 800°C | Pre-hardening structure | HF hardening conditions | | | Hardened layer structure | | Number (N) of quenching cracks | Tempering | Torsional fatigue strength (1×10⁵) (MPa) | Reference |
|---|---|---|---|---|---|---|---|---|---|---|---|---|---|---|
| | | Total processing ratio (%) at 800°C to 1000°C | Cooling rate (°C/s) after working | Proportion (vol.%) of bainite structure (vol%) | Heating rate (°C/s) | Heating temperature (°C) | Retention time (sec) at 800°C or more | Average former austenitic grain diameter (μm) | Maximum former austenitic grain diameter (μm) | | | | | |
| 24 | K | 80 | 0.8 | 20 | 79 | 800 | 890 | 1 | 3.9 | 11 | 0 | Yes | 849 | Inv. Ex. |
| 25 | L | 80 | 0.8 | 20 | 79 | 800 | 890 | 1 | 4.3 | 12 | 0 | Yes | 851 | Inv. Ex. |
| 26 | M | 80 | 0.8 | 20 | 79 | 800 | 890 | 1 | 4.2 | 12 | 0 | Yes | 852 | Inv. Ex. |
| 27 | N | 80 | 0.8 | 20 | 79 | 800 | 890 | 1 | 4.3 | 12 | 0 | Yes | 855 | Inv. Ex. |
| 28 | O | 80 | 0.8 | 20 | 72 | 800 | 890 | 1 | 3.9 | 11 | 0 | Yes | 858 | Inv. Ex. |
| 29 | P | 80 | 0.8 | 20 | 79 | 800 | 890 | 1 | 4.3 | 12 | 0 | Yes | 861 | Inv. Ex. |
| 30 | Q | 80 | 0.8 | 20 | 79 | 800 | 890 | 1 | 3.8 | 10 | 0 | Yes | 864 | Inv. Ex. |
| 31 | R | 80 | 0.8 | 20 | 79 | 800 | 890 | 1 | 4.3 | 12 | 0 | Yes | 867 | Inv. Ex. |
| 32 | S | 80 | 0.8 | 20 | 70 | 800 | 890 | 1 | 4.2 | 12 | 0 | Yes | 846 | Inv. Ex. |
| 33 | T | 80 | 0.8 | 20 | 79 | 800 | 890 | 1 | 4.3 | 12 | 0 | Yes | 873 | Inv. Ex. |
| 34 | U | 80 | 0.8 | 20 | 79 | 800 | 890 | 1 | 4.5 | 13 | 0 | Yes | 845 | Inv. Ex. |
| 35 | V | 80 | 0.8 | 20 | 79 | 800 | 890 | 1 | 4.3 | 12 | 0 | Yes | 865 | Inv. Ex. |
| 36 | W | 80 | 0.8 | 20 | 79 | 800 | 890 | 1 | 3.8 | 10 | 0 | Yes | 889 | Inv. Ex. |
| 37 | X | 80 | 0.8 | 20 | 79 | 800 | 890 | 1 | 4.3 | 12 | 0 | Yes | 855 | Inv. Ex. |
| 38 | Y | 80 | 0.8 | 20 | 79 | 800 | 890 | 1 | 4.2 | 12 | 0 | Yes | 858 | Inv. Ex. |
| 39 | Z | 80 | 0.8 | 20 | 79 | 800 | 890 | 1 | 4.3 | 12 | 0 | Yes | 861 | Inv. Ex. |
| 40 | AA | 80 | 0.8 | 20 | 85 | 800 | 890 | 1 | 3.9 | 11 | 0 | Yes | 864 | Inv. Ex. |
| 41 | AB | 80 | 0.8 | 20 | 79 | 800 | 890 | 1 | 4.3 | 12 | 0 | Yes | 867 | Inv. Ex. |

Continued from Table 4-2

| | | | | | | | | | | | | | |
|---|---|---|---|---|---|---|---|---|---|---|---|---|---|
| 42 | AC | 80 | 0.8 | 20 | 80 | 800 | 890 | 1 | 3.8 | 10 | 0 | Yes | 846 | Inv. Ex. |
| 43 | AD | 80 | 0.8 | 20 | 79 | 800 | 890 | 1 | 4.3 | 12 | 0 | Yes | 873 | Inv. Ex. |
| 44 | AE | 80 | 0.8 | 20 | 79 | 800 | 890 | 1 | 3.9 | 11 | 0 | Yes | 855 | Inv. Ex. |
| 45 | AF | 80 | 0.8 | 20 | 79 | 800 | 890 | 1 | 4.3 | 12 | 0 | Yes | 858 | Inv. Ex. |
| 46 | AG | 80 | 0.8 | 20 | 79 | 800 | 890 | 1 | 3.8 | 10 | 0 | Yes | 861 | Inv. Ex. |
| 47 | AH | 80 | 0.8 | 20 | 79 | 800 | 890 | 1 | 4.2 | 12 | 0 | Yes | 864 | Inv. Ex. |
| 48 | AI | 80 | 0.8 | 20 | 85 | 800 | 890 | 1 | 3.7 | 10 | 0 | Yes | 867 | Inv. Ex. |
| 49 | C | 80 | 0.8 | 50 | 82 | 800 | 880 | 1 | 1.7 | 5 | 0 | No | 1000 | Inv. Ex. |
| 50 | AJ | 80 | 0.8 | 20 | 83 | 800 | 930 | 2 | 3.1 | 10 | 0 | No | 900 | Inv. Ex. |
| 51 | AK | 80 | 0.8 | 20 | 81 | 500 | 930 | 3 | 3.9 | 10 | 0 | No | 910 | Inv. Ex. |
| 52 | AL | 80 | 0.8 | 20 | 81 | 500 | 930 | 3 | 4.0 | 10 | 0 | Yes | 905 | Inv. Ex. |

Rel. Ex.: Example of related art,     Inv. Ex.: Example of the present invention     Comp. Ex.: Comparative example

Tables 4-1 and 4-2 clearly show that every shaft with a hardened structure in which the average former austenitic grain diameter was 12 $\mu$m or less and the maximum grain diameter did not exceed four times the average grain diameter exhibited high torsional fatigue strength and excellent resistance to quench cracking, i.e., the number of quench cracking being zero.

In contrast, shafts with hardened structures in which the average former austenitic grain diameter was 12 $\mu$m or more and the maximum grain diameter exceeded four times the average grain diameter all exhibited low fatigue strength.

EXAMPLE 2

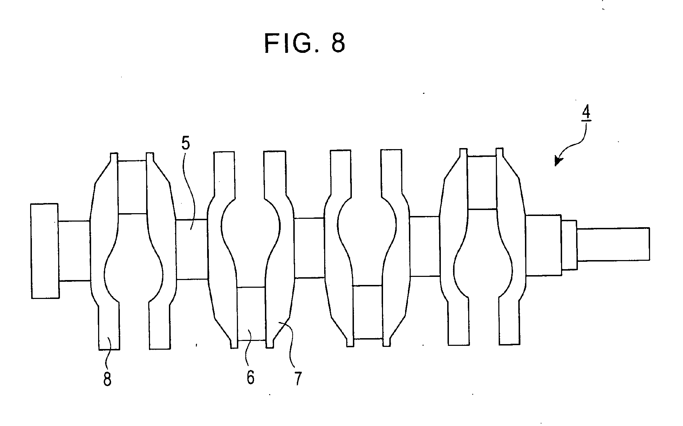

A crankshaft shown in Fig. 8 was prepared as a component for machine structural use of the present invention. A crankshaft 4 has journals 5 to a cylinder, crank pins 6, which are bearings for a piston connecting rod, crank webs 7, and counter weights 8. The journals 5 and the crank pins 6 are subjected to high-frequency hardening to increase the fatigue strength.

Each of steel materials having compositions shown in Table 3 was melted in a converter and cast into a cast slab by continuous casting. The size of the cast slab was 300 $\times$ 400 [mm]. The cast slab was hot-rolled to prepare a steel bar having a diameter of 90 mm. The steel bar was cut to a predetermined length, hot-forged in the temperature range of 700°C to 1, 100°C from bending to finish, deburred, and formed into a shape of a crankshaft, followed by cooling at a rate shown in Tables 5-1 and 5-2. During the hot-forging, the hot-forging process was divided into a plurality of steps. The last stage of the hot-forging was conducted at 700°C to less than 800°C, and all other steps were conducted at 800°C to 1,000°C. In each of the steps, the diameter of the crank pins was adjusted to control the total processing ratio at 800°C to 1,000°C and the total processing ratio at 700°C to less than 800°C.

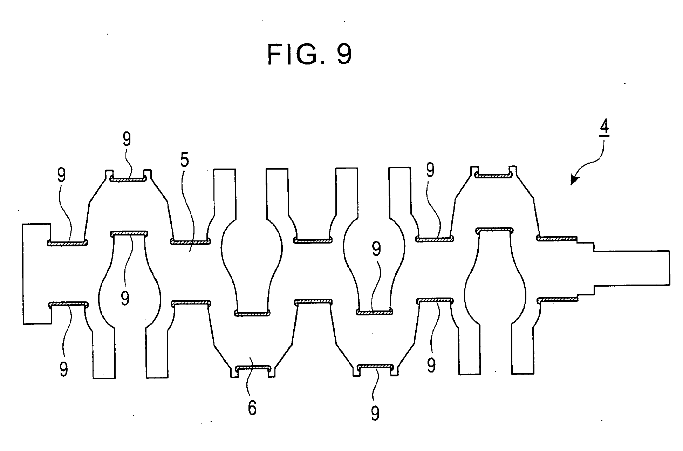

Subsequently, as shown in a cross-sectional view of the crankshaft in Fig. 9, the surfaces of the crank pins and journals of the crankshaft were subjected to high-frequency hardening under the conditions set forth in Tables 5-1 and 5-2 to form hardened structure layers 9. The crankshaft was then tempered at 170°C for 30 min and subjected to finishing to prepare a product. Some of the crankshafts were not subjected to tempering.

The bending fatigue life of the crankshaft obtained thereby was tested. The results are shown in Tables 5-1 and 5-2.

The bending fatigue life of the crankshaft was evaluated as follows.

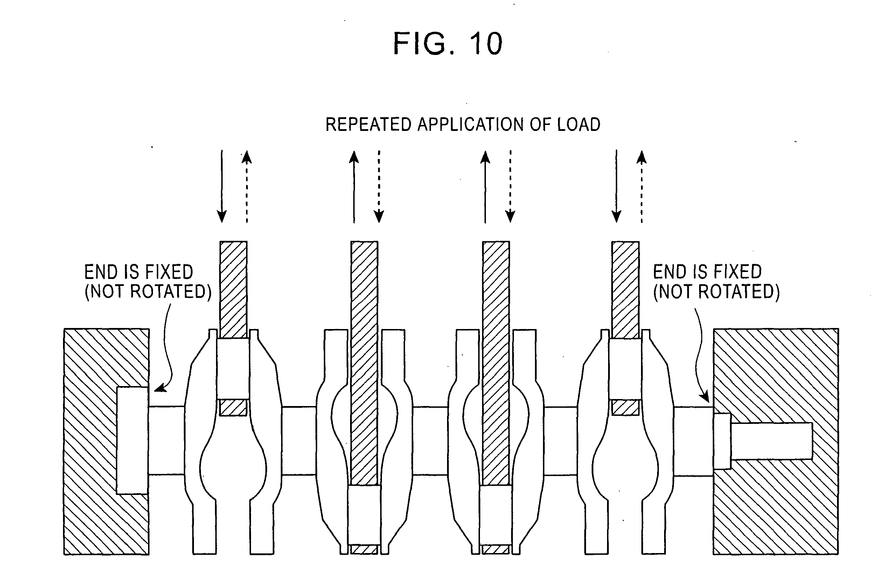

As shown in Fig. 10, while fixing the ends of the crankshaft, an endurance test was conducted by repeatedly applying a predetermined load (5,000 N) to each connecting rod. The number of cycles of load application before breaking of the pin or journal was used for evaluating the bending fatigue life.

The average diameter and the maximum grain diameter of the former austenitic grains in the hardened layer of the same crankshaft were determined by the same method as one described above.

The results are also described in Tables 5-1 and 5-2.

Table 5-1

| No. | Steel type | Hot-working conditions | | | Pre-hardening structure | HF hardening conditions | | | Hardened layer structure | | Tempering | Bending fatigue life (×10⁶) | Reference |
|---|---|---|---|---|---|---|---|---|---|---|---|---|---|
| | | Total processing ratio (%) at 800°C to 1000°C | Cooling rate (°C/s) after working | Total processing ratio (%) at less than 800°C | Proportion (vol.%) of bainite structure | Heating rate (°C/s) | Heating temperature (°C) | Retention time (sec) at 800°C or more | Average former austenitic grain diameter (µm) | Maximum former austenitic grain diameter (µm) | | | |
| 1 | A | 30 | 0.7 | 20 | 73 | 800 | 880 | 1 | 6.5 | 35 | Yes | 2.2 | Comp. Ex. |
| 2 | A | 80 | 0.8 | 20 | 71 | 800 | 890 | 1 | 4.8 | 9.5 | Yes | 9.5 | Inv. Ex. |
| 3 | A | 80 | 0.7 | 50 | 72 | 800 | 870 | 1 | 2.5 | 5.3 | Yes | 12.0 | Inv. Ex. |
| 4 | A | 80 | 0.06 | 20 | 4 | 800 | 910 | 1 | 13.5 | 40 | Yes | 2.2 | Comp. Ex. |
| 5 | A | 80 | 0.8 | 0 | 72 | 800 | 890 | 1 | 7.5 | 48 | Yes | 2.3 | Comp. Ex. |
| 6 | B | 80 | 0.8 | 20 | 75 | 800 | 870 | 1 | 4.8 | 11 | Yes | 11.8 | Inv. Ex. |
| 7 | C | 30 | 0.7 | 20 | 84 | 800 | 880 | 1 | 5.6 | 30 | Yes | 4.1 | Comp. Ex. |
| 8 | C | 80 | 0.8 | 0 | 83 | 800 | 880 | 1 | 4.8 | 35 | Yes | 3.9 | Comp. Ex. |
| 9 | C | 80 | 0.7 | 20 | 85 | 800 | 880 | 1 | 2.5 | 7 | Yes | 11.4 | Inv. Ex. |
| 10 | C | 80 | 0.8 | 50 | 82 | 800 | 880 | 1 | 1.7 | 5 | Yes | 14.3 | Inv. Ex. |
| 11 | C | 80 | 0.08 | 20 | 7 | 800 | 880 | 1 | 6.5 | 35 | Yes | 3.9 | Comp. Ex. |
| 12 | C | 80 | 0.8 | 0 | 86 | 3000 | 880 | 1 | 3.5 | 20 | Yes | 3.0 | Comp. Ex. |
| 13 | C | 80 | 0.8 | 10 | 84 | 200 | 900 | 1 | 8.9 | 45 | Yes | 3.1 | Comp. Ex. |
| 14 | C | 80 | 0.8 | 20 | 85 | 800 | 700 | 0 | Undetectable due to incomplete hardening | Undetectable due to incomplete hardening | Yes | 0.7 | Comp. Ex. |
| 15 | C | 80 | 0.8 | 20 | 86 | 800 | 1050 | 1 | 15.5 | 50 | Yes | 2.9 | Comp. Ex. |
| 16 | D | 80 | 0.8 | 20 | 79 | 800 | 890 | 1 | 4.5 | 15 | Yes | 11.9 | Inv. Ex. |
| 17 | E | 80 | 0.7 | 20 | 9 | 800 | 890 | 1 | 7.5 | 45 | Yes | 2.0 | Comp. Ex. |
| 18 | F | 80 | 0.7 | 20 | 75 | 800 | 890 | 1 | 4.5 | 35 | Yes | 2.9 | Comp. Ex. |

Continued from Table 5-1

| 19 | G | 80 | 0.7 | 20 | 70 | 800 | 890 | 1 | 4.8 | <u>32</u> | Yes | 5.0 | Comp. Ex. |
|----|---|----|----|----|----|-----|-----|---|-----|-----------|-----|-----|-----------|
| 20 | H | 80 | 0.7 | 20 | 10 | 800 | 890 | 1 | 4.2 | <u>35</u> | Yes | 2.0 | Comp. Ex. |
| 21 | A | 80 | 0.8 | 20 | 75 | 2000 | 800 | 1 | 2.8 | 9 | Yes | 9.4 | Inv. Ex. |
| 22 | I | 80 | 0.8 | 20 | 68 | 800 | 890 | 1 | 4.2 | 12 | Yes | 9.5 | Inv. Ex. |
| 23 | J | 80 | 0.8 | 20 | 82 | 800 | 890 | 1 | 4.3 | 12 | Yes | 9.6 | Inv. Ex. |

Rel. Ex.: Example of related art,       Inv. Ex.: Example of the present invention       Comp. Ex.: Comparative example

**Table 5-2**

| No. | Steel type | Hot-working conditions | | | Pre-hardening structure | HF hardening conditions | | | Hardened layer structure | | Tempering | Bending fatigue life ($\times 10^6$) | Reference |
|---|---|---|---|---|---|---|---|---|---|---|---|---|---|
| | | Total processing ratio (%) at 800°C to 1000°C | Cooling rate (°C/s) after working | Total processing ratio (%) at less than 800°C | Proportion (vol.%) of bainite structure | Heating rate (°C/s) | Heating temperature (°C) | Retention time (sec) at 800°C or more | Average former austenitic grain diameter ($\mu$m) | Maximum former austenitic grain diameter ($\mu$m) | | | |
| 24 | K | 80 | 0.8 | 20 | 79 | 800 | 890 | 1 | 3.9 | 11 | Yes | 9.7 | Inv. Ex. |
| 25 | L | 80 | 0.8 | 20 | 79 | 800 | 890 | 1 | 4.3 | 12 | Yes | 9.8 | Inv. Ex. |
| 26 | M | 80 | 0.8 | 20 | 79 | 800 | 890 | 1 | 4.2 | 12 | Yes | 9.9 | Inv. Ex. |
| 27 | N | 80 | 0.8 | 20 | 79 | 800 | 890 | 1 | 4.3 | 12 | Yes | 10.0 | Inv. Ex. |
| 28 | O | 80 | 0.8 | 20 | 72 | 800 | 890 | 1 | 3.9 | 11 | Yes | 10.2 | Inv. Ex. |
| 29 | P | 80 | 0.8 | 20 | 79 | 800 | 890 | 1 | 4.3 | 12 | Yes | 10.3 | Inv. Ex. |
| 30 | Q | 80 | 0.8 | 20 | 79 | 800 | 890 | 1 | 3.8 | 10 | Yes | 10.5 | Inv. Ex. |
| 31 | R | 80 | 0.8 | 20 | 79 | 800 | 890 | 1 | 4.3 | 12 | Yes | 10.6 | Inv. Ex. |
| 32 | S | 80 | 0.8 | 20 | 70 | 800 | 890 | 1 | 4.2 | 12 | Yes | 9.6 | Inv. Ex. |
| 33 | T | 80 | 0.8 | 20 | 79 | 800 | 890 | 1 | 4.3 | 12 | Yes | 11.0 | Inv. Ex. |
| 34 | U | 80 | 0.8 | 20 | 79 | 800 | 890 | 1 | 4.5 | 13 | Yes | 9.5 | Inv. Ex. |
| 35 | V | 80 | 0.8 | 20 | 79 | 800 | 890 | 1 | 4.3 | 12 | Yes | 10.5 | Inv. Ex. |
| 36 | W | 80 | 0.8 | 20 | 79 | 800 | 890 | 1 | 3.8 | 10 | Yes | 11.9 | Inv. Ex. |
| 37 | X | 80 | 0.8 | 20 | 79 | 800 | 890 | 1 | 4.3 | 12 | Yes | 10.0 | Inv. Ex. |
| 38 | Y | 80 | 0.8 | 20 | 79 | 800 | 890 | 1 | 4.2 | 12 | Yes | 10.2 | Inv. Ex. |
| 39 | Z | 80 | 0.8 | 20 | 79 | 800 | 890 | 1 | 4.3 | 12 | Yes | 10.3 | Inv. Ex. |
| 40 | AA | 80 | 0.8 | 20 | 85 | 800 | 890 | 1 | 3.9 | 11 | Yes | 10.5 | Inv. Ex. |
| 41 | AB | 80 | 0.8 | 20 | 79 | 800 | 890 | 1 | 4.3 | 12 | Yes | 10.6 | Inv. Ex. |
| 42 | AC | 80 | 0.8 | 20 | 80 | 800 | 890 | 1 | 3.8 | 10 | Yes | 9.6 | Inv. Ex. |

Continued from Table 5-2

| 43 | AD | 80 | 0.8 | 20 | 79 | 800 | 890 | 1 | 4.3 | 12 | Yes | 11.0 | Inv. Ex. |
|----|----|----|-----|----|----|-----|-----|---|-----|----|-----|------|----------|
| 44 | AE | 80 | 0.8 | 20 | 79 | 800 | 890 | 1 | 3.9 | 11 | Yes | 10.0 | Inv. Ex. |
| 45 | AF | 80 | 0.8 | 20 | 79 | 800 | 890 | 1 | 4.3 | 12 | Yes | 10.2 | Inv. Ex. |
| 46 | AG | 80 | 0.8 | 20 | 79 | 800 | 890 | 1 | 3.8 | 10 | Yes | 10.3 | Inv. Ex. |
| 47 | AH | 80 | 0.8 | 20 | 79 | 800 | 890 | 1 | 4.2 | 12 | Yes | 10.5 | Inv. Ex. |
| 48 | AI | 80 | 0.8 | 20 | 85 | 800 | 890 | 1 | 3.7 | 10 | Yes | 10.6 | Inv. Ex. |
| 49 | C  | 80 | 0.8 | 50 | 82 | 800 | 880 | 1 | 1.7 | 5  | No  | 15.2 | Inv. Ex. |
| 50 | AJ | 80 | 0.8 | 20 | 83 | 800 | 930 | 2 | 3.1 | 10 | Yes | 10.5 | Inv. Ex. |
| 51 | AK | 80 | 0.8 | 20 | 81 | 500 | 930 | 3 | 3.9 | 10 | Yes | 10.5 | Inv. Ex. |
| 52 | AK | 80 | 0.8 | 20 | 81 | 500 | 930 | 3 | 4.0 | 10 | Yes | 10.5 | Inv. Ex. |

Rel. Ex.: Example of related art,      Inv. Ex.: Example of the present invention      Comp. Ex.: Comparative example

Tables 5-1 and 5-2 clearly show that every shaft with a hardened structure where an average grain diameter of former austenitic grains in the hardened layer was 12 μm or less and a maximum grain diameter did not exceed four times the average diameter exhibited excellent bending fatigue life, i.e., the number of times of application of the load to breaking being $9 \times 10^6$ or more.

In contrast, those having an average grain diameter of former austenitic grains of 12 μm or less and a maximum grain diameter exceeding four times the average grain diameter exhibited low bending life strength.

EXAMPLE 3

A constant velocity joint 12 for transmitting power from a drive shaft 10 to a hub 11 of a wheel was prepared as a component for machine structural use of the present invention.

The constant velocity joint 12 is a combination of an outer race 13 and an inner race 14. In particular, the inner race 14 is movably fixed to the inner side of a mouth 13a of the outer race 13 via balls 15 fit in a ball track groove in the inner surface of the mouth 13a and is connected to the drive shaft 10; meanwhile, a stem 13b of the outer race 13 is for example splined to the hub 11 to transmit power from the drive shaft 10 to the hub 11 of the wheel.

Each of steel materials having compositions shown in Table 3 was melted in a converter and cast into a cast slab by continuous casting. The size of the cast slab was $300 \times 400$ [mm]. The cast slab was subjected to a breakdown step and rolled into a 150 mm square billet. The billet was then rolled to prepare a steel bar having a diameter of 50 mm.

Next, the steel bar was cut to a predetermined length, hot-forged under the conditions set forth in Table 6-1, 6-2, 7-1, or 7-2 at a temperature 800°C or more, and formed such that the mouth (outer diameter: 600 mm) and the stem (diameter: 20 mm) of the constant velocity joint outer race were integrally combined. Subsequently, the tracking groove for balls is formed in the inner surface of the mouth of the constant velocity joint outer race by cutting or cold forging, and, at the same time, the stem of the constant velocity joint outer race was formed into a spline shaft by cutting or rolling. The cooling after the hot-forging were conducted under the conditions set forth in Tables 6-1, 6-2, 7-1, and 7-2. The total processing ratio in the hot-forging and the forming by rolling was adjusted by controlling the rate of change in cross-sectional area of a cross section taken in the direction orthogonal to the axis direction of the component to which the high-frequency hardening was effected.

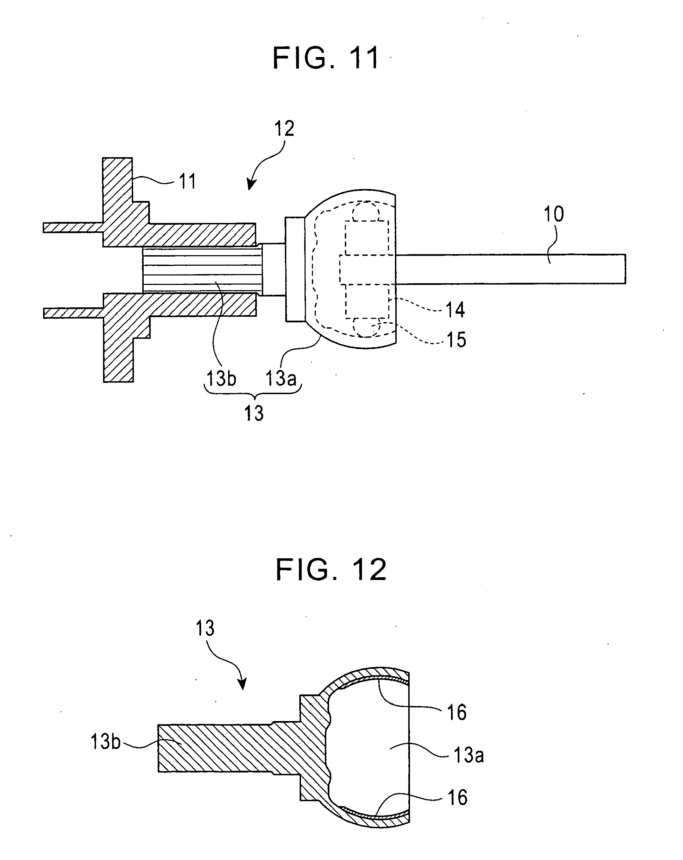

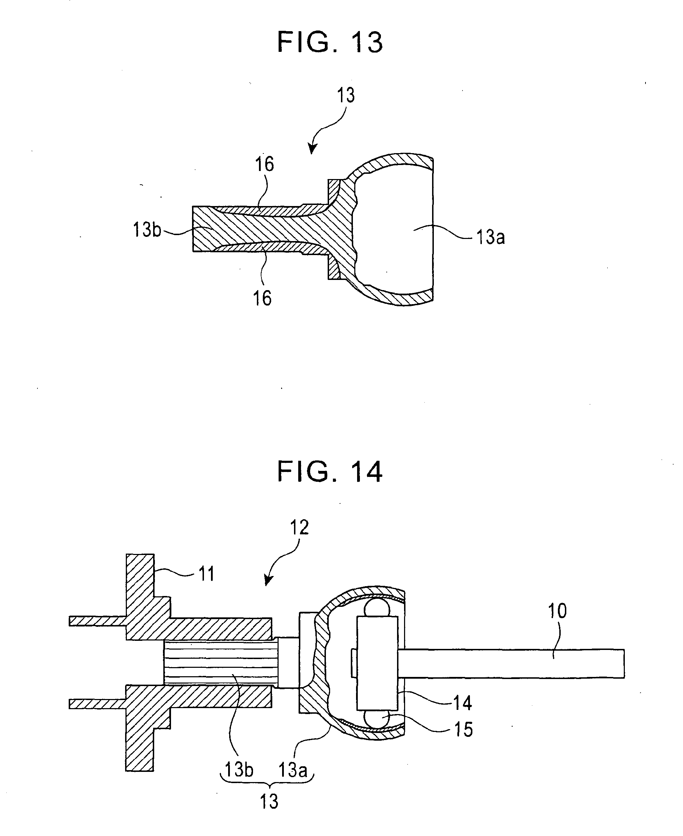

As shown in Fig. 12 or 13, the inner surface of the mouth 13a or the outer surface of the stem 13b of the constant velocity joint outer race 13 was hardened using a 15 kHz high-frequency hardening apparatus to form a hardened structure layer 16 and then tempered at 180°C for 2 hours in a heating furnace to prepare a product. The conditions for the tempering were set forth in Tables 6-1, 6-2, 7-1, and 7-2. The tempering was omitted for some of the constant velocity joint outer races. The resulting constant velocity joint outer race was attached, via balls (steel balls) in the mouth, to the inner race connected to the drive shaft, and the stem was fit into the hub to prepare a constant velocity joint unit (see Fig. 11). The specifications for the balls, the inner race, and the hub were as follows:

balls: hardened and tempered high-carbon chromium bearing steel SUJ2
inner race: carburized, hardened, and tempered chromium steel SCr
hub: carburized steel for machine structural use

Next, using this constant velocity joint unit, the endurance test for determining rolling fatigue strength was conducted for those units in which the inner surface of the mouth was subjected to high-frequency hardening and the endurance test for determining torsional fatigue strength was conducted for those units in which the outer surface of the stem was subjected to high-frequency hardening, both the tests being conducted in a power transmission system for transmitting the rotary action of the drive shaft to the hub through the inner race and the outer race of the constant velocity joint.

In the rolling fatigue strength test, power transmission was conducted at a torque of 900 N·m, a working angle (the angle defined by the axis line of the outer race and the axis line of the drive shaft) of 20°, and a number of revolution of 300 rpm. The time taken until the inner surface of the mouth was broken by rolling fatigue was evaluated as the rolling fatigue strength.

In this power transmission system, the endurance test for determining the torsional fatigue strength was conducted. In the torsional fatigue test, the working angle of the constant velocity joint unit (the angle defined by the axis line of the outer race and the axis line of the drive shaft) was set to 0° and a torsional fatigue tester with a maximum torque of 4900 N·m was used to apply torsional force between the hub and the drive shaft, and the maximum torque of the stem was changed so that the stress conditions are fully reversed. The stress at which the number of cycles to fracture was $1 \times 10^5$ was evaluated as the torsional fatigue strength.

In the torsional fatigue test, the shape and dimensions of the hub and the drive shaft were adjusted so that the strength of the hub and the drive shaft were large enough for the evaluation of the torsional fatigue of the outer race of the constant velocity joint.

Likewise, in the rolling fatigue test, the shape and dimensions of the constant velocity joint inner race, steel balls, and the like were adjusted so that the inner surface of the constant velocity joint outer race was the weakest part in the endurance test.

The constant velocity joint outer races prepared under the same conditions were analyzed to determine the average diameter and the maximum diameter of the former austenitic grains in the hardened layer by the above-described process.

The results are shown in Tables 6-1, 6-2, 7-1, and 7-2.

Table 6-1

| No. | Steel type | Hot-working conditions | | Total processing ratio (%) at less than 800°C *1 | Pre-hardening structure | HF hardening conditions | | | Hardened layer structure | | Tempering | Rolling fatigue life (hr) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate °C/s) | Heating temperature (°C) | Retention time (sec) at 800°C or more | Average former austenitic grain diameter (μm) | Maximum former austenitic grain diameter (μm) | | | |
| 1 | A | 30 | 0.7 | 20 | 73 | 800 | 880 | 1 | 6.5 | 35 | Yes | 79 | Comp. Ex. |
| 2 | A | 80 | 0.8 | 20 | 71 | 800 | 890 | 1 | 4.8 | 9.5 | Yes | 136 | Inv. Ex. |
| 3 | A | 80 | 0.7 | 50 | 72 | 800 | 870 | 1 | 2.5 | 5.3 | Yes | 148 | Inv. Ex. |
| 4 | A | 80 | 0.06 | 20 | 4 | 800 | 910 | 1 | 13.5 | 40 | Yes | 79 | Comp. Ex. |
| 5 | A | 80 | 0.8 | 0 | 72 | 800 | 890 | 1 | 7.5 | 48 | Yes | 81 | Comp. Ex. |
| 6 | B | 80 | 0.8 | 20 | 75 | 800 | 870 | 1 | 4.8 | 11 | Yes | 147 | Inv. Ex. |
| 7 | C | 30 | 0.7 | 20 | 84 | 800 | 880 | 1 | 5.6 | 30 | Yes | 99 | Comp. Ex. |
| 8 | C | 80 | 0.8 | 0 | 83 | 800 | 880 | 1 | 4.8 | 35 | Yes | 97 | Comp. Ex. |
| 9 | C | 80 | 0.7 | 20 | 85 | 800 | 880 | 1 | 2.5 | 7 | Yes | 145 | Inv. Ex. |
| 10 | C | 80 | 0.8 | 50 | 82 | 800 | 880 | 1 | 1.7 | 5 | Yes | 158 | Inv. Ex. |
| 11 | C | 80 | 0.08 | 20 | 7 | 800 | 880 | 1 | 6.5 | 35 | Yes | 97 | Comp. Ex. |
| 12 | C | 80 | 0.8 | 0 | 86 | 3000 | 880 | 1 | 3.5 | 20 | Yes | 89 | Comp. Ex. |
| 13 | C | 80 | 0.8 | 10 | 84 | 200 | 900 | 1 | 8.9 | 45 | Yes | 89 | Comp. Ex. |
| 14 | C | 80 | 0.8 | 20 | 85 | 800 | 700 | 0 | Undetectable due to incomplete hardening | Undetectable due to incomplete hardening | Yes | 50 | Comp. Ex. |
| 15 | C | 80 | 0.8 | 20 | 86 | 800 | 1050 | 1 | 15.5 | 50 | Yes | 87 | Comp. Ex. |
| 16 | D | 80 | 0.8 | 20 | 79 | 800 | 890 | 1 | 4.5 | 15 | Yes | 148 | Inv. Ex. |
| 17 | E | 80 | 0.7 | 20 | 9 | 800 | 890 | 1 | 7.5 | 45 | Yes | 76 | Comp. Ex. |
| 18 | F | 80 | 0.7 | 20 | 75 | 800 | 890 | 1 | 4.5 | 35 | Yes | 88 | Comp. Ex. |

Continued from Table 6-1

| 19 | G | 80 | 0.7 | 20 | 70 | 800 | 890 | 1 | 4.8 | _32_ | Yes | 98 | Comp. Ex. |
| 20 | H | 80 | 0.7 | 20 | 10 | 800 | 890 | 1 | 4.2 | _35_ | Yes | 75 | Comp. Ex. |
| 21 | A | 80 | 0.8 | 20 | 75 | 2000 | 800 | 1 | 2.8 | 9 | Yes | 139 | Inv. Ex. |
| 22 | I | 80 | 0.8 | 20 | 68 | 800 | 890 | 1 | 4.2 | 12 | Yes | 136 | Inv. Ex. |
| 23 | J | 80 | 0.8 | 20 | 82 | 800 | 890 | 1 | 4.3 | 12 | Yes | 136 | Inv. Ex. |
| 24 | K | 80 | 0.8 | 20 | 79 | 800 | 890 | 1 | 3.9 | 11 | Yes | 137 | Inv. Ex. |
| 25 | L | 80 | 0.8 | 20 | 79 | 800 | 890 | 1 | 4.3 | 12 | Yes | 137 | Inv. Ex. |
| 26 | M | 80 | 0.8 | 20 | 79 | 800 | 890 | 1 | 4.2 | 12 | Yes | 138 | Inv. Ex. |
| 27 | N | 80 | 0.8 | 20 | 79 | 800 | 890 | 1 | 4.3 | 12 | Yes | 139 | Inv. Ex. |

1*: If value in the column is zero, the inner surface of the mouth is formed by cutting. Otherwise, the inner surface of the mouth is formed by cold-forging and the figure in the column indicates the processing ratio.

Rel. Ex.: Example of related art,    Inv. Ex.: Example of the present invention    Comp. Ex.: Comparative example

Table 6-2

| No. | Steel type | Hot-working conditions | | Total processing ratio (%) at less than 800°C *1 | Pre-hardening structure | HF hardening conditions | | | Hardened layer structure | | Tempering | Rolling fatigue life (hr) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
| 28 | O | 80 | 0.8 | 20 | 72 | 800 | 890 | 1 | 3.9 | 11 | Yes | 139 | Inv. Ex. |
| 28 | O | 80 | 0.8 | 20 | 72 | 800 | 890 | 1 | 3.9 | 11 | Yes | 139 | Inv. Ex. |
| 29 | P | 80 | 0.8 | 20 | 79 | 800 | 890 | 1 | 4.3 | 12 | Yes | 140 | Inv. Ex. |
| 30 | Q | 80 | 0.8 | 20 | 79 | 800 | 890 | 1 | 3.8 | 10 | Yes | 141 | Inv. Ex. |
| 31 | R | 80 | 0.8 | 20 | 79 | 800 | 890 | 1 | 4.3 | 12 | Yes | 142 | Inv. Ex. |
| 32 | S | 80 | 0.8 | 20 | 70 | 800 | 890 | 1 | 4.2 | 12 | Yes | 136 | Inv. Ex. |
| AJ | 0.45 | 0.45 | 0.82 | 0.011 | 0.031 | 0.002 | 0.004 | 0.4Mo, 0.02Ti, 0.0020B, 0.003 Ca | 26.9 | 12 | Yes | 143 | Inv. Ex. |
| AK | 0.43 | 0.51 | 0.79 | 0.011 | 0.06 | 0.002 | 0.0039 | 0.45Mo, 0.021Ti, 0.0020B, 0.003 Ca | 22.6 | 13 | Yes | 136 | Inv. Ex. |
| 35 | V | 80 | 0.8 | 20 | 79 | 800 | 890 | 1 | 4.3 | 12 | Yes | 141 | Inv. Ex. |
| 36 | W | 80 | 0.8 | 20 | 79 | 800 | 890 | 1 | 3.8 | 10 | Yes | 148 | Inv. Ex. |
| 37 | X | 80 | 0.8 | 20 | 79 | 800 | 890 | 1 | 4.3 | 12 | Yes | 139 | Inv. Ex. |
| 38 | Y | 80 | 0.8 | 20 | 79 | 800 | 890 | 1 | 4.2 | 12 | Yes | 139 | Inv. Ex. |
| 39 | Z | 80 | 0.8 | 20 | 79 | 800 | 890 | 1 | 4.3 | 12 | Yes | 140 | Inv. Ex. |
| 40 | AA | 80 | 0.8 | 20 | 85 | 800 | 890 | 1 | 3.9 | 11 | Yes | 141 | Inv. Ex. |
| 41 | AB | 80 | 0.8 | 20 | 79 | 800 | 890 | 1 | 4.3 | 12 | Yes | 142 | Inv. Ex. |
| 42 | AC | 80 | 0.8 | 20 | 80 | 800 | 890 | 1 | 3.8 | 10 | Yes | 136 | Inv. Ex. |
| 43 | AD | 80 | 0.8 | 20 | 79 | 800 | 890 | 1 | 4.3 | 12 | Yes | 143 | Inv. Ex. |

Continued from Table 6-2

| 44 | AE | 80 | 0.8 | 20 | 79 | 800 | 890 | 1 | 3.9 | 11 | Yes | 139 | Inv. Ex. |
|----|----|----|-----|----|----|-----|-----|---|-----|----|-----|-----|----------|
| 45 | AF | 80 | 0.8 | 20 | 79 | 800 | 890 | 1 | 4.3 | 12 | Yes | 139 | Inv. Ex. |
| 46 | AG | 80 | 0.8 | 20 | 79 | 800 | 890 | 1 | 3.8 | 10 | Yes | 140 | Inv. Ex. |
| 47 | AH | 80 | 0.8 | 20 | 79 | 800 | 890 | 1 | 4.2 | 12 | Yes | 141 | Inv. Ex. |
| 48 | AI | 80 | 0.8 | 20 | 85 | 800 | 890 | 1 | 3.7 | 10 | Yes | 142 | Inv. Ex. |
| 49 | C  | 80 | 0.8 | 50 | 82 | 800 | 880 | 1 | 1.7 | 5  | No  | 172 | Inv. Ex. |
| 50 | AJ | 80 | 0.8 | 20 | 83 | 800 | 930 | 2 | 3.1 | 10 | Yes | 140 | Inv. Ex. |
| 51 | AK | 80 | 0.8 | 20 | 81 | 500 | 930 | 3 | 3.9 | 10 | Yes | 138 | Inv. Ex. |
| 52 | AL | 80 | 0.8 | 20 | 81 | 500 | 930 | 3 | 4.0 | 10 | Yes | 135 | Inv. Ex. |

*1: If value in the column is zero, the inner surface of the mouth is formed by cutting. Otherwise, the inner surface of the mouth is formed by cold-forging and the figure in the column indicates the processing ratio.

Rel. Ex.: Example of related art,       Inv. Ex.: Example of the present invention       Comp. Ex.: Comparative example

Table 7-1

| No. | Steel type | Hot-working conditions | | Total processing ratio (%) at less than 800°C *2 | Pre-hardening structure | HF hardening conditions | | | Hardened layer structure | | Tempering | Torsional fatigue strength (×10⁵)(MPa) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature(°C) | Retention time (sec) at 800°C or more | Average former austenitic grain diameter (µm) | Maximum former austenitic grain diameter (µm) | | | |
| 1 | A | 30 | 0.7 | 20 | 73 | 800 | 880 | 1 | 6.5 | 35 | Yes | 481 | Comp. Ex. |
| 2 | A | 80 | 0.8 | 20 | 71 | 800 | 890 | 1 | 4.8 | 9.5 | Yes | 783 | Inv. Ex. |
| 3 | A | 80 | 0.7 | 50 | 72 | 800 | 870 | 1 | 2.5 | 5.3 | Yes | 832 | Inv. Ex. |
| 4 | A | 80 | 0.06 | 20 | 4 | 800 | 910 | 1 | 13.5 | 40 | Yes | 482 | Comp. Ex. |
| 5 | A | 80 | 0.8 | 0 | 72 | 800 | 890 | 1 | 7.5 | 48 | Yes | 493 | Comp. Ex. |
| 6 | B | 80 | 0.8 | 20 | 75 | 800 | 870 | 1 | 4.8 | 11 | Yes | 829 | Inv. Ex. |
| 7 | C | 30 | 0.7 | 20 | 84 | 800 | 880 | 1 | 5.6 | 30 | Yes | 609 | Comp. Ex. |
| 8 | C | 80 | 0.8 | 0 | 83 | 800 | 880 | 1 | 4.8 | 35 | Yes | 598 | Comp. Ex. |
| 9 | C | 80 | 0.7 | 20 | 85 | 800 | 880 | 1 | 2.5 | 7 | Yes | 820 | Inv. Ex. |
| 10 | C | 80 | 0.8 | 50 | 82 | 800 | 880 | 1 | 1.7 | 5 | Yes | 868 | Inv. Ex. |
| 11 | C | 80 | 0.08 | 20 | 7 | 800 | 880 | 1 | 6.5 | 35 | Yes | 598 | Comp. Ex. |
| 12 | C | 80 | 0.8 | 0 | 86 | 3000 | 880 | 1 | 3.5 | 20 | Yes | 545 | Comp. Ex. |
| 13 | C | 80 | 0.8 | 10 | 84 | 200 | 900 | 1 | 8.9 | 45 | Yes | 548 | Comp. Ex. |
| 14 | C | 80 | 0.8 | 20 | 85 | 800 | 700 | 0 | Undetectable due to incomplete hardening | Undetectable due to incomplete hardening | Yes | 229 | Comp. Ex. |
| 15 | C | 80 | 0.8 | 20 | 86 | 800 | 1050 | 1 | 15.5 | 50 | Yes | 535 | Comp. Ex. |
| 16 | D | 80 | 0.8 | 20 | 79 | 800 | 890 | 1 | 4.5 | 15 | Yes | 830 | Inv. Ex. |
| 17 | E | 80 | 0.7 | 20 | 9 | 800 | 890 | 1 | 7.5 | 45 | Yes | 463 | Comp. Ex. |

Continued from Table 7-1

| | F | 80 | 0.7 | 20 | 75 | 800 | 890 | 1 | 4.5 | 35 | Yes | 540 | Comp. Ex. |
|---|---|---|---|---|---|---|---|---|---|---|---|---|---|
| 18 | F | 80 | 0.7 | 20 | 75 | 800 | 890 | 1 | 4.5 | 35 | Yes | 540 | Comp. Ex. |
| 19 | G | 80 | 0.7 | 20 | 70 | 800 | 890 | 1 | 4.8 | 32 | Yes | 651 | Comp. Ex. |
| 20 | H | 80 | 0.7 | 20 | 10 | 800 | 890 | 1 | 4.2 | 35 | Yes | 456 | Comp. Ex. |
| 21 | A | 80 | 0.8 | 20 | 75 | 2000 | 800 | 1 | 2.8 | 9 | Yes | 789 | Inv. Ex. |
| 22 | I | 80 | 0.8 | 20 | 68 | 800 | 890 | 1 | 4.2 | 12 | Yes | 783 | Inv. Ex. |
| 23 | J | 80 | 0.8 | 20 | 82 | 800 | 890 | 1 | 4.3 | 12 | Yes | 785 | Inv. Ex. |
| 24 | K | 80 | 0.8 | 20 | 79 | 800 | 890 | 1 | 3.9 | 11 | Yes | 787 | Inv. Ex. |
| 25 | L | 80 | 0.8 | 20 | 79 | 800 | 890 | 1 | 4.3 | 12 | Yes | 789 | Inv. Ex. |
| 26 | M | 80 | 0.8 | 20 | 79 | 800 | 890 | 1 | 4.2 | 12 | Yes | 791 | Inv. Ex. |
| 27 | N | 80 | 0.8 | 20 | 79 | 800 | 890 | 1 | 4.3 | 12 | Yes | 794 | Inv. Ex. |

*2: If value in the column is zero, the spline is formed by cutting. Otherwise, the spline is formed by rolling and the figure in the column indicates the processing ratio.

Rel. Ex.: Example of related art,     Inv. Ex.: Example of the present invention     Comp. Ex.: Comparative example

Table 7-2

| No. | Steel type | Hot-working conditions | | Total processing ratio (%) at less than 800°C *2 | Pre-hardening structure | HF hardening conditions | | | Hardened layer structure | | Tempering | Torsional fatigue strength (×10⁵)(MPa) | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
| 28 | O | 80 | 0.8 | 20 | 72 | 800 | 890 | 1 | 3.9 | 11 | Yes | 797 | Inv. Ex. |
| 29 | P | 80 | 0.8 | 20 | 79 | 800 | 890 | 1 | 4.3 | 12 | Yes | 800 | Inv. Ex. |
| 30 | Q | 80 | 0.8 | 20 | 79 | 800 | 890 | 1 | 3.8 | 10 | Yes | 803 | Inv. Ex. |
| 31 | R | 80 | 0.8 | 20 | 79 | 800 | 890 | 1 | 4.3 | 12 | Yes | 806 | Inv. Ex. |
| 32 | S | 80 | 0.8 | 20 | 70 | 800 | 890 | 1 | 4.2 | 12 | Yes | 784 | Inv. Ex. |
| AJ | 0.45 | 0.45 | 0.82 | 0.011 | 0.031 | 0.002 | 0.004 | 0.4Mo, 0.02Ti, 0.0020B,0.003 Ca | 26.9 | 12 | Yes | 813 | Inv. Ex. |
| AK | 0.43 | 0.51 | 0.79 | 0.011 | 0.06 | 0.002 | 0.0039 | 0.45Mo, 0.021Ti, 0.0020B,0.003 Ca | 22.6 | 13 | Yes | 783 | Inv. Ex. |
| 35 | V | 80 | 0.8 | 20 | 79 | 800 | 890 | 1 | 4.3 | 12 | Yes | 804 | Inv. Ex. |
| 36 | W | 80 | 0.8 | 20 | 79 | 800 | 890 | 1 | 3.8 | 10 | Yes | 830 | Inv. Ex. |
| 37 | X | 80 | 0.8 | 20 | 79 | 800 | 890 | 1 | 4.3 | 12 | Yes | 794 | Inv. Ex. |
| 38 | Y | 80 | 0.8 | 20 | 79 | 800 | 890 | 1 | 4.2 | 12 | Yes | 797 | Inv. Ex. |
| 39 | Z | 80 | 0.8 | 20 | 79 | 800 | 890 | 1 | 4.3 | 12 | Yes | 800 | Inv. Ex. |
| 40 | AA | 80 | 0.8 | 20 | 85 | 800 | 890 | 1 | 3.9 | 11 | Yes | 803 | Inv. Ex. |
| 41 | AB | 80 | 0.8 | 20 | 79 | 800 | 890 | 1 | 4.3 | 12 | Yes | 806 | Inv. Ex. |
| 42 | AC | 80 | 0.8 | 20 | 80 | 800 | 890 | 1 | 3.8 | 10 | Yes | 784 | Inv. Ex. |
| 43 | AD | 80 | 0.8 | 20 | 79 | 800 | 890 | 1 | 4.3 | 12 | Yes | 813 | Inv. Ex. |
| 44 | AE | 80 | 0.8 | 20 | 79 | 800 | 890 | 1 | 3.9 | 11 | Yes | 794 | Inv. Ex. |

Continued from Table 7-2

| 45 | AF | 80 | 0.8 | 20 | 79 | 800 | 890 | 1 | 4.3 | 12 | Yes | 797 | Inv. Ex. |
|---|---|---|---|---|---|---|---|---|---|---|---|---|---|
| 46 | AG | 80 | 0.8 | 20 | 79 | 800 | 890 | 1 | 3.8 | 10 | Yes | 800 | Inv. Ex. |
| 47 | AH | 80 | 0.8 | 20 | 79 | 800 | 890 | 1 | 4.2 | 12 | Yes | 803 | Inv. Ex. |
| 48 | AI | 80 | 0.8 | 20 | 85 | 800 | 890 | 1 | 3.7 | 10 | Yes | 806 | Inv. Ex. |
| 49 | C | 80 | 0.8 | 50 | 82 | 800 | 880 | 1 | 1.7 | 5 | No | 950 | Inv. Ex. |
| 50 | AJ | 80 | 0.8 | 20 | 83 | 800 | 930 | 2 | 3.1 | 10 | Yes | 810 | Inv. Ex. |
| 51 | AK | 80 | 0.8 | 20 | 81 | 500 | 930 | 3 | 3.9 | 10 | Yes | 780 | Inv. Ex. |
| 52 | AL | 80 | 0.8 | 20 | 81 | 500 | 930 | 3 | 4.0 | 10 | Yes | 770 | Inv. Ex. |

*2: If value in the column is zero, the spline is formed by cutting. Otherwise, the spline is formed by rolling and the figure in the column indicates the processing ratio.

Rel. Ex.: Example of related art,     Inv. Ex.: Example of the present invention     Comp. Ex.: Comparative example

Tables 6-1, 6-2, 7-1, and 7-2 clearly show that every constant velocity joint outer race with a hardened structure in which the average former austenitic grain diameter was 12 $\mu$m or less and the maximum grain diameter did not exceed four times the average grain diameter exhibited excellent rolling fatigue properties and torsional fatigue strength.

In contrast, the constant velocity joint outer races with an average former austenitic grain diameter exceeding 12 $\mu$m and a maximum grain diameter exceeding four times the average grain diameter exhibited poor rolling fatigue and torsional fatigue properties.

EXAMPLE 4

A constant velocity joint 12 shown in Fig. 14 for transmitting power from a drive shaft 10 to a hub 11 of a wheel was prepared as the component for a machine structural use according to the present invention.

The constant velocity joint 12 was a combination of an outer race 13 and an inner race 14. In particular, the inner race 14 was movably fixed to the inner side of a mouth 13a of the outer race 13 via balls 15 fit in a ball tracking groove in the inner surface of the mouth 13a and was connected to the drive shaft 10; meanwhile, a stem 13b of the outer race 13 was for example splined to the hub 11 to transmit power from the drive shaft 10 to the hub 11 of the wheel.

Each of steel materials having compositions shown in Table 3 was melted in a converter and cast into a cast slab by continuous casting. The size of the cast slab was 300 $\times$ 400 [mm]. The cast slab was subjected to a breakdown step and rolled into a 150 mm square billet. The billet was then rolled to prepare a steel bar having a diameter of 55 mm.

Next, the steel bar was cut to a predetermined length and formed into a constant velocity joint inner race (outer diameter: 45 mm, inner diameter: 20 mm) by hot-forging. The fitting surface thereof was cut or rolled to form riffles for splining. A surface for contact rolling with balls was formed by cutting or cold forging. The cooling conditions after the hot-forging are shown in Tables 8-1, 8-2, 9-1, and 9-2. The total processing ratio in the hot-forging and cold forging was adjusted by controlling the reduction ratio of area of a cross-section taken in the direction orthogonal to the axis direction of the contact rolling surface.

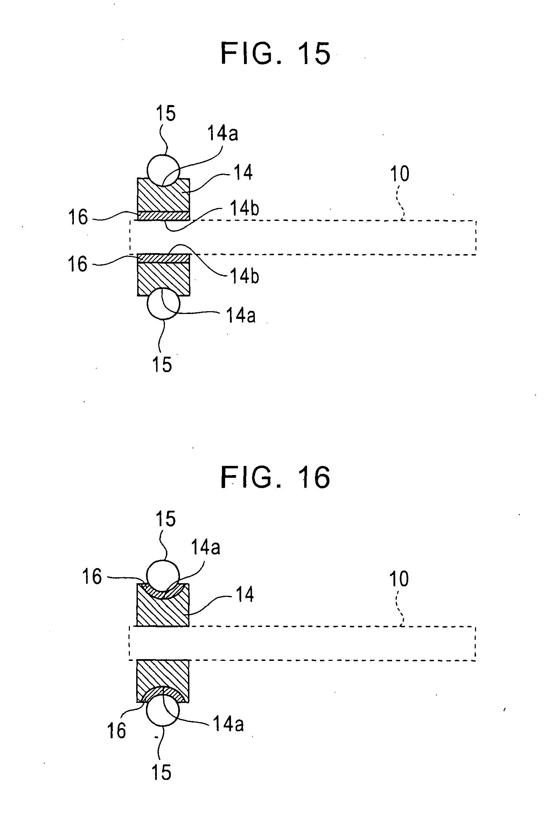

As shown in Fig. 15 or 16, a fitting surface 14b of the constant velocity joint inner race into which the drive shaft fits and a contact rolling surface 14a onto which the balls interposed between the inner race and the constant velocity joint outer race make rolling contact were hardened with a 15 Hz high-frequency hardening apparatus under the conditions set forth in Tables 8-1, 8-2, 9-1, and 9-2 to thereby form a hardened structure layer 16. Subsequently, tempering at 180°C was conducted for 2 hours in a heating furnace to harden the layer. The tempering was omitted for some of the constant velocity joints. The drive shaft was fitted to the fitting surface of the resulting constant velocity joint inner race, and the constant velocity joint inner race was attached to the mouth of the constant velocity joint outer race via balls (steel balls). The stem of the constant velocity joint outer race was fit to the hub to prepare a constant velocity joint unit (see Fig. 11). The specifications for the balls, the outer race, the drive shaft, and the hub were as follows:

balls: hardened and tempered high-carbon chromium bearing steel SUJ2
outer race: high-frequency hardened, tempered carburized steel for machine structural use
hub: high-frequency hardened, tempered carburized steel for machine structural use
drive shaft: high-frequency hardened, tempered carburized steel for machine structural use

Next, using this constant velocity joint, the endurance test for determining rolling fatigue strength was conducted for those in which the fitting surface with the drive shaft was subjected to high-frequency hardening, and the endurance test for determining torsional fatigue strength was conducted for those in which the contact rolling surface with the balls was subjected to high-frequency hardening, both the tests being conducted in a power transmission system for transmitting the rotary action of the drive shaft to the hub through the inner race of the constant velocity joint.

In the rolling fatigue test, power transmission was conducted at a torque of 900 N·m, a working angle (the angle defined by the axis line of the inner race and the axis line of the drive shaft) of 20°, and a number of revolution of 300 rpm. The time taken until separation occurred in the contact rolling surface of the constant velocity joint inner race was evaluated as the rolling fatigue strength. The dimensions and shape of the drive shaft, the constant velocity joint outer race, and the like were adjusted so that the constant velocity joint inner race was the weakest portion in the endurance test.

The constant velocity joint inner races prepared under the same conditions were analyzed to determine the average diameter and the maximum diameter of the former austenitic grains in the hardened layers by the above-described process.

The results are shown in Tables 8-1, 8-2, 9-1, and 9-2.

Table 8-1

| No. | Steel type | Hot-working conditions | | Total processing ratio (%) at less than 800°C *3 | Pre-hardening structure | HF hardening conditions | | | Hardened layer structure | | Tempering | Sliding rolling contact fatigue life (hr) | Reference |
|---|---|---|---|---|---|---|---|---|---|---|---|---|---|
| | | Total processing ratio (%) at 800°C to 1000°C | Cooling rate (C°/s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
| 1 | A | 30 | 0.7 | 20 | 73 | 800 | 880 | 1 | 6.5 | 35 | Yes | 79 | Comp. Ex. |
| 2 | A | 80 | 0.8 | 20 | 71 | 800 | 890 | 1 | 4.8 | 9.5 | Yes | 136 | Inv. Ex. |
| 3 | A | 80 | 0.7 | 50 | 72 | 800 | 870 | 1 | 2.5 | 5.3 | Yes | 147 | Inv. Ex. |
| 4 | A | 80 | 0.06 | 20 | 4 | 800 | 910 | 1 | 13.5 | 40 | Yes | 79 | Comp. Ex. |
| 5 | A | 80 | 0.8 | 0 | 72 | 800 | 890 | 1 | 7.5 | 48 | Yes | 80 | Comp. Ex. |
| 6 | B | 80 | 0.8 | 20 | 75 | 800 | 870 | 1 | 4.8 | 11 | Yes | 147 | Inv. Ex. |
| 7 | C | 30 | 0.7 | 20 | 84 | 800 | 880 | 1 | 5.6 | 30 | Yes | 97 | Comp. Ex. |
| 8 | C | 80 | 0.8 | 0 | 83 | 800 | 880 | 1 | 4.8 | 35 | Yes | 95 | Comp. Ex. |
| 9 | C | 80 | 0.7 | 20 | 85 | 800 | 880 | 1 | 2.5 | 7 | Yes | 146 | Inv. Ex. |
| 10 | C | 80 | 0.8 | 50 | 82 | 800 | 880 | 1 | 1.7 | 5 | Yes | 145 | Inv. Ex. |
| 11 | C | 80 | 0.08 | 20 | 7 | 800 | 880 | 1 | 6.5 | 35 | Yes | 95 | Comp. Ex. |
| 12 | C | 80 | 0.8 | 0 | 86 | 3000 | 880 | 1 | 3.5 | 20 | Yes | 89 | Comp. Ex. |
| 13 | C | 80 | 0.8 | 10 | 84 | 200 | 900 | 1 | 8.9 | 45 | Yes | 88 | Comp. Ex. |
| 14 | C | 80 | 0.8 | 20 | 85 | 800 | 700 | 0 | Undetectable due to incomplete hardening | Undetectable due to incomplete hardening | Yes | 49 | Comp. Ex. |
| 15 | C | 80 | 0.8 | 20 | 86 | 800 | 1050 | 1 | 15.5 | 50 | Yes | 86 | Comp. Ex. |
| 16 | D | 80 | 0.8 | 20 | 79 | 800 | 890 | 1 | 4.5 | 15 | Yes | 148 | Inv. Ex. |
| 17 | E | 80 | 0.7 | 20 | 9 | 800 | 890 | 1 | 7.5 | 45 | Yes | 76 | Comp. Ex. |
| 18 | F | 80 | 0.7 | 20 | 75 | 800 | 890 | 1 | 4.5 | 35 | Yes | 87 | Comp. Ex. |

Continued from Table 8-1

| 19 | G | 80 | 0.7 | 20 | 70 | 800 | 890 | 1 | 4.8 | 32 | Yes | 93 | Comp. Ex. |
|----|---|----|-----|----|----|-----|-----|---|-----|----|-----|-----|-----------|
| 20 | H | 80 | 0.7 | 20 | 10 | 800 | 890 | 1 | 4.2 | 35 | Yes | 73 | Comp. Ex. |
| 21 | A | 80 | 0.8 | 20 | 75 | 2000 | 800 | 1 | 2.8 | 9 | Yes | 135 | Inv. Ex. |
| 22 | I | 80 | 0.8 | 20 | 68 | 800 | 890 | 1 | 4.2 | 12 | Yes | 136 | Inv. Ex. |
| 23 | J | 80 | 0.8 | 20 | 82 | 800 | 890 | 1 | 4.3 | 12 | Yes | 135 | Inv. Ex. |
| 24 | K | 80 | 0.8 | 20 | 79 | 800 | 890 | 1 | 3.9 | 11 | Yes | 137 | Inv. Ex. |
| 25 | L | 80 | 0.8 | 20 | 79 | 800 | 890 | 1 | 4.3 | 12 | Yes | 137 | Inv. Ex. |
| 26 | M | 80 | 0.8 | 20 | 79 | 800 | 890 | 1 | 4.2 | 12 | Yes | 139 | Inv. Ex. |
| 27 | N | 80 | 0.8 | 20 | 79 | 800 | 890 | 1 | 4.3 | 12 | Yes | 139 | Inv. Ex. |

*3: If value in the column is zero, the spline is formed by cutting. Otherwise, the spline is formed by rolling and the figure in the column indicates the processing ratio.

Rel. Ex.: Example of related art,     Inv. Ex.: Example of the present invention     Comp. Ex.: Comparative example

Table 8-2

| No. | Steel type | Hot-working conditions | | Total processing ratio (%) at less than 800°C *3 | Pre-hardening structure | HF hardening conditions | | | Hardened layer structure | | Tempering | Sliding rolling contact fatigue life (hr) | Reference |
|---|---|---|---|---|---|---|---|---|---|---|---|---|---|
| | | Total processing ratio (%) at 800°C to 1000°C | Cooling rate (°C /s) after working | | Proportion (vol.%) of bainite structure | Heating rate (°C/s) | Heating temperature (°C) | Retention time (sec) at 800°C or more | Average former austenitic grain diameter (μm) | Maximum former austenitic grain diameter (μm) | | | |
| 28 | O | 80 | 0.8 | 20 | 72 | 800 | 890 | 1 | 3.9 | 11 | Yes | 139 | Inv. Ex. |
| 29 | P | 80 | 0.8 | 20 | 79 | 800 | 890 | 1 | 4.3 | 12 | Yes | 140 | Inv. Ex. |
| 30 | Q | 80 | 0.8 | 20 | 79 | 800 | 890 | 1 | 3.8 | 10 | Yes | 141 | Inv. Ex. |
| 31 | R | 80 | 0.8 | 20 | 79 | 800 | 890 | 1 | 4.3 | 12 | Yes | 142 | Inv. Ex. |
| 32 | S | 80 | 0.8 | 20 | 70 | 800 | 890 | 1 | 4.2 | 12 | Yes | 142 | Inv. Ex. |
| AJ | 0.45 | 0.45 | 0.82 | 0.011 | 0.031 | 0.002 | 0.004 | 0.4Mo, 0.02Ti, 0.0020B,0.003 Ca | 26.9 | 12 | Yes | 143 | Inv. Ex. |
| AK | 0.43 | 0.51 | 0.79 | 0.011 | 0.06 | 0.002 | 0.0039 | 0.45Mo, 0.021Ti, 0.0020B,0.003 Ca | 22.6 | 13 | Yes | 136 | Inv. Ex. |
| 35 | V | 80 | 0.8 | 20 | 79 | 800 | 890 | 1 | 4.3 | 12 | Yes | 139 | Inv. Ex. |
| 36 | W | 80 | 0.8 | 20 | 79 | 800 | 890 | 1 | 3.8 | 10 | Yes | 149 | Inv. Ex. |
| 37 | X | 80 | 0.8 | 20 | 79 | 800 | 890 | 1 | 4.3 | 12 | Yes | 139 | Inv. Ex. |
| 38 | Y | 80 | 0.8 | 20 | 79 | 800 | 890 | 1 | 4.2 | 12 | Yes | 140 | Inv. Ex. |
| 39 | Z | 80 | 0.8 | 20 | 79 | 800 | 890 | 1 | 4.3 | 12 | Yes | 140 | Inv. Ex. |
| 40 | AA | 80 | 0.8 | 20 | 85 | 800 | 890 | 1 | 3.9 | 11 | Yes | 141 | Inv. Ex. |
| 41 | AB | 80 | 0.8 | 20 | 79 | 800 | 890 | 1 | 4.3 | 12 | Yes | 143 | Inv. Ex. |
| 42 | AC | 80 | 0.8 | 20 | 80 | 800 | 890 | 1 | 3.8 | 10 | Yes | 136 | Inv. Ex. |
| 43 | AD | 80 | 0.8 | 20 | 79 | 800 | 890 | 1 | 4.3 | 12 | Yes | 143 | Inv. Ex. |
| 44 | AE | 80 | 0.8 | 20 | 79 | 800 | 890 | 1 | 3.9 | 11 | Yes | 140 | Inv. Ex. |

Continued from Table 8-2

| 45 | AF | 80 | 0.8 | 20 | 79 | 800 | 890 | 1 | 4.3 | 12 | Yes | 139 | Inv. Ex. |
|----|----|----|-----|----|----|-----|-----|---|-----|----|-----|-----|----------|
| 46 | AG | 80 | 0.8 | 20 | 79 | 800 | 890 | 1 | 3.8 | 10 | Yes | 140 | Inv. Ex. |
| 47 | AH | 80 | 0.8 | 20 | 79 | 800 | 890 | 1 | 4.2 | 12 | Yes | 141 | Inv. Ex. |
| 48 | AI | 80 | 0.8 | 20 | 85 | 800 | 890 | 1 | 3.7 | 10 | Yes | 140 | Inv. Ex. |
| 49 | C | 80 | 0.8 | 50 | 82 | 800 | 880 | 1 | 1.7 | 5 | No | 160 | Inv. Ex. |
| 50 | AJ | 80 | 0.8 | 20 | 83 | 800 | 930 | 2 | 3.1 | 10 | Yes | 145 | Inv. Ex. |
| 51 | AK | 80 | 0.8 | 20 | 81 | 500 | 930 | 3 | 3.9 | 10 | Yes | 138 | Inv. Ex. |
| 52 | AL | 80 | 0.8 | 20 | 81 | 500 | 930 | 3 | 4.0 | 10 | Yes | 135 | Inv. Ex. |

*3: If value in the column is zero, the spline is formed by cutting. Otherwise, the spline is formed by rolling and the figure in the column indicates the processing ratio.

Rel. Ex.: Example of related art,     Inv. Ex.: Example of the present invention     Comp. Ex.: Comparative example

Table 9-1

| No. | Steel type | Hot-working conditions | | Total processing ratio (%) at less than 800°C *4 | Pre-hardening structure Proportion (vol.%) of bainite structure | HF hardening conditions | | | Hardened layer structure | | Tempering | Rolling fatigue life (hr) | Reference |
|---|---|---|---|---|---|---|---|---|---|---|---|---|---|
| | | Total processing ratio (%) at 800°C to 1000°C | Cooling rate (°C/s) after working | | | Heating rate (°C/s) | Heating temperature (°C) | Retention time (sec) at 800°C or more | Average former austenitic grain diameter (μm) | Maximum former austenitic grain diameter (μm) | | | |
| 1 | A | 30 | 0.7 | 20 | 73 | 800 | 880 | 1 | 6.5 | 35 | Yes | 79 | Comp. Ex. |
| 2 | A | 80 | 0.8 | 20 | 71 | 800 | 890 | 1 | 4.8 | 9.5 | Yes | 136 | Inv. Ex. |
| 3 | A | 80 | 0.7 | 50 | 72 | 800 | 870 | 1 | 2.5 | 5.3 | Yes | 147 | Inv. Ex. |
| 4 | A | 80 | 0.06 | 20 | 4 | 800 | 910 | 1 | 13.5 | 40 | Yes | 79 | Comp. Ex. |
| 5 | A | 80 | 0.8 | 0 | 72 | 800 | 890 | 1 | 7.5 | 48 | Yes | 81 | Comp. Ex. |
| 6 | B | 80 | 0.8 | 20 | 75 | 800 | 870 | 1 | 4.8 | 11 | Yes | 145 | Inv. Ex. |
| 7 | C | 30 | 0.7 | 20 | 84 | 800 | 880 | 1 | 5.6 | 30 | Yes | 99 | Comp. Ex. |
| 8 | C | 80 | 0.8 | 0 | 83 | 800 | 880 | 1 | 4.8 | 35 | Yes | 97 | Comp. Ex. |
| 9 | C | 80 | 0.7 | 20 | 85 | 800 | 880 | 1 | 2.5 | 7 | Yes | 145 | Inv. Ex. |
| 10 | C | 80 | 0.8 | 50 | 82 | 800 | 880 | 1 | 1.7 | 5 | Yes | 155 | Inv. Ex. |
| 11 | C | 80 | 0.08 | 20 | 7 | 800 | 880 | 1 | 6.5 | 35 | Yes | 96 | Comp. Ex. |
| 12 | C | 80 | 0.8 | 0 | 86 | 3000 | 880 | 1 | 3.5 | 20 | Yes | 89 | Comp. Ex. |
| 13 | C | 80 | 0.8 | 10 | 84 | 200 | 900 | 1 | 8.9 | 45 | Yes | 88 | Comp. Ex. |
| 14 | C | 80 | 0.8 | 20 | 85 | 800 | 700 | 0 | Undetectable due to incomplete hardening | Undetectable due to incomplete hardening | Yes | 48 | Comp. Ex. |
| 15 | C | 80 | 0.8 | 20 | 86 | 800 | 1050 | 1 | 15.5 | 50 | Yes | 87 | Comp. Ex. |
| 16 | D | 80 | 0.8 | 20 | 79 | 800 | 890 | 1 | 4.5 | 15 | Yes | 147 | Inv. Ex. |
| 17 | E | 80 | 0.7 | 20 | 9 | 800 | 890 | 1 | 7.5 | 45 | Yes | 76 | Comp. Ex. |
| 18 | F | 80 | 0.7 | 20 | 75 | 800 | 890 | 1 | 4.5 | 35 | Yes | 88 | Comp. Ex. |

Continued from Table 9-1

| 19 | G | 80 | 0.7 | 20 | 70 | 800 | 890 | 1 | 4.8 | 32 | Yes | 97 | Comp. Ex. |
|---|---|---|---|---|---|---|---|---|---|---|---|---|---|
| 20 | H | 80 | 0.7 | 20 | 10 | 800 | 890 | 1 | 4.2 | 35 | Yes | 75 | Comp. Ex. |
| 21 | A | 80 | 0.8 | 20 | 75 | 2000 | 800 | 1 | 2.8 | 9 | Yes | 136 | Inv. Ex. |
| 22 | I | 80 | 0.8 | 20 | 68 | 800 | 890 | 1 | 4.2 | 12 | Yes | 136 | Inv. Ex. |
| 23 | J | 80 | 0.8 | 20 | 82 | 800 | 890 | 1 | 4.3 | 12 | Yes | 136 | Inv. Ex. |
| 24 | K | 80 | 0.8 | 20 | 79 | 800 | 890 | 1 | 3.9 | 11 | Yes | 137 | Inv. Ex. |
| 25 | L | 80 | 0.8 | 20 | 79 | 800 | 890 | 1 | 4.3 | 12 | Yes | 137 | Inv. Ex. |
| 26 | M | 80 | 0.8 | 20 | 79 | 800 | 890 | 1 | 4.2 | 12 | Yes | 138 | Inv. Ex. |
| 27 | N | 80 | 0.8 | 20 | 79 | 800 | 890 | 1 | 4.3 | 12 | Yes | 139 | Inv. Ex. |
| 28 | O | 80 | 0.8 | 20 | 72 | 800 | 890 | 1 | 3.9 | 11 | Yes | 139 | Inv. Ex. |
| 29 | P | 80 | 0.8 | 20 | 79 | 800 | 890 | 1 | 4.3 | 12 | Yes | 139 | Inv. Ex. |

*4: If the value in the column is zero, the rolling-contact surface for balls is formed by cutting. Otherwise, the rolling-contact surface for balls is formed by cold-forging and the figure in the column indicates the processing ratio.

Rel. Ex.: Example of related art,    Inv. Ex.: Example of the present invention    Comp. Ex.: Comparative example

Table 9-2

| No. | Steel type | Hot-working conditions | | Total processing ratio (%) at less than 800°C *4 | Pre-hardening structure | HF hardening conditions | | | Hardened layer structure | | Tempering | Rolling fatigue life (hr) | Reference |
| | | Total processing ratio (%) at 800°C to 1000°C | Cooling rate (°C/s) after working | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
|---|---|---|---|---|---|---|---|---|---|---|---|---|---|
| 30 | Q | 80 | 0.8 | 20 | 79 | 800 | 890 | 1 | 3.8 | 10 | Yes | 141 | Inv. Ex. |
| 31 | R | 80 | 0.8 | 20 | 79 | 800 | 890 | 1 | 4.3 | 12 | Yes | 141 | Inv. Ex. |
| 32 | S | 80 | 0.8 | 20 | 70 | 800 | 890 | 1 | 4.2 | 12 | Yes | 136 | Inv. Ex. |
| AJ | 0.45 | 0.45 | 0.82 | 0.011 | 0.031 | 0.002 | 0.004 | 0.4Mo, 0.02Ti, 0.0020B,0.003 Ca | 26.9 | 12 | Yes | 143 | Inv. Ex. |
| AK | 0.43 | 0.51 | 0.79 | 0.011 | 0.06 | 0.002 | 0.0039 | 0.45Mo, 0.021Ti, 0.0020B,0.003 Ca | 22.6 | 13 | Yes | 136 | Inv. Ex. |
| 35 | V | 80 | 0.8 | 20 | 79 | 800 | 890 | 1 | 4.3 | 12 | Yes | 141 | Inv. Ex. |
| 36 | W | 80 | 0.8 | 20 | 79 | 800 | 890 | 1 | 3.8 | 10 | Yes | 147 | Inv. Ex. |
| 37 | X | 80 | 0.8 | 20 | 79 | 800 | 890 | 1 | 4.3 | 12 | Yes | 139 | Inv. Ex. |
| 38 | Y | 80 | 0.8 | 20 | 79 | 800 | 890 | 1 | 4.2 | 12 | Yes | 139 | Inv. Ex. |
| 39 | Z | 80 | 0.8 | 20 | 79 | 800 | 890 | 1 | 4.3 | 12 | Yes | 140 | Inv. Ex. |
| 40 | AA | 80 | 0.8 | 20 | 85 | 800 | 890 | 1 | 3.9 | 11 | Yes | 141 | Inv. Ex. |
| 41 | AB | 80 | 0.8 | 20 | 79 | 800 | 890 | 1 | 4.3 | 12 | Yes | 142 | Inv. Ex. |
| 42 | AC | 80 | 0.8 | 20 | 80 | 800 | 890 | 1 | 3.8 | 10 | Yes | 136 | Inv. Ex. |
| 43 | AD | 80 | 0.8 | 20 | 79 | 800 | 890 | 1 | 4.3 | 12 | Yes | 143 | Inv. Ex. |
| 44 | AE | 80 | 0.8 | 20 | 79 | 800 | 890 | 1 | 3.9 | 11 | Yes | 138 | Inv. Ex. |
| 45 | AF | 80 | 0.8 | 20 | 79 | 800 | 890 | 1 | 4.3 | 12 | Yes | 139 | Inv. Ex. |

Continued from Table 9-2

| 46 | AG | 80 | 0.8 | 20 | 79 | 800 | 890 | 1 | 3.8 | 10 | Yes | 139 | Inv. Ex. |
|----|----|----|-----|----|----|-----|-----|---|-----|----|------|-----|----------|
| 47 | AH | 80 | 0.8 | 20 | 79 | 800 | 890 | 1 | 4.2 | 12 | Yes | 141 | Inv. Ex. |
| 48 | AI | 80 | 0.8 | 20 | 85 | 800 | 890 | 1 | 3.7 | 10 | Yes | 141 | Inv. Ex. |
| 49 | C  | 80 | 0.8 | 50 | 82 | 800 | 880 | 1 | 1.7 | 5  | No   | 170 | Inv. Ex. |
| 50 | AJ | 80 | 0.8 | 20 | 83 | 800 | 930 | 2 | 3.1 | 10 | Yes  | 142 | Inv. Ex. |
| 51 | AK | 80 | 0.8 | 20 | 81 | 500 | 930 | 3 | 3.9 | 10 | Yes  | 137 | Inv. Ex. |
| 52 | AL | 80 | 0.8 | 20 | 81 | 500 | 930 | 3 | 4.0 | 10 | Yes  | 135 | Inv. Ex. |

*4: If the value in the column is zero, the rolling-contact surface for balls is formed by cutting. Otherwise, the rolling-contact surface for balls is formed by cold-forging and the figure in the column indicates the processing ratio.

Rel. Ex.: Example of related art,      Inv. Ex.: Example of the present invention      Comp. Ex.: Comparative example

Tables 8-1, 8-2, 9-1, and 9-2 clearly show that every constant velocity joint inner race with a hardened structure in which the average former austenitic grain diameter was 12 $\mu$m or less and the maximum grain diameter did not exceed four times the average grain diameter exhibited excellent fatigue properties.

In contrast, the constant velocity joint inner races with an average former austenitic grain diameter exceeding 12 $\mu$m and a maximum grain diameter exceeding four times the average grain diameter exhibited poor fatigue properties.

EXAMPLE 5

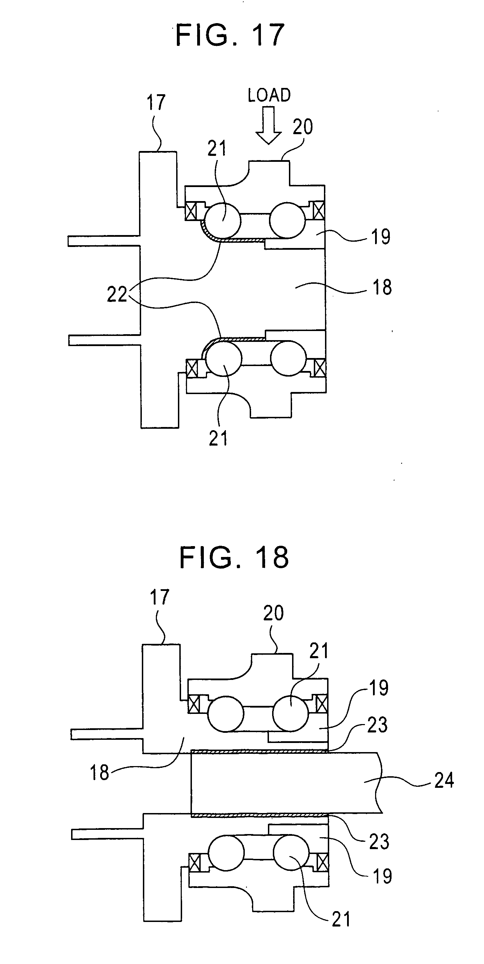

A hub shown in Fig. 17 for an automobile wheel was prepared as a component for machine structural use according to the present invention.

A hub 17 for an automobile wheel has a shaft 18 also serving as the inner race of a bearing and constitutes the bearing via balls 21 interposed between an outer race 20 and the outer surface of the shaft 18. In Fig. 17, reference numeral 19 denotes a spacer for retaining the balls 21 between the shaft 18 of the hub and the outer race 20. In the illustration of Fig. 17, the outer surface (contact rolling surface) 22 onto which the balls serving as a bearing for the hub make rolling contact requires improved rolling fatigue life.

Each of steel materials having compositions shown in Table 3 was melted in a converter and cast into a cast slab by continuous casting. The size of the cast slab was 300 $\times$ 400 [mm]. The cast slab was subjected to a breakdown step and rolled into a 150 mm square billet. The billet was then rolled to prepare a steel bar having a diameter of 24 mm. The steel bar was then cut to a predetermined length, formed into the shape of a hub by hot-forging, and cooled at a cooling rate set forth in Tables 10-1 and 10-2. The outer surface onto which the bearing balls for the hub shaft make rolling contact was formed by cutting or cold forging and subjected to high-frequency hardening under the conditions set forth in Tables 10-1 and 10-2 to form a hardened structure layer. Then the hub was tempered at 170°C for 30 minutes in a heating furnace and subjected to finishing to prepare a product. Tempering was omitted for some of the hubs. The total processing ratio in the hot-forging and cold forging was controlled by adjusting the ratio of change in area of the cross-section taken in the direction orthogonal to the axis direction of the contact rolling surface.

The rolling fatigue life of each resulting hub was analyzed and the results are shown in Tables 10-1 and 10-2.

The rolling fatigue life of the hub was evaluated as follows.

Bearing balls were arranged on the outer surface of the shaft of the hub, and an outer race was attached. While fixing the hub, a predetermined load (900 N) was applied onto the outer race 20 of the hub as shown in Fig. 17 and the outer race 20 of the hub was rotated at a predetermined rate (300 rpm) to conduct the endurance test. The time taken until occurrence of the rolling fatigue fracture of a high-frequency hardened structure layer 22 was evaluated as the rolling fatigue life.

The rolling fatigue life was indicated in terms of the ratio with respect to the rolling fatigue life of Sample No. 22, which is a related-art sample prepared under the hot working and high-frequency hardening conditions outside the range of the present invention, in Tables 10-1 and 10-2, the rolling fatigue life of the related-art sample being defined as 1.

Here, the dimensions and shape of the outer race, steel balls, and the like were adjusted so that the shaft contact rolling surface of the hub was the weakest part in the endurance test.

The same hub was analyzed to determine the average diameter and the maximum diameter of the former austenitic grains in the hardened structure layer by the above-described process.

The results are also shown in Tables 10-1 and 10-2.

Table 10-1

| No. | Steel type | Hot-working conditions | | Working (cold-working) ratio (%) at less than 800°C *5 | Pre-hardening structure | HF hardening conditions | | | Hardened layer structure | | Tempering | Rolling fatigue life | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
| 1 | A | 30 | 0.7 | 20 | 73 | 800 | 880 | 1 | 6.5 | 35 | Yes | 2.5 | Comp. Ex. |
| 2 | A | 80 | 0.8 | 20 | 71 | 800 | 890 | 1 | 4.8 | 9.5 | Yes | 10.1 | Inv. Ex. |
| 3 | A | 80 | 0.7 | 50 | 72 | 800 | 870 | 1 | 2.5 | 5.3 | Yes | 12.3 | Inv. Ex. |
| 4 | A | 80 | 0.06 | 20 | 4 | 800 | 910 | 1 | 13.5 | 40 | Yes | 2.6 | Comp. Ex. |
| 5 | A | 80 | 0.8 | 0 | 72 | 800 | 890 | 1 | 7.5 | 48 | Yes | 2.6 | Comp. Ex. |
| 6 | B | 80 | 0.8 | 20 | 6 | 800 | 870 | 1 | 4.8 | 11 | Yes | 12.4 | Inv. Ex. |
| 7 | C | 30 | 0.7 | 20 | 84 | 800 | 880 | 1 | 5.6 | 30 | Yes | 4.3 | Comp. Ex. |
| 8 | C | 80 | 0.8 | 0 | 83 | 800 | 880 | 1 | 4.8 | 35 | Yes | 4.1 | Comp. Ex. |
| 9 | C | 80 | 0.7 | 20 | 85 | 800 | 880 | 1 | 2.5 | 7 | Yes | 12.1 | Inv. Ex. |
| 10 | C | 80 | 0.8 | 50 | 82 | 800 | 880 | 1 | 1.7 | 5 | Yes | 12.3 | Inv. Ex. |
| 11 | C | 80 | 0.08 | 20 | 7 | 800 | 880 | 1 | 6.5 | 35 | Yes | 4.1 | Comp. Ex. |
| 12 | C | 80 | 0.8 | 0 | 86 | 3000 | 880 | 1 | 3.5 | 20 | Yes | 3.4 | Comp. Ex. |
| 13 | C | 80 | 0.8 | 10 | 84 | 200 | 900 | 1 | 8.9 | 45 | Yes | 3.4 | Comp. Ex. |
| 14 | C | 80 | 0.8 | 20 | 85 | 800 | 700 | 0 | Undetectable due to incomplete hardening | Undetectable due to incomplete hardening | Yes | 0.8 | Comp. Ex. |
| 15 | C | 80 | 0.8 | 20 | 86 | 800 | 1050 | 1 | 15.5 | 50 | Yes | 3.2 | Comp. Ex. |
| 16 | D | 80 | 0.8 | 20 | 79 | 800 | 890 | 1 | 4.5 | 15 | Yes | 12.5 | Inv. Ex. |
| 17 | E | 80 | 0.7 | 20 | 9 | 800 | 890 | 1 | 7.5 | 45 | Yes | 2.3 | Comp. Ex. |
| 18 | F | 80 | 0.7 | 20 | 75 | 800 | 890 | 1 | 4.5 | 35 | Yes | 3.3 | Comp. Ex. |

EP 1 741 798 A1

52

Continued from Table 10-1

| | | | | | | | | | | | | |
|---|---|---|---|---|---|---|---|---|---|---|---|---|
| 19 | G | 80 | 0.7 | 20 | 70 | 800 | 890 | 1 | 4.8 | 32 | Yes | 3.9 | Comp. Ex. |
| 20 | H | 80 | 0.7 | 20 | 10 | 800 | 890 | 1 | 4.2 | 35 | Yes | 2.1 | Comp. Ex. |
| 21 | A | 80 | 0.8 | 20 | 75 | 2000 | 800 | 1 | 2.8 | 9 | Yes | 4.0 | Comp. Ex. |
| 22 | A | 80 | 0.1 | 0 | 0 | 200 | 1050 | 7 | 17 | 88 | Yes | 1.0 | Rel. Ex. |
| 23 | I | 80 | 0.8 | 20 | 68 | 800 | 890 | 1 | 4.2 | 12 | Yes | 10.1 | Inv. Ex. |
| 24 | J | 80 | 0.8 | 20 | 82 | 800 | 890 | 1 | 4.3 | 12 | Yes | 10.1 | Inv. Ex. |
| 25 | K | 80 | 0.8 | 20 | 79 | 800 | 890 | 1 | 3.9 | 11 | Yes | 10.3 | Inv. Ex. |
| 26 | L | 80 | 0.8 | 20 | 79 | 800 | 890 | 1 | 4.3 | 12 | Yes | 10.4 | Inv. Ex. |
| 27 | M | 80 | 0.8 | 20 | 79 | 800 | 890 | 1 | 4.2 | 12 | Yes | 10.7 | Inv. Ex. |
| 28 | N | 80 | 0.8 | 20 | 79 | 800 | 890 | 1 | 4.3 | 12 | Yes | 10.6 | Inv. Ex. |

*5: If the value in the column is zero, the rolling-contact surface for balls is formed by cutting. Otherwise, the rolling-contact surface for balls is formed by cold-forging and the figure in the column indicates the processing ratio.

Rel. Ex.: Example of related art,  Inv. Ex.: Example of the present invention  Comp. Ex.: Comparative example

Table 10-2

| No. | Steel type | Hot-working conditions | | Working (cold-working) ratio (%) at less than 800°C *5 | Pre-hardening structure | HF hardening conditions | | | Hardened layer structure | | Tempering | Rolling fatigue life | Reference |
| | | Total processing ratio (%) at 800°C to 1000°C | Cooling rate (°C/s) after working | | Proportion (vol.%) of bainite structure | Heating rate (°C/s) | Heating temperature (°C) | Retention time (sec) at 800°C or more | Average former austenitic grain diameter (µm) | Maximum former austenitic grain diameter (µm) | | | |
|---|---|---|---|---|---|---|---|---|---|---|---|---|---|
| 29 | O | 80 | 0.8 | 20 | 72 | 800 | 890 | 1 | 3.9 | 11 | Yes | 10.7 | Inv. Ex. |
| 30 | P | 80 | 0.8 | 20 | 79 | 800 | 890 | 1 | 4.3 | 12 | Yes | 10.9 | Inv. Ex. |
| 31 | Q | 80 | 0.8 | 20 | 79 | 800 | 890 | 1 | 3.8 | 10 | Yes | 11.1 | Inv. Ex. |
| 32 | R | 80 | 0.8 | 20 | 79 | 800 | 890 | 1 | 4.3 | 12 | Yes | 11.3 | Inv. Ex. |
| AJ | 0.45 | 0.45 | 0.82 | 0.011 | 0.031 | 0.002 | 0.004 | 0.4Mo, 0.02Ti, 0.0020B, 0.003 Ca | 26.9 | 12 | Yes | 11.3 | Inv. Ex. |
| AK | 0.43 | 0.51 | 0.79 | 0.011 | 0.06 | 0.002 | 0.0039 | 0.45Mo, 0.021Ti, 0.0020B, 0.003 Ca | 22.6 | 12 | Yes | 11.5 | Inv. Ex. |
| 35 | U | 80 | 0.8 | 20 | 79 | 800 | 890 | 1 | 4.5 | 13 | Yes | 10.1 | Inv. Ex. |
| 36 | V | 80 | 0.8 | 20 | 79 | 800 | 890 | 1 | 4.3 | 12 | Yes | 10.7 | Inv. Ex. |
| 37 | W | 80 | 0.8 | 20 | 79 | 800 | 890 | 1 | 3.8 | 10 | Yes | 12.7 | Inv. Ex. |
| 38 | X | 80 | 0.8 | 20 | 79 | 800 | 890 | 1 | 4.3 | 12 | Yes | 10.6 | Inv. Ex. |
| 39 | Y | 80 | 0.8 | 20 | 79 | 800 | 890 | 1 | 4.2 | 12 | Yes | 10.9 | Inv. Ex. |
| 40 | Z | 80 | 0.8 | 20 | 79 | 800 | 890 | 1 | 4.3 | 12 | Yes | 10.9 | Inv. Ex. |
| 41 | AA | 80 | 0.8 | 20 | 85 | 800 | 890 | 1 | 3.9 | 11 | Yes | 11.1 | Inv. Ex. |
| 42 | AB | 80 | 0.8 | 20 | 79 | 800 | 890 | 1 | 4.3 | 12 | Yes | 11.5 | Inv. Ex. |
| 43 | AC | 80 | 0.8 | 20 | 80 | 800 | 890 | 1 | 3.8 | 10 | Yes | 10.1 | Inv. Ex. |
| 44 | AD | 80 | 0.8 | 20 | 79 | 800 | 890 | 1 | 4.3 | 12 | Yes | 11.5 | Inv. Ex. |
| 45 | AE | 80 | 0.8 | 20 | 79 | 800 | 890 | 1 | 3.9 | 11 | Yes | 10.9 | Inv. Ex. |

Continued from Table 10-2

| 46 | AF | 80 | 0.8 | 20 | 79 | 800 | 890 | 1 | 4.3 | 12 | Yes | 10.7 | Inv. Ex. |
| 47 | AG | 80 | 0.8 | 20 | 79 | 800 | 890 | 1 | 3.8 | 10 | Yes | 10.9 | Inv. Ex. |
| 48 | AH | 80 | 0.8 | 20 | 79 | 800 | 890 | 1 | 4.2 | 12 | Yes | 11.1 | Inv. Ex. |
| 49 | AI | 80 | 0.8 | 20 | 85 | 800 | 890 | 1 | 3.7 | 10 | Yes | 10.9 | Inv. Ex. |
| 49 | C | 80 | 0.8 | 50 | 82 | 800 | 880 | 1 | 1.7 | 5 | No | 13.5 | Inv. Ex. |
| 50 | AJ | 80 | 0.8 | 20 | 83 | 800 | 930 | 2 | 3.1 | 10 | Yes | 11.1 | Inv. Ex. |
| 51 | AK | 80 | 0.8 | 20 | 81 | 500 | 930 | 3 | 3.9 | 10 | Yes | 10.4 | Inv. Ex. |
| 52 | AL | 80 | 0.8 | 20 | 81 | 500 | 930 | 3 | 4.0 | 10 | Yes | 10.3 | Inv. Ex. |

*5: If the value in the column is zero, the rolling-contact surface for balls is formed by cutting. Otherwise, the rolling-contact surface for balls is formed by cold-forging and the figure in the column indicates the processing ratio.

Rel. Ex.: Example of related art,      Inv. Ex.: Example of the present invention      Comp. Ex.: Comparative example

Tables 10-1 and 10-2 clearly show that every hub with a hardened structure in which the average former austenitic grain diameter was 12 $\mu$m or less and the maximum grain diameter did not exceed four times the average grain diameter exhibited a rolling fatigue life at least 10 times that of the related art sample.

In contrast, Comparative Examples with an average former austenitic grain diameter exceeding 12 $\mu$m and a maximum grain diameter exceeding four times the average grain diameter exhibited short rolling fatigue life.

EXAMPLE 6

A hub shown in Fig. 18 was prepared as in EXAMPLE 5 as an component for machine structural use according to the present invention. In particular, each of steel materials having compositions shown in Table 3 was melted in a converter and cast into a cast slab by continuous casting. The size of the cast slab was 300 $\times$ 400 [mm]. The cast slab was subjected to a breakdown step, rolled into a 150 mm square billet, and rolled to prepare a steel bar having a diameter of 24 mm. The steel bar was cut to a predetermined length, formed into a shape of a hub by hot-forging, and cooled at a rate shown in Tables 11-1 and 11-2. Subsequently, the hub shaft was cut or rolled for splining for fitting with the shaft of the constant velocity joint.

The inner surface (fitting portion 23 in Fig. 18) of the hub shaft that fits with the shaft of the constant velocity joint was subjected to high-frequency hardening under the conditions set forth in Tables 10-1 and 10-2 to form a hardened structure layer. The hub was then tempered at 170°C for 30 minutes in a heating furnace and subjected to finishing to prepare a product. Tempering was omitted for some of the hubs. The total processing ratio in the hot-forging and forming rolling was adjusted by controlling the ratio of change in cross-section in the axis direction of the fitting portion of the hub shaft with the constant velocity joint.

The resulting hub was analyzed to determine the sliding rolling contact fatigue life of the inner surface that fits with the constant velocity joint. The results are shown in Tables 11-1 and 11-2.

The sliding rolling contact fatigue life of the hub was evaluated as follows:

Sliding Rolling Contact Fatigue Life

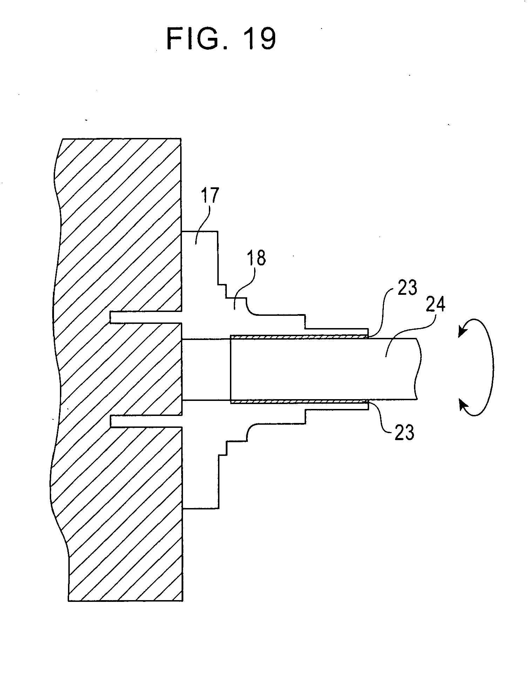

As shown in Fig. 19, a shaft 24 of the constant velocity joint was fit into the inner surface of the shaft of the hub, and while fixing the hub, fully reversed cycles of torsional force were applied to the shaft of the constant velocity joint (maximum torque: 700 N, 2 cycles per second). The number of cycles until occurrence of fracture of the hub spline due to the sliding rolling contact fatigue was evaluated as the fatigue life.

The sliding rolling contact fatigue life was indicated in terms of the ratio with respect to the sliding rolling contact fatigue life of Sample No. 22, which is a related art sample prepared under the hot-working and high-frequency hardening conditions outside the range of the present invention), in Tables 11-1 and 11-2, the sliding rolling contact fatigue life of the related-art sample being defined as 1.

The same hub was analyzed to determine the average diameter and the maximum diameter of the former austenitic grains in the hardened structure layer by the above-described process.

The results are also set forth in Tables 11-1 and 11-2.

Table 11-1

| No. | Steel type | Hot-working conditions | | Working (cold-working) ratio (%) at less than 800°C *6 | Pre-hardening structure | HF hardening conditions | | | Hardened layer structure | | Tempering | Sliding rolling contact fatigue life | Reference |
| | | Total processing ratio (%) at 800°C to 1000°C | Cooling rate (°C/s) after working | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
|---|---|---|---|---|---|---|---|---|---|---|---|---|---|
| 1 | A | 30 | 0.7 | 20 | 73 | 800 | 880 | 1 | 6.5 | <u>35</u> | Yes | 2.5 | Comp. Ex. |
| 2 | A | 80 | 0.8 | 20 | 71 | 800 | 890 | 1 | 4.8 | 9.5 | Yes | 10.3 | Inv. Ex. |
| 3 | A | 80 | 0.7 | 50 | 72 | 800 | 870 | 1 | 2.5 | 5.3 | Yes | 12.3 | Inv. Ex. |
| 4 | A | 80 | 0.06 | 20 | 4 | 800 | 910 | 1 | <u>13.5</u> | 40 | Yes | 2.6 | Comp. Ex. |
| 5 | A | 80 | 0.8 | 0 | 72 | 800 | 890 | 1 | 7.5 | <u>48</u> | Yes | 2.6 | Comp. Ex. |
| 6 | B | 80 | 0.8 | 20 | 75 | 800 | 870 | 1 | 4.8 | 11 | Yes | 12.6 | Inv. Ex. |
| 7 | C | 30 | 0.7 | 20 | 84 | 800 | 880 | 1 | 5.6 | <u>30</u> | Yes | 3.9 | Comp. Ex. |
| 8 | C | 80 | 0.8 | 0 | 83 | 800 | 880 | 1 | 4.8 | <u>35</u> | Yes | 3.9 | Comp. Ex. |
| 9 | C | 80 | 0.7 | 20 | 85 | 800 | 880 | 1 | 2.5 | 7 | Yes | 12.1 | Inv. Ex. |
| 10 | C | 80 | 0.8 | 50 | 82 | 800 | 880 | 1 | 1.7 | 5 | Yes | 12.3 | Inv. Ex. |
| 11 | C | 80 | 0.08 | 20 | 7 | 800 | 880 | 1 | 6.5 | <u>35</u> | Yes | 3.8 | Comp. Ex. |
| 12 | C | 80 | 0.8 | 0 | 86 | 3000 | 880 | 1 | 3.5 | <u>20</u> | Yes | 3.4 | Comp. Ex. |
| 13 | C | 80 | 0.8 | 10 | 84 | 200 | 900 | 1 | 8.9 | <u>45</u> | Yes | 3.3 | Comp. Ex. |
| 14 | C | 80 | 0.8 | 20 | 85 | 800 | 700 | 0 | Undetectable due to incomplete hardening | <u>Undetectable due to incomplete hardening</u> | Yes | 0.5 | Comp. Ex. |
| 15 | C | 80 | 0.8 | 20 | 86 | 800 | 1050 | 1 | <u>15.5</u> | 50 | Yes | 3.2 | Comp. Ex. |
| 16 | D | 80 | 0.8 | 20 | 79 | 800 | 890 | 1 | 4.5 | 15 | Yes | 12.5 | Inv. Ex. |
| 17 | E | 80 | 0.7 | 20 | 9 | 800 | 890 | 1 | 7.5 | <u>45</u> | Yes | 2.3 | Comp. Ex. |
| 18 | F | 80 | 0.7 | 20 | 75 | 800 | 890 | 1 | 4.5 | <u>35</u> | Yes | 3.3 | Comp. Ex. |

Continued from Table 11-1

| 19 | G | 80 | 0.7 | 20 | 70 | 800 | 890 | 1 | 4.8 | <u>32</u> | Yes | 3.9 | Comp. Ex. |
|----|---|----|-----|----|----|-----|-----|---|-----|-----|-----|------|-----------|
| 20 | H | 80 | 0.7 | 20 | 10 | 800 | 890 | 1 | 4.2 | <u>35</u> | Yes | 2.1 | Comp. Ex. |
| 21 | A | 80 | 0.8 | 20 | 75 | 2000 | 800 | 1 | 2.8 | 9 | Yes | 4.0 | Comp. Ex. |
| 22 | A | 80 | 0.1 | 0 | 0 | 200 | 1050 | 7 | 17 | 88 | Yes | 1.0 | Rel. Ex. |
| 23 | I | 80 | 0.8 | 20 | 68 | 800 | 890 | 1 | 4.2 | 12 | Yes | 10.1 | Inv. Ex. |
| 24 | J | 80 | 0.8 | 20 | 82 | 800 | 890 | 1 | 4.3 | 12 | Yes | 10.1 | Inv. Ex. |

*6: If the value in the column is zero, the spline is formed by cutting. Otherwise, the spline is formed by rolling and the figure in the column indicates the processing ratio

Rel. Ex.: Example of related art,      Inv. Ex.: Example of the present invention      Comp. Ex.: Comparative example

EP 1 741 798 A1

Table 11-2

| No. | Steel type | Hot-working conditions | | Working (cold-working) ratio (%) at less than 800°C *6 | Pre-hardening structure | HF hardening conditions | | | Hardened layer structure | | Tempering | Sliding rolling contact fatigue life | Reference |
|---|---|---|---|---|---|---|---|---|---|---|---|---|---|
| | | Total processing ratio (%) at 800°C to 1000°C | Cooling rate (°C/s) after working | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
| 25 | K | 80 | 0.8 | 20 | 79 | 800 | 890 | 1 | 3.9 | 11 | Yes | 10.3 | Inv. Ex. |
| 26 | L | 80 | 0.8 | 20 | 79 | 800 | 890 | 1 | 4.3 | 12 | Yes | 10.4 | Inv. Ex. |
| 27 | M | 80 | 0.8 | 20 | 79 | 800 | 890 | 1 | 4.2 | 12 | Yes | 10.7 | Inv. Ex. |
| 28 | N | 80 | 0.8 | 20 | 79 | 800 | 890 | 1 | 4.3 | 12 | Yes | 10.6 | Inv. Ex. |
| 29 | O | 80 | 0.8 | 20 | 72 | 800 | 890 | 1 | 3.9 | 11 | Yes | 10.3 | Inv. Ex. |
| 30 | P | 80 | 0.8 | 20 | 79 | 800 | 890 | 1 | 4.3 | 12 | Yes | 10.4 | Inv. Ex. |
| 31 | Q | 80 | 0.8 | 20 | 79 | 800 | 890 | 1 | 3.8 | 10 | Yes | 10.7 | Inv. Ex. |
| 32 | R | 80 | 0.8 | 20 | 79 | 800 | 890 | 1 | 4.3 | 12 | Yes | 10.6 | Inv. Ex. |
| AJ | 0.45 | 0.45 | 0.82 | 0.011 | 0.031 | 0.002 | 0.004 | 0.4Mo, 0.02Ti, 0.0020B,0.003 Ca | 26.9 | 12 | Yes | 11.3 | Inv. Ex. |
| AK | 0.43 | 0.51 | 0.79 | 0.011 | 0.06 | 0.002 | 0.0039 | 0.45Mo, 0.021Ti, 0.0020B,0.003 Ca | 22.6 | 12 | Yes | 11.5 | Inv. Ex. |
| 35 | U | 80 | 0.8 | 20 | 79 | 800 | 890 | 1 | 4.5 | 13 | Yes | 10.1 | Inv. Ex. |
| 36 | V | 80 | 0.8 | 20 | 79 | 800 | 890 | 1 | 4.3 | 12 | Yes | 10.7 | Inv. Ex. |
| 37 | W | 80 | 0.8 | 20 | 79 | 800 | 890 | 1 | 3.8 | 10 | Yes | 12.7 | Inv. Ex. |
| 38 | X | 80 | 0.8 | 20 | 79 | 800 | 890 | 1 | 4.3 | 12 | Yes | 10.7 | Inv. Ex. |
| 39 | Y | 80 | 0.8 | 20 | 79 | 800 | 890 | 1 | 4.2 | 12 | Yes | 10.6 | Inv. Ex. |
| 40 | Z | 80 | 0.8 | 20 | 79 | 800 | 890 | 1 | 4.3 | 12 | Yes | 11.3 | Inv. Ex. |
| 41 | AA | 80 | 0.8 | 20 | 85 | 800 | 890 | 1 | 3.9 | 11 | Yes | 11.5 | Inv. Ex. |

Continued from Table 11-2

| 42 | AB | 80 | 0.8 | 20 | 79 | 800 | 890 | 1 | 4.3 | 12 | Yes | 10.1 | Inv. Ex. |
|----|----|----|-----|----|----|-----|-----|---|-----|----|-----|------|----------|
| 43 | AC | 80 | 0.8 | 20 | 80 | 800 | 890 | 1 | 3.8 | 10 | Yes | 10.1 | Inv. Ex. |
| 44 | AD | 80 | 0.8 | 20 | 79 | 800 | 890 | 1 | 4.3 | 12 | Yes | 11.5 | Inv. Ex. |
| 45 | AE | 80 | 0.8 | 20 | 79 | 800 | 890 | 1 | 3.9 | 11 | Yes | 10.9 | Inv. Ex. |
| 46 | AF | 80 | 0.8 | 20 | 79 | 800 | 890 | 1 | 4.3 | 12 | Yes | 10.7 | Inv. Ex. |
| 47 | AG | 80 | 0.8 | 20 | 79 | 800 | 890 | 1 | 3.8 | 10 | Yes | 10.0 | Inv. Ex. |
| 48 | AH | 80 | 0.8 | 20 | 79 | 800 | 890 | 1 | 4.2 | 12 | Yes | 11.1 | Inv. Ex. |
| 49 | AI | 80 | 0.8 | 20 | 85 | 800 | 890 | 1 | 3.7 | 10 | Yes | 10.8 | Inv. Ex. |
| 50 | C  | 80 | 0.8 | 50 | 82 | 800 | 880 | 1 | 1.7 | 5  | No  | 13.5 | Inv. Ex. |
| 51 | AJ | 80 | 0.8 | 20 | 83 | 800 | 930 | 2 | 3.1 | 10 | Yes | 11.1 | Inv. Ex. |
| 52 | AK | 80 | 0.8 | 20 | 81 | 500 | 930 | 3 | 3.9 | 10 | Yes | 11.5 | Inv. Ex. |
| 53 | AL | 80 | 0.8 | 20 | 81 | 500 | 930 | 3 | 4.0 | 10 | Yes | 11.5 | Inv. Ex. |

*6: If the value in the column is zero, the spline is formed by cutting. Otherwise, the spline is formed by rolling and the figure in the column indicates the processing ratio

Rel. Ex.: Example of related art,     Inv. Ex.: Example of the present invention     Comp. Ex.: Comparative example

Tables 11-1 and 11-2 clearly show that every hub with a hardened structure in which the average former austenitic grain diameter was 12 $\mu$m or less and the maximum grain diameter did not exceed four times the average grain diameter exhibited a sliding rolling contact fatigue life at least 10 times that of the related-art sample.

In contrast, Comparative Examples with an average former austenitic grain diameter exceeding 12 $\mu$m and a maximum grain diameter exceeding four times the average grain diameter exhibited short sliding rolling contact fatigue life.

EXAMPLE 7

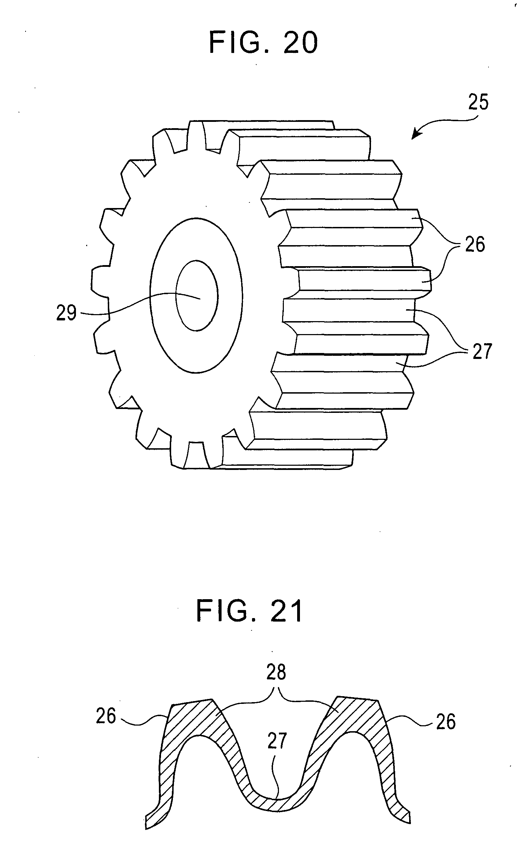

A gear 25 shown in Fig. 20 was prepared as a component for machine structural use according to the present invention.

A gear 25 shown in Fig. 20 was a representative example of a gear and has many teeth 26 in the edge face. The gear of the present invention, as shown in Fig. 21, had many teeth 26 and bottoms 27 between the teeth 26, and a hardened structure layer 28 was formed in the surface layer of the teeth and the bottoms. In the illustrated example, the hardened structure layer 28 was formed in the surface portion of the teeth 26 and the bottoms 27; alternatively, it was possible to form a hardened structure layer in the inner surface of a shaft hole 29 into which a driving shaft of a variety of type was inserted.

Each of steel materials having compositions shown in Table 3 was melted in a converter and cast into a cast slab by continuous casting. The size of the cast slab was 300 $\times$ 400 [mm]. The cast slab was subjected to a breakdown step and rolled into a 150 mm square billet. The billet was then rolled under hot working conditions indicated in Tables 12-1 and 12-2 to prepare a steel bar having a diameter of 90 mm. The processing ratio here is defined as the ratio of reduction in the cross section in the individual temperature ranges.

A gear was prepared from this steel bar by cutting as follows:

small gear: outer diameter: 75 mm, module: 2.5, number of teeth: 28, reference diameter: 70 mm

large gear: outer diameter: 85 mm, module: 2.5, number of teeth: 32, reference diameter: 80 mm

This gear was hardened under the conditions set forth in Tables 12-1 and 12-2 using a 200 kHz high-frequency hardening apparatus and tempered at 180°C for 2 hours in a heating furnace, followed by fatigue test of actual gears. The tempering was omitted for some of the gears.

The fatigue test of actual gears was conducted by meshing the small and large gears and rotating them at a speed of 3000 rpm and a load torque of 245 N·m. The number of torque application cycles until fracture of one of the gears was evaluated.

The results are set forth in Tables 12-1 and 12-2.

Gears prepared under same conditions were analyzed to determine the average diameter and the maximum diameter of the former austenitic grains in the hardened structure layer by the above-described process.

The results are also set forth in Tables 12-1 and 12-2.

Table 12-1

| No. | Steel type | Hot-working conditions | | Cooling rate (°C/s) after working | Pre-hardening structure | HF hardening conditions | | | Hardened layer structure | | Tempering | Number of torque application (×10$^4$) | Reference |
| | | Total processing ratio (%) at 800°C to 1000°C | Processing ratio (%) at 700°C to less than 800°C | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
|---|---|---|---|---|---|---|---|---|---|---|---|---|---|
| 1 | A | 30 | 20 | 0.7 | 73 | 800 | 880 | 1 | 6.5 | 35 | Yes | 36 | Comp. Ex. |
| 2 | A | 80 | 20 | 0.8 | 71 | 800 | 890 | 1 | 4.8 | 9.5 | Yes | 1039 | Inv. Ex. |
| 3 | A | 80 | 50 | 0.7 | 72 | 800 | 870 | 1 | 2.5 | 5.3 | Yes | 1691 | Inv. Ex. |
| 4 | A | 80 | 20 | 0.06 | 4 | 800 | 910 | 1 | 13.5 | 40 | Yes | 36 | Comp. Ex. |
| 5 | A | 80 | 0 | 0.8 | 72 | 800 | 890 | 1 | 7.5 | 48 | Yes | 39 | Comp. Ex. |
| 6 | B | 80 | 20 | 0.8 | 75 | 800 | 870 | 1 | 4.8 | 11 | Yes | 1725 | Inv. Ex. |
| 7 | C | 30 | 20 | 0.7 | 84 | 800 | 880 | 1 | 5.6 | 30 | Yes | 128 | Comp. Ex. |
| 8 | C | 80 | 0 | 0.8 | 83 | 800 | 880 | 1 | 4.8 | 35 | Yes | 113 | Comp. Ex. |
| 9 | C | 80 | 20 | 0.7 | 85 | 800 | 880 | 1 | 2.5 | 7 | Yes | 1621 | Inv. Ex. |
| 10 | C | 80 | 50 | 0.8 | 82 | 800 | 880 | 1 | 1.7 | 5 | Yes | 1553 | Inv. Ex. |
| 11 | C | 80 | 20 | 0.08 | 7 | 800 | 880 | 1 | 6.5 | 35 | Yes | 113 | Comp. Ex. |
| 12 | C | 80 | 0 | 0.8 | 86 | 3000 | 880 | 1 | 3.5 | 20 | Yes | 73 | Comp. Ex. |
| 13 | C | 80 | 10 | 0.8 | 84 | 200 | 900 | 1 | 8.9 | 45 | Yes | 70 | Comp. Ex. |
| 14 | C | 80 | 20 | 0.8 | 85 | 800 | 700 | 0 | Undetectable due to incomplete hardening | Undetectable due to incomplete hardening | Yes | 2 | Comp. Ex. |
| 15 | C | 80 | 20 | 0.8 | 86 | 800 | 1050 | 1 | 15.5 | 50 | Yes | 61 | Comp. Ex. |
| 16 | D | 80 | 20 | 0.8 | 79 | 800 | 890 | 1 | 4.5 | 15 | Yes | 1745 | Inv. Ex. |
| 17 | E | 80 | 20 | 0.7 | 9 | 800 | 890 | 1 | 7.5 | 45 | Yes | 29 | Comp. Ex. |
| 18 | F | 80 | 20 | 0.7 | 75 | 800 | 890 | 1 | 4.5 | 35 | Yes | 65 | Comp. Ex. |

Continued from Table 12-1

| 19 | G | 80 | 20 | 0.7 | 70 | 800 | 890 | 1 | 4.8 | 32 | Yes | 99 | Comp. Ex. |
| 20 | H | 80 | 20 | 0.7 | 10 | 800 | 890 | 1 | 4.2 | 35 | Yes | 22 | Comp. Ex. |
| 21 | A | 80 | 20 | 0.8 | 75 | 2000 | 800 | 1 | 2.8 | 9 | Yes | 61 | Comp. Ex. |
| 22 | I | 80 | 20 | 0.8 | 68 | 800 | 890 | 1 | 4.2 | 12 | Yes | 1745 | Inv. Ex. |
| 23 | J | 80 | 20 | 0.8 | 82 | 800 | 890 | 1 | 4.3 | 12 | Yes | 997 | Inv. Ex. |

Rel. Ex.: Example of related art,      Inv. Ex.: Example of the present invention      Comp. Ex.: Comparative example

EP 1 741 798 A1

Table 12-2

| No. | Steel type | Hot-working conditions | | Cooling rate (°C/s) after working | Pre-hardening structure | HF hardening conditions | | | Hardened layer structure | | Tempering | Number of torque application (×10⁴) | Reference |
|---|---|---|---|---|---|---|---|---|---|---|---|---|---|
| | | Total processing ratio (%) at 800°C to 1000°C | Processing ratio (%) at 700°C to less than 800°C | | Proportion (vol.%) of bainite structure | Heating rate(°C/s) | Heating temperature (°C) | Retention time (sec) at 800°C or more | Average former austenitic grain diameter (μm) | Maximum former austenitic grain diameter (μm) | | | |
| 24 | K | 80 | 20 | 0.8 | 79 | 800 | 890 | 1 | 3.9 | 11 | Yes | 1089 | Inv. Ex. |
| 25 | L | 80 | 20 | 0.8 | 79 | 800 | 890 | 1 | 4.3 | 12 | Yes | 1115 | Inv. Ex. |
| 26 | M | 80 | 20 | 0.8 | 79 | 800 | 890 | 1 | 4.2 | 12 | Yes | 1195 | Inv. Ex. |
| 27 | N | 80 | 20 | 0.8 | 79 | 800 | 890 | 1 | 4.3 | 12 | Yes | 1169 | Inv. Ex. |
| 28 | O | 80 | 20 | 0.8 | 72 | 800 | 890 | 1 | 3.9 | 11 | Yes | 1211 | Inv. Ex. |
| 29 | P | 80 | 20 | 0.8 | 79 | 800 | 890 | 1 | 4.3 | 12 | Yes | 1254 | Inv. Ex. |
| 30 | Q | 80 | 20 | 0.8 | 79 | 800 | 890 | 1 | 3.8 | 10 | Yes | 1300 | Inv. Ex. |
| 31 | R | 80 | 20 | 0.8 | 79 | 800 | 890 | 1 | 4.3 | 12 | Yes | 1364 | Inv. Ex. |
| 32 | S | 80 | 20 | 0.8 | 70 | 800 | 890 | 1 | 4.2 | 12 | Yes | 1364 | Inv. Ex. |
| 33 | T | 80 | 20 | 0.8 | 79 | 800 | 890 | 1 | 4.3 | 12 | Yes | 1445 | Inv. Ex. |
| 34 | U | 80 | 20 | 0.8 | 79 | 800 | 890 | 1 | 4.5 | 13 | Yes | 1039 | Inv. Ex. |
| 35 | V | 80 | 20 | 0.8 | 79 | 800 | 890 | 1 | 4.3 | 12 | Yes | 1195 | Inv. Ex. |
| 36 | W | 80 | 20 | 0.8 | 79 | 800 | 890 | 1 | 3.8 | 10 | Yes | 1839 | Inv. Ex. |
| 37 | X | 80 | 20 | 0.8 | 79 | 800 | 890 | 1 | 4.3 | 12 | Yes | 1169 | Inv. Ex. |
| 38 | Y | 80 | 20 | 0.8 | 79 | 800 | 890 | 1 | 4.2 | 12 | Yes | 1249 | Inv. Ex. |
| 39 | Z | 80 | 20 | 0.8 | 79 | 800 | 890 | 1 | 4.3 | 12 | Yes | 1254 | Inv. Ex. |
| 40 | AA | 80 | 20 | 0.8 | 85 | 800 | 890 | 1 | 3.9 | 11 | Yes | 1300 | Inv. Ex. |
| 41 | AB | 80 | 20 | 0.8 | 79 | 800 | 890 | 1 | 4.3 | 12 | Yes | 1425 | Inv. Ex. |
| 42 | AC | 80 | 20 | 0.8 | 80 | 800 | 890 | 1 | 3.8 | 10 | Yes | 1051 | Inv. Ex. |
| 43 | AD | 80 | 20 | 0.8 | 79 | 800 | 890 | 1 | 4.3 | 12 | Yes | 1445 | Inv. Ex. |

Continued from Table 12-2

| 44 | AE | 80 | 20 | 0.8 | 79 | 800 | 890 | 1 | 3.9 | 11 | Yes | 1249 | Inv. Ex. |
|----|----|----|----|-----|----|-----|-----|---|-----|----|-----|------|----------|
| 45 | AF | 80 | 20 | 0.8 | 79 | 800 | 890 | 1 | 4.3 | 12 | Yes | 1211 | Inv. Ex. |
| 46 | AG | 80 | 20 | 0.8 | 79 | 800 | 890 | 1 | 3.8 | 10 | Yes | 1254 | Inv. Ex. |
| 47 | AH | 80 | 20 | 0.8 | 79 | 800 | 890 | 1 | 4.2 | 12 | Yes | 1300 | Inv. Ex. |
| 48 | AI | 80 | 20 | 0.8 | 85 | 800 | 890 | 1 | 3.7 | 10 | Yes | 1249 | Inv. Ex. |
| 49 | C  | 80 | 50 | 0.8 | 82 | 800 | 880 | 1 | 1.7 | 5  | No  | 1700 | Inv. Ex. |
| 50 | AJ | 80 | 20 | 0.8 | 83 | 800 | 930 | 2 | 3.1 | 10 | Yes | 1310 | Inv. Ex. |
| 51 | AK | 80 | 20 | 0.8 | 81 | 500 | 930 | 3 | 3.9 | 10 | Yes | 1350 | Inv. Ex. |
| 52 | AL | 80 | 20 | 0.8 | 81 | 500 | 930 | 3 | 4.0 | 10 | Yes | 1340 | Inv. Ex. |

Rel. Ex.: Example of related art,      Inv. Ex.: Example of the present invention      Comp. Ex.: Comparative example

Tables 12-1 and 12-2 clearly show that when the hardened layer had an average former austenitic grain diameter of 12 $\mu$m or less and a maximum grain diameter not exceeding four times the average grain diameter, excellent fatigue properties, i.e., the number of torque load application cycles being about 1000 $\times$ 10$^4$ or more, was achieved.
In contrast, gears having hardened structures with an average former austenitic grain diameter exceeding 12 $\mu$m and a maximum grain diameter exceeding four times the average grain diameter exhibited poor fatigue properties.

Industrial Applicability

According to the present invention, a component for machine structural use that excels in all the fatigue properties, such as torsional fatigue property, the bending fatigue property, the rolling fatigue property, and the sliding rolling contact fatigue property, can be stably produced. Therefore, the invention has a significant effect on the demand of weight-reduction of automobile components and the like.

**Claims**

1. A component for machine structural use, comprising a steel material at least part of which is subjected to hardening, wherein the hardened structure has an average diameter of former austenitic grains of 12 $\mu$m or less and a maximum grain diameter not exceeding four times the average grain diameter.

2. The component for machine structural use according to claim 1, comprising a composition containing, in terms of percent by mass:

   C: 0.3% to 1.5%
   Si: 0.05% to 3.0%
   Mn: 0.2% to 2.0%

   and satisfying formula (1):

$$C^{1/2}(1 + 0.7Si)(1 + 3Mn) > 2.0 \qquad (1)$$

   wherein the balance is Fe and inevitable impurities.

3. The component for machine structural use according to claim 2, the composition further containing, in terms of percent by mass:

   Al: 0.25% or less

4. The component for machine structural use according to claim 2 or 3, the composition further containing, in terms of percent by mass, at least one selected from among:

   Cr: 0.03% to 2.5%
   Mo: 0.05% to 1.0%
   Cu: 0.03% to 1.0%
   Ni: 0.05% to 2.5%
   Co: 0.01% to 1.0%
   V: 0.01% to 0.5%
   W: 0.005% to 1.0%

   and satisfying formula (2):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 0.5W) > 2.0 \qquad (2)$$

instead of formula (1).

5.  The component for machine structural use according to claim 2, 3, or 4, the composition containing, in terms of percent by mass, at least one selected from among:

    Ti: 0.005% to 0.1%
    Nb: 0.005% to 0.1%
    Zr: 0.005% to 0.1%
    B: 0.0003% to 0.01%
    Ta: 0.02% to 0.5%
    Hf: 0.02% to 0.5%
    Sb: 0.005% to 0.015%

and satisfying formula (3):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 1000B)(1 + 0.5W) > 2.0 \qquad (3)$$

instead of formula (1) or (2).

6.  The component for machine structural use according to claim 2, 3, 4, or 5, the composition further containing, in terms of percent by mass, at least one selected from among:

    S: 0.1% or less
    Pb: 0.01% to 0.1%
    Bi: 0.01% to 0.1%
    Se: 0.003% to 0.1%
    Te: 0.003% to 0.1%
    Ca: 0.0001% to 0.01%
    Mg: 0.0001% to 0.01%
    REM: 0.0001% to 0.1%.

7.  A method for making a component for machine structural use, comprising subjecting at least part of a steel material to high-frequency heating at least once, the steel material containing one or both of a fine bainite structure and a fine martensite structure in a total of 10 percent by volume, wherein the high-frequency heating is conducted at a heating rate of at least 400 °C/s and an ultimate temperature of 1,000°C or less.

8.  The method for making the component for machine structural use according to claim 7, wherein the steel material is worked through: a hot-working step in which a total processing ratio at 800°C to 1,000°C is 80% or more; a cooling step subsequent to the hot-working step, in which the cooling rate is 0.2 °C/s or more in the temperature range of 700°C to 500°C; and a secondary working step of either effecting 20% or more of working in a temperature range of 700°C to less than 800°C before the cooling step or effecting 20% or more of working in a temperature range of up to the $A_1$ transformation temperature subsequent to the cooling step.

9.  The method for making the component for machine structural use according to claim 7 or 8, wherein a retention time at 800°C or more in the high-frequency heating is 5 seconds or less at a time.

10. The method for making the component for machine structural use according to any one of claims 7 to 9, the steel material comprising, in terms of percent by mass,

    C: 0.3% to 1.5%
    Si: 0.05% to 3.0%
    Mn: 0.2% to 2.0%

and satisfying formula (1):

$$C^{1/2}(1 + 0.7Si)(1 + 3Mn) > 2.0 \qquad (1)$$

wherein the balance is Fe and inevitable impurities.

**11.** The method for making the component for machine structural use according to claim 10, the steel material further comprising:

Al: 0.25% or less.

**12.** The method for making the component for machine structural use according to claim 10 or 11, the steel material further comprising, in terms of percent by mass, at least one selected from among:

Cr: 0.03% to 2.5%
Mo: 0.05% to 1.0%
Cu: 0.03% to 1.0%
Ni: 0.05% to 2.5%
Co: 0.01% to 1.0%
V: 0.01% to 0.5%
W: 0.005% to 1.0%

and satisfying formula (2):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 0.5W) > 2.0 \qquad (2)$$

instead of formula (1).

**13.** The method for making the component for machine structural use according to claim 10, 11, or 12, the steel material further comprising, in terms of percent by mass, at least one selected from among:

Ti: 0.005% to 0.1%
Nb: 0.005% to 0.1%
Zr: 0.005% to 0.1%
B: 0.0003% to 0.01%
Ta: 0.02% to 0.5%
Hf: 0.02% to 0.5%
Sb: 0.005% to 0.015%

and satisfying formula (3):

$$C^{1/2}(1 + 0.7Si)(1 + 3Mn)(1 + 2.1Cr)(1 + 3.0\ Mo)(1 + 0.4\ Cu)$$
$$(1 + 0.3Ni)(1 + 5.0V)(1 + 1000B)(1 + 0.5W) > 2.0 \qquad (3)$$

instead of formula (1) or (2).

**14.** The method for making the component for machine structural use according to claim 10, 11, 12, or 13, the steel material further comprising, in terms of percent by mass, at least one selected from among:

S: 0.1% or less
Pb: 0.01% to 0.1%

Bi: 0.01% to 0.1%
Se: 0.003% to 0.1%
Te: 0.003% to 0.1%
Ca: 0.0001% to 0.01%
Mg: 0.0001% to 0.01%
REM: 0.0001% to 0.1%.

# FIG. 1

20mm φ

# FIG. 2(a)

3a

3b

1

2a

2b

# FIG. 2(b)

LOAD

ROTATION

TRACK OF ROLLING CONTACT

TEST PIECE

STEEL BALL

# FIG. 3

10μm

## FIG. 4(a)

## FIG. 4(b)

## FIG. 5(a)

STEEL TYPE: STEEL a

Legend:
- ◆ 5 μm OR LESS
- ■ OVER 5 μm TO 7 μm
- ▲ OVER 7 μm TO 12 μm
- × OVER 12 μm

Y-axis: TORSIONAL FATIGUE STRENGTH (MPa)

X-axis: MAXIMUM FORMER γ GRAIN DIAMETER / AVERAGE FORMER γ GRAIN DIAMETER

## FIG. 5(b)

STEEL TYPE: STEEL b

Legend:
- ◇ 3 μm OR LESS
- □ OVER 3 μm TO 5 μm
- △ OVER 5 μm TO 12 μm
- × OVER 12 μm

Y-axis: TORSIONAL FATIGUE STRENGTH (MPa)

X-axis: MAXIMUM FORMER γ GRAIN DIAMETER / AVERAGE FORMER γ GRAIN DIAMETER

# FIG. 6(a)

STEEL a

| | HEATING TEMPERATURE | HEATING RATE |
|---|---|---|
| ◇ | 870°C | 400°C/s OR MORE |
| ◆ | 870°C | 400°C/s OR LESS |
| △ | 950°C TO 1000°C | 400°C/s OR MORE |
| ▲ | 950°C TO 1000°C | 400°C/s OR LESS |
| □ | 1050°C | 400°C/s OR MORE |
| ● | 1050°C | 400°C/s OR LESS |

TORSIONAL FATIGUE STRENGTH (MPa)

PROCESSING RATIO (%) AT LESS THAN 800°C

# FIG. 6(b)

STEEL b

| | HEATING TEMPERATURE | HEATING RATE |
|---|---|---|
| ◇ | 870°C | 400°C/s OR MORE |
| △ | 950°C TO 1000°C | 400°C/s OR MORE |
| ▲ | 950°C | LESS THAN 400°C/s |
| □ | 1020°C TO 1050°C | 400°C/s OR MORE |
| ● | 1050°C | LESS THAN 400°C/s |

TORSIONAL FATIGUE STRENGTH (MPa)

PROCESSING RATIO (%) AT LESS THAN 800°C

# FIG. 7(a)

# FIG. 7(b)

# FIG. 8

# FIG. 9

# FIG. 10

REPEATED APPLICATION OF LOAD

END IS FIXED
(NOT ROTATED)

END IS FIXED
(NOT ROTATED)

EP 1 741 798 A1

# FIG. 11

# FIG. 12

# FIG. 13

# FIG. 14

# FIG. 15

# FIG. 16

# FIG. 17

LOAD

# FIG. 18

# FIG. 19

# FIG. 20

# FIG. 21

<table>
<tr><td colspan="2">

**INTERNATIONAL SEARCH REPORT**
</td><td>

International application No.

PCT/JP2005/001738
</td></tr>
</table>

A. CLASSIFICATION OF SUBJECT MATTER
  Int.Cl[7]  C22C38/00, C21D9/30, C22C38/06, 38/60, F16C3/02, 3/06,
          F16D3/20, 3/22, F16H55/06

According to International Patent Classification (IPC) or to both national classification and IPC

B. FIELDS SEARCHED

Minimum documentation searched (classification system followed by classification symbols)
  Int.Cl[7]  C21D9/30, C22C38/00-38/60, F16C3/02, 3/06, F16D3/20, 3/22,
          F16H55/06

Documentation searched other than minimum documentation to the extent that such documents are included in the fields searched
  Jitsuyo Shinan Koho          1922–1996   Jitsuyo Shinan Toroku Koho   1996–2005
  Kokai Jitsuyo Shinan Koho    1971–2005   Toroku Jitsuyo Shinan Koho   1994–2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 8-53714 A  (Kobe Steel, Ltd.),<br>27 February, 1996 (27.02.96),<br>Claims<br>(Family: none) | 1-7,9-14<br>8 |
| Y | JP 2003-213372 A  (Sumitomo Denko Steel Wire Kabushiki Kaisha),<br>30 July, 2003 (30.07.03),<br>Claims; column 1, lines 32 to 39; column 2, lines 43 to 49<br>(Family: none) | 1-7,9-14 |
| Y | JP 9-241749 A  (Netsuren Co., Ltd.),<br>16 September, 1997 (16.09.97),<br>Claims; column 1, lines 32 to 45; column 2, lines 40 to 49; column 3, lines 34 to 43<br>(Family: none) | 7,9-14 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 April, 2005 (26.04.05) | Date of mailing of the international search report<br>17 May, 2005 (17.05.05) |
|---|---|
| Name and mailing address of the ISA/<br>  Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/001738

<the subject to be searched>

Claim 1 involves the hardened steel products having all compositions. But, only a steel product disclosed in the specification, which has been subjected to a high frequency hardening treatment and has a chemical composition, in mass %, wherein 0.3 to 1.5 % of C, 3.0 % or less of Si and 2.0 % or less of Mn are contained, or further, one or more selected from among 0.25 % or less of Al, 2.5 % or less of Cr, 1.0 % or less of Mo, 1.0 % or less of Cu, 2.5 % or less of Ni, 1.0 % or less of Co, 0.5 % or less of V and 1.0 % or less of W, 0.1 % or less of Ti, 0.1 % or less of Nb, 0.1 % or less of Zr, 0.01 % or less of B, 0.5 % or less of Ta, 0.5 % or less of Hf and 0.015 % or less of Sb, 0.1 % or less of S, 0.1 % or less of Pb, 0.1 % or less of Bi, 0.1 % or less of Se, 0.1 % or less of Te, 0.01 % or less of Ca, 0.01 % or less of Mg and 0.1 % or less of REM are contained, wherein the following formula:
$C^{1/2}(1 + 0.7Si)(1 + 3Mn)(1 + 2.1Cr)(1 + 3.0Mo)(1 + 0.4Cu)(1 + 0.3Ni)(1 + 5.0V)(1 + 1000B)(1 + 0.5W) > 2.0,$
is satisfied, and wherein the balance is Fe and inevitable impurities, is disclosed in the meaning of PCT Article 5, and no general solution means is taught for achieving the production of the above hardened steel products having all compositions, even when the technical common sense at the time of filing the present application is taken into consideration. Therefore, claim 1 lacks the support in the meaning of PCT Article 6.
Accordingly, the search has been carried out with respect to the scope supported by and disclosed in the specification, that is, to a steel product which has been subjected to a high frequency hardening treatment and has a chemical composition, in mass %, wherein 0.3 to 1.5 % of C, 3.0 % or less of Si and 2.0 % or less of Mn are contained, or further, one or more of selected from among 0.25 % or less of Al, 2.5 % or less of Cr, 1.0 % or less of Mo, 1.0 % or less of Cu, 2.5 % or less of Ni, 1.0 % or less of Co, 0.5 % or less of V and 1.0 % or less of W, 0.1 % or less of Ti, 0.1 % or less of Nb, 0.1 % or less of Zr, 0.01 % or less of B, 0.5 % or less of Ta, 0.5 % or less of Hf and 0.015 % or less of Sb, 0.1 % or less of S, 0.1 % or less of Pb, 0.1 % or less of Bi, 0.1 % or less of Se, 0.1 % or less of Te, 0.01 % or less of Ca, 0.01 % or less of Mg and 0.1 % or less of REM are contained, wherein the following formula:
$C^{1/2}(1 + 0.7Si)(1 + 3Mn)(1 + 2.1Cr)(1 + 3.0Mo)(1 + 0.4Cu)(1 + 0.3Ni)(1 + 5.0V)(1 + 1000B)(1 + 0.5W) > 2.0,$
is satisfied, and wherein the balance is Fe and inevitable impurities. Claims 7 to 9 involve the methods for producing the parts of a machine construction having all compositions and structures. But, only a method for producing the parts of a machine construction disclosed in the specification, which have been subjected to a high frequency hardening treatment, which have a chemical composition, in mass %, wherein 0.3 to 1.5 % of C, 3.0 % or less of Si and 2.0 % of Mn are contained, or further, one or more selected from among 0.25 % or less of Al, 2.5 % or less of Cr, 1.0 % or less of Mo, 1.0 % or less of Cu, 2.5 % or less of Ni, 1.0 % or less of Co, 0.5 % or less of V and 1.0 % or less of W, 0.1 % or less of Ti, 0.1 % or less of Nb, 0.1 % or less of Zr, 0.01 % or less of B, 0.5 % or less of Ta, 0.5 % or less of Hf and 0.015 % or less of Sb, 0.1 % or less of S, 0.1 % or less of Pb, 0.1 % or less of Bi, 0.1 % or less of Se, 0.1 % or less of Te, 0.01 % or less of Ca, 0.01 % or less of Mg and 0.1 % or less of REM are contained, wherein the following formula:

(continued to next sheet)

Form PCT/ISA/210 (extra sheet) (January 2004)

$C^{1/2}$(1 + 0.7Si)(1 + 3Mn)(1 + 2.1Cr)(1 + 3.0Mo)(1 + 0.4Cu)(1 + 0.3Ni)(1 + 5.0V)(1 + 1000B)(1 + 0.5W) > 2.0, is satisfied, and wherein the balance is Fe and inevitable impurities, and which have a hardened structure wherein old austenite grains have an average grain diameter of 12 µm or less and a maximum grain diameter of a diameter being four times the average diameter or less, is disclosed in the meaning of PCT Article 5, and no general solution means is taught for achieving the production of the above hardened steel products having all compositions, even when the technical common sense at the time of filing the present application is taken into consideration.  Therefore, claims 7 to 9 lack the support in the meaning of PCT Article 6.

Accordingly, the search has been carried out with respect to the scope supported by and disclosed in the specification, that is, to a method for producing the parts of a machine construction disclosed in the specification, which have been subjected to a high frequency hardening treatment, which have a chemical composition, in mass %, wherein 0.3 to 1.5 % of C, 3.0 % or less of Si and 2.0 % of Mn are contained, or further, one or more of selected from among 0.25 % or less of Al, 2.5 % or less of Cr, 1.0 % or less of Mo, 1.0 % or less of Cu, 2.5 % or less of Ni, 1.0 % or less of Co, 0.5 % or less of V and 1.0 % or less of W, 0.1 % or less of Ti, 0.1 % or less of Nb, 0.1 % or less of Zr, 0.01 % or less of B, 0.5 % or less of Ta, 0.5 % or less of Hf and 0.015 % or less of Sb, 0.1 % or less of S, 0.1 % or less of Pb, 0.1 % or less of Bi, 0.1 % or less of Se, 0.1 % or less of Te, 0.01 % or less of Ca, 0.01 % or less of Mg and 0.1 % or less of REM are contained, wherein the following formula:
$C^{1/2}$(1 + 0.7Si)(1 + 3Mn)(1 + 2.1Cr)(1 + 3.0Mo)(1 + 0.4Cu)(1 + 0.3Ni)(1 + 5.0V)(1 + 1000B)(1 + 0.5W) > 2.0,
is satisfied, and wherein the balance is Fe and inevitable impurities, and which have a hardened structure wherein old austenite grains have an average grain diameter of  12 µm or less and a maximum grain diameter of a diameter being four times the average diameter or less.

Form PCT/ISA/210 (extra sheet) (January 2004)

**REFERENCES CITED IN THE DESCRIPTION**

**Patent documents cited in the description**

- JP 2000154819 A

- JP 8053714 A